# EUROPEAN PATENT APPLICATION

(11) **EP 1 065 553 A1**
(43) Date of publication of application: **03.01.2001**
(21) Application number: 99909245.5
(22) Date of filing: 18.03.1999
(51) Int. Cl.: G02F 1/1333, G02F 1/1337, G02F 1/13

(54) **RESIN-LIQUID CRYSTAL FORMED BODY, LIQUID CRYSTAL DEVICE, LIQUID CRYSTAL DISPLAY COMPRISING THE SAME, AND METHODS OF MANUFACTURING THE SAME**

(30) Priority: 19.03.1998 JP 7007098; 15.03.1999 JP 6847799; 16.03.1999 JP 6955699
(71) Applicant: MATSUSHITA ELECTRIC INDUSTRIAL CO., LTD., Kadoma-shi, Osaka 571-8501 (JP)
(72) Inventor: OGAWA, Kazufumi, Nara-shi, Nara 630-8101 (JP)
(74) Representative: Dempster, Benjamin John Naftel
(86) International application number: JP9901374
(87) International publication number: WO9947967

(57) **Abstract**

On the light-transmitting substrate, a pixel electrode and a switching element connected with the pixel electrode are formed, and a mixture film containing a photosensitive prepolymer and liquid crystal is further formed thereon. The mixture film is irradiated with the light having the first wavelength from the other side of the substrate to cure the photosensitive prepolymer contained in the mixture film, thereby to form the protection resin film onto the surface of the mixture film. Then, the mixture film is irradiated with the light having the third wavelength from the rear side of the substrate to cure the photosensitive prepolymer, thereby to form the substrate-side resin film onto the fixture film on the substrate side. The surface of the mixture film is further irradiated with the light having the third wavelength through the protection resin film to cure the photosensitive prepolymer remaining in the mixture film, thereby to form the first resin film inside the protection resin film. A counter resin film is composed of the first resin film and the protection resin film, and dissociated liquid crystal is arranged between the first resin film and the substrate-side resin film. As a result, the liquid crystal layer can be provided without performing the liquid crystal filling process which would take much time, thereby simplifying the fabrication process and reducing the fabrication cost.

## Description

### TECHNICAL FIELD

The present invention relates to liquid crystal display devices of the twisted nematic (hereinafter referred to as TN) type and the in-plane switching (hereinafter referred to as IPS) type which are used for televisions, computer displays and other similar devices. The invention also relates to resin/liquid crystal composites and liquid crystal devices which are applied to the liquid crystal display devices, blind glass and liquid crystal shutters with a light-control feature, and the like. The invention further relates to methods for fabricating the liquid crystal display devices, the resin/liquid crystal composites and the liquid crystal devices.

### BACKGROUND OF THE INVENTION

A conventional TN liquid crystal display device comprises a liquid crystal panel formed by bonding a pair of glass substrates together with a spacer disposed therebetween to have a certain gap, and filling liquid crystal (nematic liquid crystal or the like) in the gap. The device further comprises a pair of polarizers arranged on both sides of the liquid crystal panel. One of the pair glass substrates has transparent pixel electrodes and thin film transistors (hereinafter referred to as TFTs) thereon, and the other substrate has a color mosaic filter composed of fine filters of red, green and blue and a transparent common electrode thereon. The transparent pixel electrodes and the transparent common electrode each have an alignment film thereon, which is formed by applying polyvinyl alcohol or a polyimide solution on each electrode using a spinner to form a film, and then by rubbing the film for an alignment treatment. In this liquid crystal display device, the transmittance of the liquid crystal corresponding to each pixel is controlled by irradiating backlight from the rear side of the device and by applying an image signal voltage onto each transparent pixel electrode through the TFTs so as to display color images.

In the conventional IPS liquid crystal display device, the liquid crystal is filled into the gap formed between a pair of glass substrates the same as in the above-mentioned TN crystal display device, although their electrodes have a different structure.

These conventional liquid crystal display devices have a disadvantage of requiring a process of filling liquid crystal into the gap between the glass substrates. It takes much time to perform this process, which leads to a high fabrication cost. To be more specific, in a 10-inch liquid crystal display device, for example, it takes about two hours to implant liquid crystal into a gap of about 5 µm in a vacuum, exhibiting an extremely poor fabrication efficiency.

Another disadvantage of the conventional liquid crystal display devices is that the use of the pair glass substrates (two glass substrates) makes it difficult to reduce the weight of the devices. This becomes a serious problem when the liquid crystal display devices are applied to portable appliances.

Further another disadvantage is that the low transmittance of the color filter decreases the transmittance of the whole device. In the case of a reflective liquid crystal display device using external light, this undesirable feature makes it hard to distinguish different colors and dims the display screen.

In view of these disadvantages, an object of the present invention is to provide a resin/liquid crystal composite and a liquid crystal device which do not require a liquid crystal filling process so as to simplify the fabrication process and to reduce the fabrication cost. Another object is to provide a liquid crystal display device which uses the resin/liquid crystal composite and the liquid crystal device. Further another object is to provide methods for fabricating the resin/liquid crystal composite, the liquid crystal device and the liquid crystal display device. The present invention has further another object of providing a liquid crystal display device which is lightweight and compact to be suitable for portable appliances.

### DISCLOSURE OF THE INVENTION

The present invention consisting of invention groups has been contrived in view of the above-mentioned circumstances with an object of providing a liquid crystal display device which is lightweight and slim to be suitable for portable appliances. The invention has another object of providing a method for fabricating a liquid crystal display device which does not require a liquid crystal filling process to simplify the fabrication process and to reduce the fabrication cost. In this specification, the invention groups, which are based on the same or similar concepts but are achieved by different embodiments from each other, are divided into first, second and third invention groups each consisting of closely related inventions. The three invention groups will be described in series as follows.

### (1) The First Invention Group

The invention of claim 1 is a liquid crystal display device comprising: a substrate at least having a pixel electrode, a switching element connected to the pixel electrode and an alignment film; a resin film formed by curing a photosensitive prepolymer contained in a liquid crystal-prepolymer mixture with irradiation of light; and a liquid crystal layer sandwiched between said substrate and said resin film.

The liquid crystal sandwiched between the single substrate and the resin film makes the device lighter in weight than a liquid crystal display device in which the liquid crystal is sandwiched between a pair of substrates. As a result, the obtained device becomes suitable for portable appliances.

The invention of claim 2 is the liquid crystal display device of claim 1 further comprising a supporting member formed between said substrate and said resin film by selective curing said photosensitive prepolymer with light irradiation.

The provision of the supporting member makes the distance between the substrate and the resin film or the thickness of the liquid crystal layer uniform. As a result, the obtained device suffers from little display unevenness.

The invention of claim 3 is the liquid crystal display device of claim 1, wherein said resin film contains an acrylate system material.

This feature provides the liquid crystal display device with excellent transparency against light in a visible region and with a bright display.

The invention of claims 4 and 5 is the liquid crystal display device of claim 1, wherein said liquid crystal layer contains nematic liquid crystal, and more specifically, tolane system nematic liquid crystal.

The use of this type of liquid crystal realizes an inexpensive liquid crystal display device which performs stable operations.

The invention of claims 6 and 7 is the liquid crystal display device of claim 1 further comprising a counter electrode formed onto a side of said resin film that is opposite said liquid crystal layer, wherein said light irradiated to form said resin film is so polarized that molecules of said photosensitive prepolymer are aligned in a direction.

This feature realizes a lightweight liquid crystal display device having the TN structure or the homeotropic structure.

The invention of claim 8 is the liquid crystal display device of claim 6 further comprising a color filter formed onto the side of said resin film that is opposite said liquid crystal layer.

The provision of the color filter realizes a lightweight color liquid crystal display device having the TN structure or the homeotropic structure.

The invention of claim 9 is the liquid crystal display device of claim 8, wherein said counter electrode is made of a transparent conductive film and is positioned either between said resin film and said color filter or onto a side of said color filter that is opposite said resin film.

This feature realizes a lightweight color liquid crystal display device of transmission type having the TN structure or the homeotropic structure.

The invention of claim 10 is the liquid crystal display device of claim 8, wherein said counter electrode is made from a light-reflecting material; and said color filter is positioned between said resin film and said counter electrode.

This feature realizes a lightweight color liquid crystal display device of reflection type having the TN structure or the homeotropic structure.

The invention of claims 11 and 12 is the liquid crystal display device of claims 1 and 2, wherein said substrate further has a common electrode.

The provision of the common electrode realizes a lightweight IPS liquid crystal display device.

The invention of claims 13 and 14 is the liquid crystal display device of claim 11, wherein said light irradiated to form said resin film is so polarized that molecules of said photosensitive prepolymer are aligned in a direction.

This feature makes the resin film have an alignment function for providing the liquid crystal molecules in the vicinity of the resin film with a predetermined tilt angle to improve the stability of the alignment conditions of the liquid crystal. As a result, a lightweight IPS liquid crystal display device having excellent display characteristics is obtained.

The invention of claim 15 is the liquid crystal display device of claim 11 further comprising a color filter formed onto the side of said resin film that is opposite said liquid crystal layer.

The provision of the color filter realizes a lightweight color IPS liquid crystal display device.

The invention of claim 16 is the liquid crystal display device of claim 15 further comprising an electrode made of a transparent conductive film, said electrode being formed either between said resin film and said color filter or onto a side of said color filter that is opposite said resin film.

The provision of the electrode realizes an IPS liquid crystal display device which is excellent in alignment stability, in addition to being lightweight and color because the alignment of the liquid crystal molecules is hardly affected by static electricity even if the resin film is thin.

The invention of claim 17 is the liquid crystal display device of claim 15 further comprising an electrode made from a light-reflecting material, said electrode being arranged on a side of said color filter that is opposite said resin film.

The provision of the electrode realizes a lightweight color IPS liquid crystal display device of reflection type.

The invention of claim 18 is a method for fabricating a liquid crystal display device comprising: a substrate having a pixel electrode, a switching element connected to the pixel electrode and an alignment film; a resin film formed by curing a photosensitive prepolymer contained in a liquid crystal-prepolymer mixture with irradiation of light having a first wavelength; and a liquid crystal layer sandwiched between said substrate and said resin film, said method comprising at least the steps of: forming the pixel electrode, the switching element and the alignment film onto said substrate; forming a mixture film containing said photosensitive prepolymer and liquid crystal onto said substrate; and forming said resin film onto a surface of said mixture film by irradiating said mixture film with said light having a first wavelength from an other side of said substrate to extract and photo-cure said photosensitive prepolymer contained in said mixture film.

The resin film is formed by the extraction of the photosensitive prepolymer contained in the mixture film, while the liquid crystal layer is made from the liquid crystal remaining in the mixture film. This eliminates the need for the time-consuming liquid crystal filling process, thereby to simplify the fabrication process and to reduce the fabrication cost. In addition, the liquid crystal sandwiched between the single substrate and the resin film makes the device lighter in weight than a liquid crystal display device in which the liquid crystal is sandwiched between a pair of substrates.

The invention of claim 19 is the method for fabricating a liquid crystal display device of claim 18, wherein in said resin film formation step, said resin film is formed by extracting and photo-curing a predetermined amount of said photosensitive prepolymer contained in said mixture film with light having a first wavelength, and said method further comprising the step of, by selectively irradiating a predetermined region in said mixture film with light having a second wavelength to cure said photosensitive prepolymer remaining in said mixture film, forming a supporting member in said predetermined region between said substrate and said resin film.

The formation of the supporting member by the photosensitive prepolymer remaining in the mixture film simplifies the fabrication process of the liquid crystal display device, and further makes the distance between the substrate and the resin film or the thickness of the liquid crystal layer uniform.

The invention of claim 20 is the method for fabricating a liquid crystal display device of claim 19, wherein in said supporting member formation step, said supporting member is formed by extracting a predetermined amount of said photosensitive prepolymer remaining in said mixture film, and said method further comprising the step of forming an inner-side resin film onto said resin film on said substrate side by irradiating said mixture film with light having a third wavelength from said resin film side to extract and photo-cure said photosensitive prepolymer remaining in said mixture film.

The inner-side resin film is formed by the extraction of the photosensitive prepolymer remaining in the mixture film, while the liquid crystal layer is made from the liquid crystal remaining in the mixture film, which facilitates the enhancement of the purity of the liquid crystal in the liquid crystal layer.

The invention of claim 21 is the method for fabricating a liquid crystal display device of claim 18, wherein said photosensitive prepolymer contains an acrylate system material.

The presence of the acrylate system material facilitates the formation of the resin film by curing the photosensitive prepolymer when the mixture film is irradiated with the light, and further provides the obtained liquid crystal display device with excellent transparency against light in a visible region.

The invention of claims 22 and 23 is the method for fabricating a liquid crystal display device of claim 18, wherein said liquid crystal contains nematic liquid crystal, and more specifically, tolane system nematic liquid crystal.

The use of this type of liquid crystal facilitates the dissociation of the photosensitive prepolymer and the liquid crystal from each other by irradiating the mixture film with the light, so that the photosensitive prepolymer can be extracted to form the resin film. In addition, it becomes possible to fabricate a liquid crystal display device performing stable operations with the use of the fairly available liquid crystal.

The invention of claims 24 through 32 is the method for fabricating a liquid crystal display device of claims 18 through 20, wherein said mixture film further contains one of a polymerization initiator and a sensitizer for said photosensitive prepolymer, which contains a benzoyl system material, and more specifically, 2,2-dimethoxy- 1,2 -diphenylethane -1-one.

The presence of these materials increases the efficiency of the curing of the photosensitive prepolymer, so that the hardening rate of the photosensitive prepolymer can be increased to further simplify the fabrication process.

The invention of claims 33 through 35 is the method for fabricating a liquid crystal display device of claims 18 through 20, wherein said resin film formation step is performed by irradiating said mixture film with said light having the first wavelength in a reciprocity law failure condition.

This feature facilitates the curing of the photosensitive prepolymer on and around the surface of the mixture film which absorbs the light most, and also facilitates the selective formation of the resin film onto the surface of the mixture film by extracting the photosensitive prepolymer in the reciprocity law failure condition.

The invention of claims 36 through 41 is the method for fabricating a liquid crystal display device of claims 18 through 20, wherein the first wavelength is within an absorption band region in absorption curves of said photosensitive prepolymer, and more specifically, said photosensitive prepolymer contains a polyester acrylate system material; and said light having the first wavelength is far-ultraviolet light, the first wavelength being 254 nm obtained by excimer laser.

The irradiated light is almost entirely absorbed in and around the surface of the mixture film to cure the photosensitive prepolymer. This further facilitates the selective formation of the resin film onto the surface of the mixture film and the control of the thickness of the resin film with very high precision.

The invention of claims 42 and 43 is the method for fabricating a liquid crystal display device of claims 19 and 20, wherein said resin film formation step is performed by irradiating said mixture film with said light having the first wavelength in a reciprocity law failure condition; and said supporting member formation step is performed by irradiating said mixture film with said light having the second wavelength in a reciprocity law condition.

The irradiation of the light having the first wavelength in the reciprocity law failure condition promotes the extraction and curing of the photosensitive prepolymer on and around the surface of the mixture film to facilitate the selective formation of the resin film onto the surface of the mixture film. The irradiation of the light having the second wavelength in the reciprocity law condition makes it easier to cure the photosensitive prepolymer as far as the vicinity of the substrate in the mixture film, which facilitates the secure and efficient formation of the supporting member between the resin film and the substrate.

The invention of claims 44 and 45 is the method for fabricating a liquid crystal display device of claims 19 and 20, wherein said light having the second wavelength has smaller absorbance of said photosensitive prepolymer than said light having the first wavelength.

The irradiated light having the first wavelength is almost entirely absorbed on and around the surface of the mixture film to cure the photosensitive prepolymer, which facilitates the selective formation of the resin film onto the surface of the mixture film. The light having the second wavelength easy to reach the vicinity of the substrate in the mixture film makes it easy to form the supporting member between the resin film and the substrate.

The invention of claims 46 is the method for fabricating a liquid crystal display device of claim 20, wherein said resin film formation step is performed by irradiating said mixture film with said light having the first wavelength in a reciprocity law failure condition; said supporting member formation step is performed by irradiating said mixture film with said light having the second wavelength in a reciprocity law condition; and said inner-side resin film formation step is performed by irradiating said mixture film with said light having the third wavelength in the reciprocity law failure condition.

The irradiation of the light having the first wavelength or the light having the third wavelength in the reciprocity law failure condition makes it easy to extract and cure the photosensitive prepolymer on and around the surface of the mixture film, which facilitates the selective formation of the resin film and the inner-side resin film onto the surface of the mixture film. The irradiation of the light having the second wavelength in the reciprocity law condition makes it easy to cure the photosensitive prepolymer as far as the vicinity of the substrate in the mixture film, which facilitates the secure and efficient formation of the supporting member between the resin film and the substrate.

The invention of claims 47 is the method for fabricating a liquid crystal display device of claim 20, wherein said light having the third wavelength has absorbance of said photosensitive prepolymer smaller than said light having the first wavelength and larger than said light having the second wavelength.

The light having the first wavelength, which hardly passes through the mixture film and is almost entirely absorbed in and around the surface of the mixture film facilitates the selective formation of the resin film onto the surface of the mixture film. The light having the second wavelength which is easy to reach the vicinity of the substrate in the mixture film facilitates the secure formation of the supporting member between the resin film and the substrate. The light having the third wavelength, which passes through the already formed resin film relatively easily but is likely to be absorbed in the mixture film in the vicinity of the resin film on the substrate side, facilitates the formation of the inner-side resin film onto the resin film on the substrate side.

The invention of claims 48 and 49 is the method for fabricating a liquid crystal display device of claim 20, wherein said mixture film further contains one of a polymerization initiator and a sensitizer for said photosensitive prepolymer; the first wavelength is within an absorption band region in absorption curves of said photosensitive prepolymer, said mixture film being irradiated with said light having the first wavelength in a reciprocity law failure condition; the second wavelength is longer than an absorption band peak wavelength in absorption curves of one of said polymerization initiator and said sensitizer, said mixture film being irradiated with said light having the second wavelength in a reciprocity law condition; and the third wavelength is between a longest wavelength in the absorption band region on absorption curves of said photosensitive prepolymer and the absorption band peak wavelength on the absorption curves of one of said polymerization initiator and said sensitizer, said mixture film being irradiated with said light having the third wavelength in the reciprocity law failure condition. More specifically, said photosensitive prepolymer contains a polyester acrylate system material; said liquid crystal contains tolane system nematic liquid crystal; said mixture film further contains 2, 2-dimethoxy- 1,2- diphenylethane -1-one; said light having the first wavelength is far-ultraviolet light, the first wavelength being 254 nm; said light having the second wavelength is ultraviolet light, the second wavelength being 365 nm; and said light having the third wavelength is ultraviolet light, the third wavelength being 313 nm.

The light having the first wavelength, which hardly passes through the mixture film and is almost entirely absorbed in and around the surface of the mixture film, facilitates the selective formation of the resin film onto the surface of the mixture film by extracting the photosensitive polymer in the reciprocity law failure condition. The light having the second wavelength, which is easy to reach the vicinity of the substrate in the mixture film, facilitates the secure and efficient formation of the supporting member between the resin film and the substrate in the reciprocity law condition. The light having the third wavelength, which passes through the already formed resin film relatively easily and is easily absorbed in the mixture film in the vicinity of the resin film on the substrate side, facilitates the formation of the inner-side resin film onto the resin film on the substrate side by extracting the photosensitive polymer in the reciprocity law failure condition.

The invention of claim 50 is the method for fabricating a liquid crystal display device of claim 18 further comprising the step of forming a counter electrode onto a side of said resin film that is opposite said liquid crystal layer.

The provision of the counter electrode realizes a lightweight liquid crystal display device having the TN structure or the homeotropic structure.

The invention of claim 51 is the method for fabricating a liquid crystal display device of claim 20, wherein in said inner-side resin film formation step, said irradiation of said light having the third wavelength is performed through a polarizer.

The use of the polarizer realizes a lightweight liquid crystal display device having the TN structure.

The invention of claim 52 is the method for fabricating a liquid crystal display device of claim 50, wherein in said counter electrode formation step, said counter electrode is provided by forming a transparent conductive film onto said resin film on the other side of said liquid crystal layer, and said method further comprising the step of forming a color filter onto one of said resin film and said counter electrode either before or after said counter electrode formation step.

This feature realizes a lightweight color liquid crystal display device of transmission type having the TN structure or the homeotropic structure.

The invention of claim 53 is the method for fabricating a liquid crystal display device of claim 50, wherein in said counter electrode formation step, said counter electrode is provided by forming a light-reflecting film onto the side of said resin film that is opposite said liquid crystal layer, and said method further comprising the step of forming a color filter onto said resin film before said counter electrode formation step.

This feature realizes a lightweight color liquid crystal display device of reflection type having the TN structure or the homeotropic structure.

The invention of claims 54 through 56 is the method for fabricating a liquid crystal display device of claims 18 through 20 further comprising the step of forming a common electrode onto said substrate.

The provision of the common electrode realizes a lightweight IPS liquid crystal display device.

The invention of claim 57 is the method for fabricating a liquid crystal display device of claim 56 wherein in said inner-side resin film formation step, said irradiation of said light having the third wavelength is performed through a polarizer.

This feature makes the resin film have an alignment function for providing the liquid crystal molecules in the vicinity of the resin film with a predetermined tilt angle to improve the stability of the alignment conditions of the liquid crystal. As a result, a lightweight IPS liquid crystal display device having excellent display characteristics is obtained.

The invention of claim 58 is the method for fabricating a liquid crystal display device of claim 54 further comprising the step of forming a color filter onto said resin film.

The provision of the color filter realizes a lightweight color IPS liquid crystal display device.

The invention of claim 59 is the method for fabricating a liquid crystal display device of claim 58 further comprising the step of forming a transparent electrode onto one of said resin film and said color filter either before or after said color filter formation step.

The provision of the electrode realizes an IPS liquid crystal display device which is excellent in alignment stability, in addition to being lightweight and color because the alignment of the liquid crystal molecules is hardly affected by static electricity even if the resin film is thin.

The invention of claim 60 is the method for fabricating a liquid crystal display device of claim 58 further comprising the step of forming a conductive light-reflecting film onto said color filter.

The provision of the light-reflecting film realizes a lightweight color IPS liquid crystal display device of reflection type.

The invention of claim 61 is a liquid crystal display device comprising: a substrate having an alignment film and one of a pixel signal electrode and a scan electrode formed thereon; a resin film formed by curing a photosensitive prepolymer contained in a liquid crystal-prepolymer mixture with irradiation of light, said resin film having an other one of the pixel signal electrode and said scan electrode formed thereon; and a liquid crystal layer sandwiched between said substrate and said resin film.

The liquid crystal sandwiched between the single substrate and the resin film makes the device lighter in weight than a liquid crystal display device in which the liquid crystal is sandwiched between a pair of substrates. As a result, a liquid crystal display device of simple-matrix type suitable for portable appliances can be obtained.

The invention of claim 62 is the liquid crystal display device of claim 61 further comprising a color filter arranged either on the other one of the pixel signal electrode and said scan electrode on said resin film side or on an other side of said resin film.

The provision of the color filter realizes a lightweight color liquid crystal display device of simple-matrix type.

The invention of claim 63 is a liquid crystal device comprising: a substrate having an alignment film formed thereon; a resin film formed by curing a photosensitive prepolymer contained in a liquid crystal-prepolymer mixture with irradiation of light; and a liquid crystal layer sandwiched between said substrate and said resin film.

The liquid crystal sandwiched between the single substrate and the resin film makes the device lighter in weight than a liquid crystal device in which the liquid crystal is sandwiched between a pair of substrates.

The invention of claim 64 is the liquid crystal device of claim 63 further comprising a supporting member formed between said substrate and said resin film by curing said photosensitive prepolymer with irradiation of light.

The provision of the supporting member makes the distance between the substrate and the resin film or the thickness of the liquid crystal layer uniform.

The invention of claim 65 is the liquid crystal device of claim 63 further comprising transparent electrodes formed on said substrate and said resin film.

The provision of the transparent electrodes allows a liquid crystal device to control the light transmittance by adjusting the voltage to be applied on the transparent electrodes.

The invention of claims 66 through 68 is the liquid crystal device of claim 63, wherein said light irradiated to form said resin film is so polarized that molecules of said photosensitive prepolymer are aligned in a direction.

This feature makes the resin film have an alignment function for providing the liquid crystal molecules in the vicinity of the resin film with a predetermined tilt angle to improve the stability of the alignment conditions of the liquid crystal.

The invention of claim 69 is the liquid crystal device of claim 63, wherein said resin film contains an acrylate system material.

The presence of the material provides the liquid crystal device with excellent transparency against light in a visible region.

The invention of claims 70 and 71 is the liquid crystal device of claim 63, wherein said liquid crystal layer contains nematic liquid crystal, and more specifically, tolane system nematic liquid crystal.

The use of this type of liquid crystal realizes an inexpensive liquid crystal device which performs stable operations.

The invention of claims 72 is a method for fabricating a liquid crystal device comprising: a substrate having an alignment film formed thereon; a resin film formed by curing a photosensitive prepolymer contained in a liquid crystal-prepolymer mixture with irradiation of light; and a liquid crystal layer sandwiched between said substrate and said resin film, said method comprising at least the steps of: forming a mixture film containing said photosensitive prepolymer and liquid crystal onto said substrate having said alignment film thereon; and forming said resin film at the surface of said mixture film by irradiating a surface of said mixture film with said light having a first wavelength from an other side of said substrate to extract and cure said photosensitive prepolymer at the surface of said mixture film.

The resin film is formed by the extraction of the photosensitive prepolymer contained in the mixture film, while the liquid crystal layer is made from the liquid crystal remaining in the mixture film. This eliminates the need for the time-consuming liquid crystal filling process, thereby to simplify the fabrication process and to reduce the fabrication cost. In addition, the liquid crystal sandwiched between the single substrate and the resin film makes the device lighter in weight than a liquid crystal device in which the liquid crystal is sandwiched between a pair of substrates.

The invention of claims 73 is the method for fabricating a liquid crystal device of claim 72, wherein in said resin film formation step, said resin film is formed by extracting a predetermined amount of said photosensitive prepolymer contained in said mixture film, and said method further comprising the step of, by selectively irradiating a predetermined region in said mixture film with light having a second wavelength to cure said photosensitive prepolymer remaining in said mixture film, forming a supporting member in said predetermined region between said substrate and said resin film.

The formation of the supporting member by the photosensitive prepolymer remaining in the mixture film simplifies the fabrication process of the liquid crystal device, and further makes the distance between the substrate and the resin film or the thickness of the liquid crystal layer uniform.

The invention of claims 74 is the method for fabricating a liquid crystal device of claim 73, wherein in said supporting member formation step, said supporting member is formed by extracting a predetermined amount of said photosensitive prepolymer remaining in said mixture film, and said method further comprising the step of forming an inner-side resin film onto said resin film on said substrate side by irradiating said mixture film with light having a third wavelength from said resin film side to extract and cure said photosensitive prepolymer remaining in said mixture film.

The inner-side resin film is formed by the extraction of the photosensitive prepolymer remaining in the mixture film, while the liquid crystal layer is made from the liquid crystal remaining in the mixture film, which facilitates the enhancement of the purity of the liquid crystal in the liquid crystal layer.

The invention of claims 75 is the method for fabricating a liquid crystal device of claim 72, wherein said photosensitive prepolymer contains an acrylate system material.

The presence of the acrylate system material facilitates the formation of the resin film by curing the photosensitive prepolymer when the mixture film is irradiated with the light, and further provides the obtained liquid crystal device with excellent transparency against light in a visible region.

The invention of claims 76 and 77 is the method for fabricating a liquid crystal device of claim 72, wherein said liquid crystal contains nematic liquid crystal, and more specifically, tolane system nematic liquid crystal.

The use of this type of liquid crystal facilitates the dissociation of the photosensitive prepolymer and the liquid crystal from each other by irradiating the mixture film with the light, so that the photosensitive prepolymer can be easily extracted to form the resin film. In addition, it becomes possible to fabricate a liquid crystal device performing stable operations with the use of the fairly available liquid crystal.

The invention of claims 78 through 86 is the method for fabricating a liquid crystal device of claims 72 through 74, wherein said mixture film further contains one of a polymerization initiator and a sensitizer for said photosensitive prepolymer which contains a benzoyl system material, and more specifically, 2, 2-dimethoxy-1 ,2-diphenylethane- 1-one.

The presence of these materials increases the efficiency of the curing of the photosensitive prepolymer, so that the hardening rate of the photosensitive prepolymer can be increased to further simplify the fabrication process.

The invention of claims 87 through 89 is the method for fabricating a liquid crystal device of claims 72 through 74, wherein said resin film formation step is performed by irradiating said mixture film with said light having the first wavelength in a reciprocity law failure condition.

This feature facilitates the curing of the photosensitive prepolymer on and around the surface of the mixture film which absorbs the light most, and also facilitates the selective formation of the resin film onto the surface of the mixture film by extracting the photosensitive prepolymer in the reciprocity law failure condition.

The invention of claims 90 through 95 is the method for fabricating a liquid crystal device of claims 72 through 74, wherein the first wavelength is within an absorption band region in absorption curves of said photosensitive prepolymer, and more specifically, said photosensitive prepolymer contains a polyester acrylate system material; and said light having the first wavelength is far-ultraviolet light, the first wavelength being 254 nm.

The irradiated light is almost entirely absorbed in and around the surface of the mixture film to cure the photosensitive prepolymer. This further facilitates the selective formation of the resin film onto the surface of the mixture film and the control of the thickness of the resin film with very high precision.

The invention of claims 96 and 97 is the method for fabricating a liquid crystal devices of claims 73 and 74, wherein said resin film formation step is performed by irradiating said mixture film with said light having the first wavelength in a reciprocity law failure condition; and said supporting member formation step is performed by irradiating said mixture film with said light having the second wavelength in a reciprocity law condition.

The irradiation of the light having the first wavelength in the reciprocity law failure condition promotes the extraction and curing of the photosensitive prepolymer on and around the surface of the mixture film to selectively form the resin film onto the surface of the mixture film. The irradiation of the light having the second wavelength in the reciprocity law condition makes it easier to cure the photosensitive prepolymer as far as the vicinity of the substrate in the mixture film, which facilitates the secure and efficient formation of the supporting member between the resin film and the substrate.

The invention of claims 98 and 99 is the method for fabricating a liquid crystal devices of claims 73 and 74, wherein said light having the second wavelength has smaller absorbance of said photosensitive prepolymer than said light having the first wavelength.

The irradiated light having the first wavelength is almost entirely absorbed in and around the surface of the mixture film to cure the photosensitive prepolymer, which further facilitates the selective formation of the resin film onto the surface of the mixture film. The light having the second wavelength easy to reach the vicinity of the substrate in the mixture film makes it easy to form the supporting member between the resin film and the substrate.

The invention of claim 100 is the method for fabricating a liquid crystal device of claim 74, wherein said resin film formation step is performed by irradiating said mixture film with said light having the first wavelength in a reciprocity law failure condition; said supporting member formation step is performed by irradiating said mixture film with said light having the second wavelength in a reciprocity law condition; and said inner-side resin film formation step is performed by irradiating said mixture film with said light having the third wavelength in the reciprocity law failure condition.

The irradiation of the light having the first wavelength or the light having the third wavelength in the reciprocity law failure condition makes it easy to extract and cure the photosensitive prepolymer in and around the surface of the mixture film, which facilitates the selective formation of the resin film and the inner-side resin film onto the surface of the mixture film. The irradiation of the light having the second wavelength in the reciprocity law condition makes it easy to cure the photosensitive prepolymer as far as the vicinity of the substrate in the mixture film, which facilitates the secure and efficient formation of the supporting member between the resin film and the substrate.

The invention of claim 101 is the method for fabricating a liquid crystal device of claim 74, wherein said light having the third wavelength has absorbance of said photosensitive prepolymer smaller than said light having the first wavelength and larger than said light having the second wavelength.

The light having the first wavelength, which hardly passes through the mixture film and is almost entirely absorbed in and around the surface of the mixture film facilitates the selective formation of the resin film onto the surface of the mixture film. The light having the second wavelength, which is easy to reach the vicinity of the substrate in the mixture film, facilitates the secure formation of the supporting member between the resin film and the substrate. The light having the third wavelength, which passes through the already formed resin film relatively easily but is likely to be absorbed in the resin film on the substrate side, facilitates the formation of the inner-side resin film onto the resin film on the substrate side.

The invention of claims 102 and 103 is the method for fabricating a liquid crystal device of claim 74, wherein said mixture film further contains one of a polymerization initiator and a sensitizer for said photosensitive prepolymer; the first wavelength is within an absorption band region on absorption curves of said photosensitive prepolymer, said mixture film being irradiated with said light having the first wavelength in a reciprocity law failure condition; the second wavelength is longer than an absorption band peak wavelength on absorption curves of one of said polymerization initiator and said sensitizer, said mixture film being irradiated with said light having the second wavelength in a reciprocity law condition; and the third wavelength is between a longest wavelength in the absorption band region on absorption curves of said photosensitive prepolymer and the absorption band peak wavelength on the absorption curves of one of said polymerization initiator and said sensitizer, said mixture film being irradiated with said light having the third wavelength in the reciprocity law failure condition. More specifically, said photosensitive prepolymer contains a polyester acrylate system material; said liquid crystal contains tolane system nematic liquid crystal; said mixture film further contains 2,2- dimethoxy-1, 2-diphenylethane-1-one; said light having the first wavelength is far-ultraviolet light, the first wavelength being 254 nm; said light having the second wavelength is ultraviolet light, the second wavelength being 365 nm; and said light having the third wavelength is ultraviolet light, the third wavelength being 313 nm.

The light having the first wavelength, which hardly passes through the mixture film and is almost entirely absorbed in and around the surface of the mixture film, facilitates the selective formation of the resin film onto the surface of the mixture film by extracting the photosensitive polymer in the reciprocity law failure condition. The light having the second wavelength, which is easy to reach the vicinity of the substrate in the mixture film, facilitates the secure and efficient formation of the supporting member between the resin film and the substrate in the reciprocity law condition. The light having the third wavelength, which passes through the already formed resin film relatively easily and is easily absorbed in the resin film on the substrate side, facilitates the formation of the inner-side resin film onto the resin film on the substrate side by extracting the photosensitive polymer in the reciprocity law failure condition.

The invention of claim 104 is the method for fabricating a liquid crystal device of claim 74, wherein in said inner-side resin film formation step, said irradiation of said light having the third wavelength is performed through a polarizer.

This feature makes the inner-side resin film have an alignment function for providing the liquid crystal molecules in the vicinity of the inner-side resin film with a predetermined tilt angle to improve the stability of the alignment conditions of the liquid crystal.

### (2) The Second Invention Group

The invention of claim 105 is a resin/liquid crystal composite comprising: a first resin film; a second resin film facing the first resin film; and a liquid crystal layer sandwiched between the first resin film and the second resin film, the first resin film, the second resin film and said liquid crystal layer being formed integrally.

The first resin film, the second resin film and the liquid crystal layer, which are integrally formed to compose the resin/liquid crystal composite, are in absolute contact with each other to prevent the entry of foreign particles such as dusts between adjacent components. This eliminates wasted space inside the resin/liquid crystal composite, allowing the composite to have the thinnest possible thickness.

The resin/liquid crystal composite can be used in a wide range such as for light-control windows or lightproof shutters which make curtains or blinds unnecessary. To be more specific, the application of the resin/liquid crystal composite to a transparent glass window having a previously formed transparent electrode realizes a light-control window in which electric field is applied on the liquid crystal layer via the electrode so as to control the light transmittance of the resin/liquid crystal composite.

The invention of claim 106 is the resin/liquid crystal composite of claim 105, wherein at least one of the first resin film and the second resin film has an alignment function for aligning liquid crystal molecules in a predetermined direction in said liquid crystal layer.

In this structure, the liquid crystal molecules in the liquid crystal layer are aligned in a predetermined direction when there is no application of electricity. As a result, the direction to align the liquid crystal molecules in the liquid crystal layer can be easily controlled by the application of electric field or the like.

The invention of claims 107 and 108 is the resin/liquid crystal composite of claim 105, wherein the first resin film and the second resin film are made of a same resin formed by curing a photosensitive prepolymer contained in a liquid crystal -prepolymer mixture with irradiation of light.

In this structure, both the first and second resin films are made from a cured photosensitive prepolymer. Such an integral unit made from the same material has no distortion inside or inconsistency of the components, so that the resin/liquid crystal composite has excellent ruggedness.

The invention of claims 109 and 110 is the resin/liquid crystal composite of claim 107 and 108 further comprising a supporting member for supporting the first resin film and the second resin film with a fixed space therebetween, said supporting member being formed integrally with the first resin film and the second resin film.

In this structure, the supporting member supporting the space between the first and second resin films is formed integrally with these films, so that the space can be kept securely in a stable manner. The supporting member also functions to reinforce the structure of the resin/liquid crystal composite integrally with the first and second resin films.

Also in this structure, the first and second resin films and the supporting member are formed integrally without seam, so that the liquid crystal layer can have the thinnest possible thickness, thereby realizing a resin/liquid crystal composite which is lighter in weight, more compact and rugged. The application of the resin/liquid crystal composite to a liquid crystal display device makes the device have a stable display and be lighter in weight and more compact.

The invention of claim 111 is the resin/liquid crystal composite of claim 105, wherein said resin composing the first resin film and the second resin film is a polyester acrylate system material.

The use of the polyester acrylate system resin having excellent transparency provides the resin/liquid crystal composite with excellent transparency against light in a visible region.

The invention of claims 112 and 113 is the resin/liquid crystal composite of claim 105, wherein said liquid crystal layer contains nematic liquid crystal, and more specifically, tolane system nematic liquid crystal.

The availability of this type of liquid crystal realizes an inexpensive resin/liquid crystal composite.

The invention of claim 114 is a method for fabricating a resin/liquid crystal composite integrally composed of a first resin film, a second resin film facing the first resin film and a liquid crystal layer sandwiched between the first resin film and the second resin film, said method comprising the steps of: forming a liquid crystal-prepolymer mixture film containing a photosensitive prepolymer and liquid crystal onto a surface of a light-transmitting substrate; forming a first resin film onto a surface of said liquid crystal-prepolymer mixture film by irradiating the surface of said liquid crystal-prepolymer mixture film with first light having a wavelength and intensity capable of selectively curing only the surface of said liquid crystal-prepolymer mixture film, and by extracting said liquid crystal existing in the surface of said liquid crystal-prepolymer mixture film to said substrate side; and forming the second resin film onto said liquid crystal-prepolymer mixture film on said substrate side so as to face the first resin film by curing said photosensitive prepolymer remaining in said liquid crystal-prepolymer mixture film with irradiation of second light from a rear side of said substrate, and by arranging dissociated liquid crystal between the first resin film and the second resin film.

The first and second resin films are formed by the curing of the photosensitive prepolymer contained in the mixture film, while the liquid crystal layer is made from the liquid crystal remaining in the mixture film. This eliminates the need for the time-consuming liquid crystal filling process thereby to simplify the fabrication process and to reduce the fabrication cost. Furthermore, the absence of the liquid crystal filling process realizes the quick formation of a liquid crystal layer even when the resin/liquid crystal composite has a large area.

The first resin film, the second resin film and the liquid crystal layer, which are integrally formed to compose the resin/liquid crystal composite, are in absolute contact with each other to prevent the entry of foreign particles such as dusts between adjacent components. This eliminates wasted space inside the resin/liquid crystal composite, allowing the composite to have the thinnest possible thickness and to be lightweight and compact.

The invention of claim 115 is a method for fabricating a resin/liquid crystal composite integrally composed of a first resin film, a second resin film facing the first resin film and a liquid crystal layer sandwiched between the first resin film and the second resin film, said method comprising the steps of: forming a liquid crystal-prepolymer mixture film containing a photosensitive prepolymer and liquid crystal onto a surface of a light-transmitting substrate; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to cure said photosensitive prepolymer existing in and around the surface of said liquid crystal-prepolymer mixture film selectively, and by extracting said liquid crystal existing in and around the surface of said liquid crystal-prepolymer mixture film to said substrate side; forming the second resin film on a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said liquid crystal existing in the substrate-side surface of said liquid crystal-prepolymer mixture film to said protective resin side; and forming the first resin film inside said protection resin film to be integral therewith by photo-curing said photosensitive prepolymer remaining in said liquid crystal-prepolymer mixture film by irradiating said liquid crystal-prepolymer mixture film with said light having the third wavelength from said protection resin film side through said protection resin film, and by arranging dissociated liquid crystal between the first resin film and the second resin film.

The first and second resin films are formed by the curing of the photosensitive prepolymer contained in the mixture film, while the liquid crystal layer is made from the liquid crystal remaining in the mixture film. This eliminates the need for the time-consuming liquid crystal filling process thereby to simplify the fabrication process and to reduce the fabrication cost. In addition, the mixture film can be protected between the substrate and the protection resin film formed on the film. The protection resin film prevents the surface of the mixture film from having asperities or becoming wavy due to contact during the fabrication process, which make it possible that the photo mask or the polarizer can be laid on the surface of the protection resin film to be irradiated by the light.

The invention of claim 116 is a method for fabricating a resin/liquid crystal composite integrally composed of a first resin film; a second resin film facing the first resin film; a liquid crystal layer sandwiched between the first resin film and the second resin film and a supporting member supporting the first resin film and the second resin film with a predetermined space therebetween, said method comprising the steps of: forming a liquid crystal-prepolymer mixture film containing at least a photosensitive prepolymer and liquid crystal onto a surface of a light-transmitting substrate; forming a protection resin film onto a surface of said liquid crystal prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said liquid crystal existing in and around the surface of said liquid crystal-prepolymer mixture film to said substrate side; forming said supporting member made from said photosensitive prepolymer cured in a desired form by putting a mask in a desired pattern onto said protection resin film and by irradiating said liquid crystal-prepolymer mixture film with light having a second wavelength through said mask; forming the second resin film onto a substrate-side surface of said liquid crystal-prepolymer mixture film by selectively photo-curing said photosensitive prepolymer existing in the substrate-side surface of said liquid crystal-prepolymer mixture film by irradiating said liquid crystal-prepolymer mixture film with light having a third wavelength from a rear side of said substrate through said substrate and a polarizer, and by extracting said liquid crystal existing in the substrate-side surface to said protection resin film side; and forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength through said protection resin film and a polarizer laid thereon, and by arranging dissociated liquid crystal between the first resin film and the second resin film.

The first and second resin films are formed by the curing of the photosensitive prepolymer contained in the mixture film, while the liquid crystal layer is made from the liquid crystal remaining in the mixture film. This eliminates the need for the time-consuming liquid crystal filling process thereby to simplify the fabrication process and to reduce the fabrication cost. In addition, the supporting member can be made from the photosensitive prepolymer contained in the mixture film to simplify the fabrication process. Furthermore, the supporting member formed integrally with these films keeps the space between these films securely in a stable manner, and also functions to reinforce the structure of the resin/liquid crystal composite. As a result, the obtained resin/liquid crystal composite becomes lighter in weight, more compact and rugged.

In the first resin film formation process and the supporting member formation process, the surface of the mixture film can be protected by the protection resin film formed thereon, which make it possible that the photo mask or the polarizer can be laid directly on the protection resin film to be irradiated by the light.

In the first and second resin film formation processes, the irradiation of the light having the third wavelength through the polarizer makes the molecules of the first and second resin films be polymerized with directivity in the polarizing direction of the polarizer so as to provide the molecules with the alignment function for aligning the liquid crystal molecules in the predetermined direction. This eliminates the need for the rubbing treatment, thereby simplifying the fabrication process.

The invention of claim 117 is the method for fabricating a resin/liquid crystal composite of claim 115, wherein the first wavelength is within an absorption band region in absorption curves of said photosensitive prepolymer; and said light having the third wavelength has smaller absorbance of said photosensitive prepolymer than said light having the first wavelength.

The light having the first wavelength, which hardly passes through the mixture film and is almost entirely absorbed in and around the surface of the mixture film facilitates the formation of the protection resin film onto the surface of the mixture film. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film, and of the second resin film onto the substrate-side surface of the mixture film.

The invention of claim 118 is the method for fabricating a resin/liquid crystal composite of claim 117, wherein said irradiation of said light having the first wavelength and said light having the third wavelength is performed in a reciprocity law failure condition.

The irradiation of the light having the first wavelength in the reciprocity law failure condition promotes the curing of the photosensitive prepolymer on and around the surface of the mixture film to facilitate the selective formation of the protection resin film onto the surface of the mixture film.

The irradiation of the light having the third wavelength in the reciprocity law failure condition promotes the curing of the photosensitive prepolymer inside the protection resin film to form the first resin film there, and also promotes the curing of the photosensitive prepolymer on the substrate-side surface of the mixture film to form the second resin film there.

The invention of claim 119 is the method for fabricating a resin/liquid crystal composite of claim 118, wherein said photosensitive prepolymer contains a polyester acrylate system compound; and said light having the first wavelength is far-ultraviolet light, the first wavelength being 254 nm.

The irradiated light can be substantially absorbed in and around the surface of the mixture film to cure the photosensitive prepolymer, which further facilitates the selective formation of the protection resin film on the surface of the mixture film, and the control of the thickness of the protection resin film with very high precision.

The invention of claim 120 is the method for fabricating a resin/liquid crystal composite of claim 116, wherein the first wavelength is within an absorption band region in absorption curves of said photosensitive prepolymer; said light having the second wavelength has smaller absorbance of said photosensitive prepolymer than said light having the first wavelength; and said light having the third wavelength has smaller absorbance of said photosensitive prepolymer than said light having the first wavelength and larger absorbance than said light having the second wavelength.

The light having the first wavelength, which hardly passes through the mixture film and is almost entirely absorbed in and around the surface of the mixture film, facilitates the selective formation of the protection resin film onto the surface of the mixture film. The light having the second wavelength, which is easy to reach the vicinity of the substrate in the mixture film, facilitates the secure formation of the supporting member between the first resin film and the second resin film. The light having the third wavelength, which passes through the already formed protection resin film and the light-transmitting substrate relatively easily but is likely to be absorbed in the portions of the mixture film that are in the vicinity of the protection resin film and in the vicinity of the substrate, facilitates the formation of the first resin film inside the protection resin film and of the second resin film on the substrate-side surface of the mixture film.

The invention of claim 121 is the method for fabricating a resin/liquid crystal composite of claim 120, wherein said liquid crystal-prepolymer mixture film further contains one of a polymerization initiator and a sensitizer; in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition; the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the second resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the second resin film onto the substrate-side surface of the mixture film by extracting the photosensitive polymer in the reciprocity law failure condition.

The invention of claims 122 and 123 is the method for fabricating a resin/liquid crystal composite of claim 115, wherein said liquid crystal is nematic liquid crystal, and more specifically, tolane system nematic liquid crystal.

The use of this type of liquid crystal facilitates the dissociation of the photosensitive prepolymer and the liquid crystal from each other by irradiating the mixture film with the light, so that the photosensitive prepolymer can be easily cured to form the first and second resin films.

The invention of claims 124 and 125 is the method for fabricating a resin/liquid crystal composite of claim 121, wherein one of said polymerization initiator and said sensitizer is a benzoyl system compound, and more specifically, 2,2-dimethoxy- 1,2- diphenylethane -1 -one.

The presence of these materials increases the efficiency of the curing of the photosensitive prepolymer, so that the hardening rate of the photosensitive prepolymer can be increased to further simplify the fabrication process.

The invention of claim 126 is the method for fabricating a resin/liquid crystal composite of claim 121, wherein said photosensitive prepolymer contains a polyester acrylate system material; said liquid crystal contains tolane system nematic liquid crystal; said liquid crystal-prepolymer film further contains 2,2- dimethoxy 1,2- diphenylethane- 1-one; said light having the first wavelength is far-ultraviolet light, the first wavelength being 254 nm; said light having the second wavelength is ultraviolet light, the second wavelength being 365 nm; and said light having the third wavelength is ultraviolet light, the third wavelength being 313 nm.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the second resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the second resin film onto the substrate-side surface of the mixture film by extracting the photosensitive polymer in the reciprocity law failure condition.

The invention of claim 127 is a liquid crystal display device comprising: a substrate-side resin film made from a photosensitive prepolymer which has been polymerized, said substrate-side resin film being formed onto a surface of a substrate at least having a pixel electrode and a switching element connected with the pixel electrode; a counter resin film made from said photosensitive prepolymer which has been polymerized, said counter resin film being arranged to face said substrate side resin film; and a liquid crystal layer sandwiched between said substrate-side resin film and said counter resin film, said substrate-side resin film, said counter resin film and said liquid crystal layer being formed integrally.

The liquid crystal sandwiched between the substrate-side resin film formed on the single substrate and the counter resin film makes the device lighter in weight than a liquid crystal display device in which the liquid crystal is sandwiched between a pair of substrates.

The substrate-side resin film, the counter resin film and the liquid crystal layer which are integrally formed to compose the liquid crystal display device, are in absolute contact with each other to prevent the entry of foreign particles such as dusts between adjacent components. This eliminates wasted space between the substrate-side resin film and the liquid crystal layer and between the liquid crystal layer and the counter resin film, allowing the device to have the thinnest possible thickness, thereby to achieve a lightweight slim liquid crystal display device.

The invention of claim 128 is the liquid crystal display device of claim 127 further comprising a supporting member formed between said substrate-side resin film and said counter resin film in a manner to be integral therewith.

In this structure, the supporting member supporting the space between the substrate-side resin film and the counter resin film is formed integrally with these films, so that the space can be kept securely in a stable manner. The supporting member also functions to reinforce the structure of the liquid crystal display device integrally with the substrate-side resin film and the counter resin film.

Furthermore, the substrate-side resin film, the counter resin film and the supporting member are formed integrally without seam, so that the liquid crystal layer can have the thinnest possible thickness, thereby realizing a liquid crystal display device which is lighter in weight, more compact and has a stable display.

The invention of claims 129 and 130 is the liquid crystal display device of claim 127 and 128, wherein said substrate-side resin film and said counter resin film contain a polyester acrylate system compound.

The use of the polyester acrylate system resin having excellent transparency provides the liquid crystal display device with excellent transparency against light in a visible region and a bright display.

The invention of claims 131 and 132 is the liquid crystal display device of claim 127, wherein said liquid crystal layer contains nematic liquid crystal, and more specifically, tolane system nematic liquid crystal.

The availability of this type of liquid crystal realizes an inexpensive resin/liquid crystal composite which performs stable operations.

The invention of claims 133 and 134 is the liquid crystal display device of claim 127 further comprising a counter electrode arranged on a side of said counter resin film that is opposite said liquid crystal layer, wherein at least one of said counter resin film and said substrate-side resin film is formed by photo-curing said photosensitive prepolymer with irradiation of polarized light to align molecules of said photosensitive prepolymer in a direction.

In this structure, the liquid crystal molecules in the liquid crystal layer are aligned in a predetermined direction when there is no application of electricity. As a result, the direction to align the liquid crystal molecules in the liquid crystal layer can be easily controlled by the application of electric field or the like, which realizes a lightweight slim liquid crystal display device having the TN structure or the homeotropic structure.

The invention of claim 135 is the liquid crystal display device of claim 133 further comprising a color filter arranged on the side of said counter resin film that is opposite said liquid crystal layer.

The provision of the color filter realizes a lightweight slim color liquid crystal display device having the TN structure or the homeotropic structure.

The invention of claim 136 is the liquid crystal display device of claim 135, wherein said counter electrode is made of a transparent conductive film and is formed either between said counter resin film and said color filter or on a side of said color filter that is opposite said counter resin film.

This feature realizes a lightweight, slim and color liquid crystal display device of transmission type which has the TN structure or the homeotropic structure.

The invention of claim 137 is the liquid crystal display device of claim 135, wherein said counter electrode is made from a light-reflecting material; and said color filter is formed between said counter resin film and said counter electrode.

This feature realizes a lightweight, slim and color liquid crystal display device of reflection type which has the TN structure or the homeotropic structure.

The invention of claims 138 and 139 is the liquid crystal display device of claim 127 and 128, wherein said substrate further has a common electrode thereon.

The provision of the common electrode realizes a lightweight, slim IPS liquid crystal display device.

The invention of claims 140 and 141 is the liquid crystal display device of claim 138, wherein at least one of said counter resin film and said substrate-side resin film is formed by photo-curing said photosensitive prepolymer with irradiation of polarized light to align molecules of said photosensitive prepolymer in a direction.

In this structure, the liquid crystal molecules in the liquid crystal layer are aligned in a predetermined direction when there is no application of electricity. As a result, the direction to align the liquid crystal molecules in the liquid crystal layer can be easily controlled by the application of electric field or the like, which realizes a lightweight, slim IPS liquid crystal display device having excellent display characteristics.

The invention of claim 142 is the liquid crystal display device of claim 133 further comprising a color filter arranged on the side of said counter resin film that is opposite said liquid crystal layer.

The provision of the color filter realizes a lightweight, slim and color IPS liquid crystal display device.

The invention of claim 143 is the liquid crystal display device of claim 142 further comprising an electrode made of a transparent conductive film, said electrode being formed either between said counter resin film and said color filter or on a side of said color filter that is opposite said counter resin film.

The provision of the electrode realizes an IPS liquid crystal display device which is excellent in alignment stability, in addition to being lightweight, slim and color because the alignment of the liquid crystal molecules is hardly affected by static electricity even if the resin film is thin.

The invention of claim 144 is the liquid crystal display device of claim 142 further comprising an electrode made from a light-reflecting material, said electrode being arranged on a side of said color filter that is opposite said counter resin film.

The provision of the electrode realizes a lightweight, slim and color IPS liquid crystal display device of reflection type.

The invention of claim 145 is a method for fabricating a liquid crystal display device comprising: a substrate-side resin film made from a photosensitive prepolymer which has been polymerized, said substrate-side resin film being formed on a surface of a light-transmitting substrate having a pixel electrode and a switching element connected with the pixel electrode; a counter resin film made from said photosensitive prepolymer which has been polymerized, said counter resin film being arranged to face said substrate-side resin film; and a liquid crystal layer sandwiched between said substrate-side resin film and said counter resin film, said substrate-side resin film, said counter resin film and said liquid crystal layer being formed integrally, said method comprising the steps of: forming the pixel electrode and the switching element connected with the pixel electrode onto said light-transmitting substrate; forming a liquid crystal-prepolymer mixture film consisting of said photosensitive prepolymer and liquid crystal onto a surface of said substrate having the pixel electrode and the switching element; forming a counter resin film onto a surface of said liquid crystal-prepolymer mixture film by irradiating the surface of said liquid crystal-prepolymer mixture film with light having a wavelength and intensity capable of selectively photo-curing only the surface of said liquid crystal-prepolymer mixture film, and by extracting said liquid crystal existing in the surface of said liquid crystal-prepolymer mixture film to said substrate side; and forming the substrate-side resin film onto said liquid crystal-prepolymer mixture film on said substrate side so as to face said counter resin film by photo-curing said photosensitive prepolymer remaining in said liquid crystal-prepolymer mixture film with irradiation of light from a rear side of said substrate, and to sandwich dissociated liquid crystal between said counter resin film and said substrate-side resin film.

The counter resin film and the substrate-side resin film are formed by the curing of the photosensitive prepolymer contained in the mixture film, while the liquid crystal layer is made from the liquid crystal remaining in the mixture film. This eliminates the need for the time-consuming liquid crystal filling process thereby to simplify the fabrication process and to reduce the fabrication cost.

In addition, the liquid crystal sandwiched between the counter resin film and the substrate-side resin film formed on the single substrate makes the device lighter in weight than a liquid crystal display device in which the liquid crystal is sandwiched between a pair of substrates. The substrate-side resin film, the counter resin film and the liquid crystal layer which are integrally formed to compose the liquid crystal display device, are in absolute contact with each other to prevent the entry of foreign particles such as dusts between adjacent components. This eliminates wasted space between the substrate-side resin film and the liquid crystal layer and between the liquid crystal layer and the counter resin film, allowing the device to have the thinnest possible thickness, thereby to achieve a lightweight slim liquid crystal display device.

The invention of claim 146 is a method for fabricating a liquid crystal display device comprising: a substrate-side resin film made from a photosensitive prepolymer which has been cured, said substrate-side resin film being formed onto a surface of a light-transmitting substrate having a pixel electrode and a switching element connected with the pixel electrode formed thereon; a counter resin film made from said photosensitive prepolymer which has been cured, said counter resin film being formed to face said substrate-side resin film; and a liquid crystal layer sandwiched between said substrate-side resin film and said counter resin film, said substrate-side resin film, said counter resin film and said liquid crystal layer being formed integrally, said method comprising the steps of: forming the pixel electrode and the switching element connected with the pixel electrode onto said light-transmitting substrate; forming a liquid crystal-prepolymer mixture film consisting of said photosensitive prepolymer and liquid crystal onto a surface of said substrate having the pixel electrode and the switching element thereon; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said liquid crystal existing in and around the surface of said liquid crystal-prepolymer mixture film to said substrate side; forming the substrate-side resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said liquid crystal existing in and around the substrate-side surface of said liquid crystal-prepolymer mixture film to said protection resin film side; and forming the first resin film inside said protection resin film to be integral therewith by curing said photosensitive prepolymer remaining in said liquid crystal-prepolymer mixture film by irradiating said liquid crystal-prepolymer mixture film with said light having the third wavelength from said protection resin film side through said protection resin film so as to sandwich dissociated liquid crystal between the first resin film and the substrate-side resin film.

The counter resin film and the substrate-side resin film are formed by the curing of the photosensitive prepolymer contained in the mixture film, while the liquid crystal layer is made from the liquid crystal remaining in the mixture film. This eliminates the need for the time-consuming liquid crystal filling process, thereby to simplify the fabrication process and to reduce the fabrication cost.

In addition, the mixture film can be protected between the substrate and the protection resin film formed on the film. The protection resin film prevents the surface of the mixture film from having asperities or becoming wavy due to contact during the fabrication process, which make it possible that the photo mask or the polarizer can be laid on the surface of the protection resin film to be irradiated by the light.

The invention of claim 147 is a method for fabricating a liquid crystal display device comprising: a substrate-side resin film made from a photosensitive prepolymer which has been photo-cured, said substrate-side resin film being formed onto a surface of a light-transmitting substrate having a pixel electrode and a switching element connected with the pixel electrode formed thereon; a counter resin film made from said photosensitive prepolymer which has been photo-cured, said counter resin film being formed to face said substrate-side resin film; and a liquid crystal layer sandwiched between said substrate-side resin film and said counter resin film, said substrate-side resin film, said counter resin film and said liquid crystal layer being formed integrally, said method comprising the steps of: forming the pixel electrode and the switching element connected with the pixel electrode onto said light-transmitting substrate; forming a liquid crystal-prepolymer mixture film consisting of said photosensitive prepolymer and liquid crystal onto a surface of said substrate having the pixel electrode and the switching element; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said liquid crystal existing in and around the surface of said liquid crystal-prepolymer mixture film to said substrate side; forming a supporting member made from said photosensitive prepolymer selectively photo-cured in a desired form by putting a mask in a desired pattern onto said protection resin film and by irradiating said liquid crystal-prepolymer mixture film with light having a second wavelength through said mask; forming the substrate-side resin film onto a substrate-side surface of said liquid crystal-prepolymer mixture film by selectively curing said photosensitive prepolymer existing in the substrate-side surface of said liquid crystal-prepolymer mixture film by irradiating said liquid crystal-prepolymer mixture film with light having a third wavelength from a rear side of said substrate through said substrate and a polarizer, and by extracting said liquid crystal existing in the substrate-side surface of said liquid crystal-prepolymer mixture film to said protection resin film side; and forming the first resin film inside said protection resin film to be integrated therewith by curing said photosensitive prepolymer remaining in said liquid crystal-prepolymer mixture film by irradiating said liquid crystal-prepolymer mixture film with said light having the third wavelength from said protection resin film side through said protection resin film and a polarizer laid thereon, further forming said counter resin film from said protection resin film and the first resin film so as to sandwich dissociated liquid crystal between the first resin film and the substrate-side resin film.

The counter resin film and the substrate-side resin film are formed by the curing of the photosensitive prepolymer contained in the mixture film, while the liquid crystal layer is made from the liquid crystal remaining in the mixture film. This eliminates the need for the time-consuming liquid crystal filling process, thereby to simplify the fabrication process and to reduce the fabrication cost.

The supporting member is made from the photosensitive prepolymer contained in the mixture film to simplify the fabrication process. The supporting member, which is formed integrally with the counter resin film (protection resin film and first resin film) and the substrate-side resin film (second resin film), secures the space between these resin films in a stable manner, and also functions to reinforce the structure of the liquid crystal display device. As a result, a liquid crystal display device which is lighter in weight, more compact and rugged is obtained.

In the first resin film formation process and the supporting member formation process, the surface of the mixture film is protected by the protection resin film, which make it possible that the photo mask or the polarizer can be laid directly on the surface of the protection resin film to be irradiated by the light.

In the first resin film formation process and the substrate-side resin film formation process, the irradiation of the light having the third wavelength through the polarizer makes the molecules of the first and substrate-side resin films be polymerized with directivity so as to provide the molecules with the alignment function for aligning the liquid crystal molecules in the predetermined direction. This eliminates the need for the rubbing treatment, thereby simplifying the fabrication process.

The invention of claim 148 is the method for fabricating a liquid crystal display device of claim 146, wherein the first wavelength is within an absorption band region in absorption curves of said photosensitive prepolymer; and said light having the third wavelength has smaller absorbance of said photosensitive prepolymer than said light having the first wavelength.

The light having the first wavelength, which hardly passes through the mixture film and is almost entirely absorbed in and around the surface of the mixture film, facilitates the formation of the protection resin film onto the surface of the mixture film. The light having the third wavelength, which passes through the already formed protection resin film and the light-transmitting substrate relatively easily but is likely to be absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film.

The invention of claim 149 is the method for fabricating a liquid crystal display device of claim 148, wherein said irradiation of said light having the first wavelength and said light having the third wavelength is performed in a reciprocity law failure condition.

The irradiation of the light having the first wavelength in the reciprocity law failure condition promotes the curing of the photosensitive prepolymer in and around the surface of the mixture film to facilitate the selective formation of the protection resin film onto the surface of the mixture film. The irradiation of the light having the third wavelength in the reciprocity law failure condition promotes the curing of the photosensitive prepolymer in the portion of the mixture film that is in the vicinity of the protection resin film to form the first resin film inside the protection resin film, and also facilitates the curing of the photosensitive prepolymer in the portion of the mixture film that is in the vicinity of the substrate to form the substrate-side resin film.

The invention of claim 150 is the method for fabricating a liquid crystal display device of claim 149, wherein said photosensitive prepolymer contains a polyester acrylate system compound; and said light having the first wavelength is far-ultraviolet light, the first wavelength being 254 nm.

The irradiated light can be substantially absorbed in and around the surface of the mixture film to cure the photosensitive prepolymer, which further facilitates the selective formation of the protection resin film on the surface of the mixture film, and the control of the thickness of the protection resin film with very high precision.

The invention of claim 151 is the method for fabricating a liquid crystal display device of claim 147, wherein the first wavelength is within an absorption band region in absorption curves of said photosensitive prepolymer; said light having the second wavelength has smaller absorbance of said photosensitive prepolymer than said light having the first wavelength; and said light having the third wavelength has smaller absorbance of said photosensitive prepolymer than said light having the first wavelength and larger absorbance than said light having the second wavelength.

The light having the first wavelength, which hardly passes through the mixture film and is almost entirely absorbed in and around the surface of the mixture film, facilitates the selective formation of the protection resin film onto the surface of the mixture film. The light having the second wavelength, which is easy to reach the vicinity of the substrate in the mixture film, facilitates the secure formation of the supporting member between the counter resin film and the substrate-side resin film. The light having the third wavelength, which passes through the already formed protection resin film and the light-transmitting substrate relatively easily but is likely to be absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film.

The invention of claim 152 is the method for fabricating a liquid crystal display device of claim 151, wherein said liquid crystal-prepolymer mixture film further contains one of a polymerization initiator and a sensitizer; in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition; the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the substrate-side resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film by extracting the photosensitive polymer in the reciprocity law failure condition.

The invention of claims 153 and 154 is the method for fabricating a liquid crystal display device of claim 146, wherein said liquid crystal is nematic liquid crystal, and more specifically, tolane system nematic liquid crystal.

The use of this type of liquid crystal facilitates the dissociation of the photosensitive prepolymer and the liquid crystal from each other by irradiating the mixture film with the light, so that the photosensitive prepolymer can be easily polarization hardened to form the counter resin film and the substrate-side resin film. In addition, it becomes possible to fabricate a liquid crystal device performing stable operations with the use of the fairly available liquid crystal.

The invention of claims 155 and 156 is the method for fabricating a liquid crystal display device of claim 152, wherein one of said polymerization initiator and said sensitizer is a benzoyl system compound, and more specifically, 2,2 dimethoxy- 1 ,2-diphenylethane- 1 -one.

The presence of these materials increases the efficiency of the curing of the photosensitive prepolymer, so that the hardening rate of the photosensitive prepolymer can be increased to further simplify the fabrication process.

The invention of claim 157 is the method for fabricating a liquid crystal display device of claim 152, wherein said photosensitive prepolymer contains a polyester acrylate system material; said liquid crystal contains tolane system nematic liquid crystal; said liquid crystal-prepolymer mixture film further contains 2,2-dimethoxy-1,2-diphenylethane -1-one; said light having the first wavelength is far-ultraviolet light, the first wavelength being 254 nm; said light having the second wavelength is ultraviolet light, the second wavelength being 365 nm; and said light having the third wavelength is ultraviolet light, the third wavelength being 313 nm.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the substrate-side resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film by extracting the photosensitive polymer in the reciprocity law failure condition.

The invention of claim 158 is the method for fabricating a liquid crystal display device of claim 145 further comprising the step of forming a counter electrode onto a side of said counter resin film that is opposite said liquid crystal layer.

The provision of the counter electrode realizes a lightweight slim liquid crystal display device having the TN structure or the homeotropic structure.

The invention of claim 159 is the method for fabricating a liquid crystal display device of claim 158, wherein in said counter electrode formation step, said counter electrode is provided by forming a transparent conductive film onto the side of said counter resin film that is opposite said liquid crystal layer, and said method further comprising the step of forming a color filter onto one of said counter resin film and said counter electrode either before or after said counter electrode formation step.

This feature realizes a lightweight, slim and color liquid crystal display device of transmission type having the TN structure or the homeotropic structure.

The invention of claim 160 is the method for fabricating a liquid crystal display device of claim 158, wherein in said counter electrode formation step, said counter electrode is provided by forming a light-reflecting film onto the side of said counter resin film that is opposite said liquid crystal layer, and said method further comprising the step of forming a color filter onto said counter resin film before said counter electrode formation step.

This feature realizes a lightweight, slim and color liquid crystal display device of reflection type having the TN structure or the homeotropic structure.

The invention of claims 161 through 163 is the method for fabricating a liquid crystal display device of claims 145 through 147 further comprising the step of forming a common electrode onto said substrate.

The provision of the common electrode realizes a lightweight, slim IPS liquid crystal display device.

The invention of claims 164 through 166 is the method for fabricating a liquid crystal display device of claims 161 through 163 wherein in at least one of said first resin film formation step and said substrate-side resin film formation step, said irradiation of said light having the third wavelength is performed through a polarizer.

In this structure, the liquid crystal molecules in the liquid crystal layer are aligned in a predetermined direction when there is no application of electricity. As a result, the direction to align the liquid crystal molecules in the liquid crystal layer can be easily controlled by the application of electric field or the like, which realizes a lightweight, slim IPS liquid crystal display device having excellent display characteristics.

The invention of claim 167 is the method for fabricating a liquid crystal display device of claim 161 further comprising the step of forming a color filter onto said counter resin film.

The provision of the color filter realizes an IPS liquid crystal display device which is lightweight, slim and color.

The invention of claim 168 is the method for fabricating a liquid crystal display device of claim 167 further comprising the step of forming a transparent electrode onto one of said counter resin film and said color filter either before or after said color filter formation step.

The provision of the electrode realizes an IPS liquid crystal display device which is excellent in alignment stability in addition to being lightweight, slim and color because the alignment of the liquid crystal molecules is hardly affected by static electricity even if the counter resin film is thin.

The invention of claim 169 is the method for fabricating a liquid crystal display device of claim 167 further comprising the step of forming a conductive light-reflecting film onto said color filter.

This feature realizes a lightweight, slim and color liquid crystal display device of reflection type.

The invention of claim 170 is a liquid crystal display device comprising: a substrate-side resin film made from a photosensitive prepolymer which has been polymerized, said substrate-side resin film being formed on a surface of a substrate having one of a pixel signal electrode and a scan electrode thereon; a counter resin film made from said photosensitive prepolymer which has been polymerized, said counter resin film having an other one of the pixel signal electrode and the scan electrode thereon, and being arranged to face said substrate-side resin film; and a liquid crystal layer sandwiched between said substrate-side resin film and said counter resin film, said substrate-side resin film, said counter resin film and said liquid crystal layer being formed integrally.

The liquid crystal sandwiched between the counter resin film and the substrate-side resin film formed on the single substrate makes the device lighter in weight than a liquid crystal display device in which the liquid crystal is sandwiched between a pair of substrates.

The substrate-side resin film, the counter resin film and the liquid crystal layer, which are integrally formed to compose the liquid crystal display device, are in absolute contact with each other to prevent the entry of foreign particles such as dusts between adjacent components. This eliminates wasted space between the substrate-side resin film and the liquid crystal layer and between the liquid crystal layer and the counter resin film, allowing the device to have the thinnest possible thickness, thereby to achieve a lightweight slim liquid crystal display device.

The invention of claim 171 is the liquid crystal display device of claim 170 further comprising a color filter formed onto the other one of the pixel signal electrode and the scan electrode either on said counter resin film side or on an other side thereof.

The provision of the color filter realizes a lightweight, slim and color liquid crystal display device of simple-matrix type.

### (3) The Third Invention Group

The invention of claim 172 is a resin/liquid crystal composite comprising: a first resin film, a second resin film facing the first resin film; and a liquid crystal layer containing a dichroic dye, said liquid crystal layer being sandwiched between the first resin film and the second resin film, the first resin film, the second resin film and said liquid crystal layer being formed integrally.

The first resin film, the second resin film and the liquid crystal layer, which are integrally formed to compose the resin/liquid crystal composite, are in absolute contact with each other to prevent the entry of foreign particles such as dusts between adjacent components. This eliminates wasted space inside the resin/liquid crystal composite, allowing the composite to have the thinnest possible thickness.

The resin/liquid crystal composite can be used in a wide range such as for light-control windows or lightproof shutters which make curtains or blinds unnecessary. To be more specific, the application of the resin/liquid crystal composite to a transparent glass window having a previously formed transparent electrode realizes a light-control window in which electric field is applied on the liquid crystal layer containing a dichroic dye via the electrode so as to control the light transmittance of the resin/liquid crystal composite. Since the first and second resin films can be made thin, the alignment of the liquid crystal can be controlled at a low voltage.

The invention of claim 173 is the resin/liquid crystal composite of claim 172, wherein at least one of the first resin film and the second resin film has an alignment function for aligning liquid crystal molecules a predetermined direction in said liquid crystal layer containing said dichroic dye.

In this structure, the liquid crystal molecules in the liquid crystal layer are aligned in a predetermined direction when no electric field is applied, and the dichroic dye contained in the liquid crystal layer is aligned parallel to the liquid crystal molecules. Therefore, by applying electric field or using another method, the direction of the dichroic dye against incident light can be easily controlled in accordance with the alignment of the liquid crystal molecules in the liquid crystal layer so as to further improve the contrast.

The invention of claims 174 and 175 is the resin/liquid crystal composite of claims 172 and 173, wherein the first resin film and the second resin film are made of a same resin formed by photo-curing a photosensitive prepolymer with irradiation of light.

In this structure, the first and second resin films are both made from a cured photosensitive prepolymer. Such an integral unit made from the same material has no distortion inside or inconsistency of the components, so that the resin/liquid crystal composite has excellent ruggedness.

The invention of claims 176 and 177 is the resin/liquid crystal composite of claims 174 and 175 further comprising a supporting member for supporting the first resin film and the second resin film with a fixed space therebetween, said supporting member being formed integrally with the first resin film and the second resin film.

In this structure, the supporting member supporting the space between the first and second resin films is formed integrally with these films, so that the space can be kept securely in a stable manner. The supporting member also functions to reinforce the structure of the resin/liquid crystal composite integrally with the first and second resin films.

Furthermore, the first and second resin films and the supporting member are formed integrally without seam, so that the liquid crystal layer can have the thinnest possible thickness, thereby realizing a resin/liquid crystal composite which is lighter in weight and more compact and rugged. The application of the resin/liquid crystal composite to a liquid crystal display device makes the device have a stable display and be lighter in weight and more compact.

The invention of claim 178 is the resin/liquid crystal composite of claim 172, wherein said resin composing the first resin film and the second resin film is a polyester acrylate system material.

The use of the polyester acrylate system resin having excellent transparency provides the resin/liquid crystal composite with excellent transparency against light in a visible region.

The invention of claims 179 and 180 is the resin/liquid crystal composite of claim 172, wherein said liquid crystal layer contains nematic liquid crystal, and more specifically, tolane system nematic liquid crystal.

The use of this type of liquid crystal, which is fairly available, realizes a resin/liquid crystal composite at low cost.

The invention of claim 181 is a method for fabricating a resin/liquid crystal composite integrally composed of a first resin film; a second resin film facing the first resin film; and a liquid crystal layer which contains a dichroic dye and is sandwiched between the first resin film and the second resin film, said method comprising the steps of: forming a liquid crystal-prepolymer mixture film containing a photosensitive prepolymer, said dichroic dye and liquid crystal onto a surface of a light-transmitting substrate; forming the first resin film onto a surface of said liquid crystal-prepolymer mixture film by irradiating the surface of said liquid crystal-prepolymer mixture film with first light having a wavelength and intensity capable of selectively curing only the surface of said liquid crystal-prepolymer mixture film, and by extracting said dichroic dye and said liquid crystal existing in the surface of said liquid crystal-prepolymer mixture film to said substrate side; and forming the second resin film onto a substrate-side surface of said liquid crystal-prepolymer mixture film so as to face the first resin film by curing said photosensitive prepolymer remaining in said liquid crystal-prepolymer mixture film with irradiation of second light from a rear side of said substrate, and by arranging dissociated dichroic dye and liquid crystal between the first resin film and the second resin film.

The first and second resin films are formed by the curing of the photosensitive prepolymer contained in the mixture film, while the liquid crystal layer is made from the liquid crystal and the dichroic dye remaining in the mixture film. This eliminates the need for the time-consuming liquid crystal filling process, thereby to simplify the fabrication process and to reduce the fabrication cost. Furthermore, the absence of the liquid crystal filling process realizes the quick formation of a liquid crystal layer even when the resin/liquid crystal composite has a large area.

The first resin film, the second resin film and the liquid crystal layer, which are integrally formed to compose the resin/liquid crystal composite, are in absolute contact with each other to prevent the entry of foreign particles such as dusts between adjacent components. This eliminates wasted space inside the resin/liquid crystal composite, allowing the composite to have the thinnest possible thickness, thereby realizing a resin/liquid crystal composite which is lighter in weight and more slim.

The invention of claim 182 is a method for fabricating a resin/liquid crystal composite integrally composed of a first resin film; a second resin film facing the first resin film; and a liquid crystal layer which contains a dichroic dye and is sandwiched between the first resin film and the second resin film, said method comprising the steps of: forming a liquid crystal-prepolymer mixture film containing a photosensitive prepolymer, said dichroic dye and liquid crystal onto a surface of a light-transmitting substrate; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to cure the photosensitive prepolymer existing in and around the surface of said liquid crystal-prepolymer mixture film selectively, and by extracting said dichroic dye and said liquid crystal existing in and around the surface of said liquid crystal-prepolymer mixture film to said substrate side; forming the second resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said dichroic dye and said liquid crystal existing in and around the substrate-side surface of said liquid crystal-prepolymer mixture film to said protective resin side; and forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength from said protection resin film side through said protection resin film, so as to sandwich dissociated dichroic dye and liquid crystal between the first resin film and the second resin film.

The first and second resin films are formed by the curing of the photosensitive prepolymer contained in the mixture film, while the liquid crystal layer is made from the liquid crystal and the dichroic dye remaining in the mixture film. This eliminates the need for the time-consuming liquid crystal filling process, thereby to simplify the fabrication process and to reduce the fabrication cost. In addition, the mixture film can be protected between the substrate and the protection resin film formed on the film. The protection resin film prevents the surface of the mixture film from having asperities or becoming wavy due to contact during the fabrication process, which make it possible that the photo mask or the polarizer can be laid on the surface of the protection resin film to be irradiated by the light.

The invention of claim 183 is a method for fabricating a resin/liquid crystal composite integrally composed of a first resin film; a second resin film facing the first resin film; a liquid crystal layer which contains a dichroic dye and is sandwiched between the first resin film and the second resin film; and a supporting member supporting the first resin film and the second resin film with a predetermined space therebetween, said method comprising the steps of: forming a liquid crystal-prepolymer mixture film containing at least a photosensitive prepolymer, said dichroic dye and liquid crystal onto a surface of a light-transmitting substrate; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure the photosensitive prepolymer existing in and around the surface of said liquid crystal-prepolymer mixture film selectively by extracting said dichroic dye and said liquid crystal existing in and around the surface of said liquid crystal-prepolymer mixture film to said substrate side; forming said supporting member made from said photosensitive prepolymer which has been photo-cured in a desired form by putting a mask in a desired pattern onto said protection resin film and by irradiating said liquid crystal-prepolymer mixture film with light having a second wavelength through said mask; forming the second resin film onto a substrate-side surface of said liquid crystal-prepolymer mixture film by selectively photo-curing said photosensitive prepolymer existing in the substrate-side surface of said liquid crystal-prepolymer mixture film by irradiating said liquid crystal-prepolymer mixture film with light having a third wavelength from a rear side of said substrate through said substrate and a polarizer, and by extracting said dichroic dye and said liquid crystal existing in the substrate-side surface to said protection resin film side; and forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength through said protection resin film and a polarizer laid thereon, and by forming dissociated dichroic dye and liquid crystal between the first resin film and the second resin film.

The first and second resin films are formed by the curing of the photosensitive prepolymer contained in the mixture film, while the liquid crystal layer is made from the liquid crystal and the dichroic dye remaining in the mixture film. This eliminates the need for the time-consuming liquid crystal filling process, thereby to simplify the fabrication process and to reduce the fabrication cost. In addition, the supporting member can be made from the photosensitive prepolymer contained in the mixture film to simplify the fabrication process. Furthermore, the supporting member formed integrally with these films keeps the space between these films securely in a stable manner, and also functions to reinforce the structure of the resin/liquid crystal composite. As a result, the obtained resin/liquid crystal composite becomes lighter in weight, more compact and rugged.

In the first resin film formation process and the supporting member formation process, the surface of the mixture film can be protected by the protection resin film formed thereon, which make it possible that the photo mask or the polarizer can be laid directly on the protection resin film to be irradiated by the light.

The invention of claim 184 is the method for fabricating a resin/liquid crystal composite of claim 182, wherein the first wavelength is within an absorption band region in absorption curves of said photosensitive prepolymer; and said light having the third wavelength has smaller absorbance of said photosensitive prepolymer than said light having the first wavelength.

The light having the first wavelength, which hardly passes through the mixture film and is almost entirely absorbed in and around the surface of the mixture film facilitates the formation of the protection resin film onto the surface of the mixture film. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film, and of the second resin film onto the substrate-side surface of the mixture film.

The invention of claim 185 is the method for fabricating a resin/liquid crystal composite of claim 184, wherein said irradiation of said light having the first wavelength and said light having the third wavelength is performed in a reciprocity law failure condition.

The irradiation of the light having the first wavelength in the reciprocity law failure condition promotes the curing of the photosensitive prepolymer on and around the surface of the mixture film to facilitate the selective formation of the protection resin film onto the surface of the mixture film. The irradiation of the light having the third wavelength in the reciprocity law failure condition promotes the curing of the photosensitive prepolymer in the portion of the mixture film that is in the vicinity of the protection resin film to form the first resin film there, and also promotes the curing of the photosensitive prepolymer in the portion of the mixture film that is in the vicinity of the substrate to form the second resin film there.

The invention of claim 186 is the method for fabricating a resin/liquid crystal composite of claim 185, wherein said photosensitive prepolymer contains a polyester acrylate system compound; and said light having the first wavelength is far-ultraviolet light, the first wavelength being 254 nm.

The irradiated light can be substantially absorbed in and around the surface of the mixture film to cure the photosensitive prepolymer, which further facilitates the selective formation of the protection resin film on the surface of the mixture film, and the control of the thickness of the protection resin film with very high precision.

The invention of claim 187 is the method for fabricating a resin/liquid crystal composite of claim 183, wherein the first wavelength is within an absorption band region in absorption curves of said photosensitive prepolymer; said light having the second wavelength has smaller absorbance of said photosensitive prepolymer than said light having the first wavelength; and said light having the third wavelength has smaller absorbance of said photosensitive prepolymer than said light having the first wavelength and larger absorbance than said light having the second wavelength.

The light having the first wavelength, which hardly passes through the mixture film and is almost entirely absorbed in and around the surface of the mixture film, facilitates the selective formation of the protection resin film onto the surface of the mixture film. The light having the second wavelength, which is easy to reach the vicinity of the substrate in the mixture film, facilitates the secure formation of the supporting member between the first resin film and the second resin film. The light having the third wavelength, which passes through the already formed protection resin film and the light-transmitting substrate relatively easily but is likely to be absorbed in the portions of the mixture film that are in the vicinity of the protection resin film and in the vicinity of the substrate side, facilitates the formation of the first resin film inside the protection resin film and of the second resin film onto the substrate-side surface of the mixture film.

The invention of claim 188 is the method for fabricating a resin/liquid crystal composite of claim 187, wherein said liquid crystal-prepolymer mixture film further contains one of a polymerization initiator and a sensitizer; in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition; the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the second resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the second resin film onto the substrate-side surface of the mixture film by extracting the photosensitive polymer in the reciprocity law failure condition.

The invention of claims 189 and 190 is the method for fabricating a resin/liquid crystal composite of claim 182, wherein said liquid crystal layer contains nematic liquid crystal, and more specifically, tolane system nematic liquid crystal.

The use of this type of liquid crystal facilitates the dissociation of the photosensitive prepolymer and the liquid crystal containing the dichroic dye from each other by irradiating the mixture film with the light, so that the photosensitive prepolymer can be easily cured to form the first and second resin films.

The invention of claims 191 and 192 is the method for fabricating a resin/liquid crystal composite of claim 188, wherein one of said polymerization initiator and said sensitizer is a benzoyl system compound, and more specifically, 2,2-dimethoxy- 1,2-diphenylethane- 1 -one.

The presence of these materials increases the efficiency of the curing of the photosensitive prepolymer, so that the hardening rate of the photosensitive prepolymer can be increased to further simplify the fabrication process.

The invention of claim 193 is the method for fabricating a resin/liquid crystal composite of claim 188, wherein said photosensitive prepolymer contains a polyester acrylate system material; said liquid crystal layer which contains said dichroic dye contains tolane system nematic liquid crystal; said liquid crystal-prepolymer mixture film further contains 2,2-dimethoxy- 1, 2-diphenylethane- 1-one; said light having the first wavelength is far-ultraviolet light, the first wavelength being 254 nm; said light having the second wavelength is ultraviolet light, the second wavelength being 365 nm; and said light having the third wavelength is ultraviolet light, the third wavelength being 313 nm.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the second resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the second resin film onto the substrate-side surface of the mixture film by extracting the photosensitive polymer in the reciprocity law failure condition.

The invention of claim 194 is a liquid crystal display device comprising: a substrate-side resin film made from a photosensitive prepolymer which has been polymerized, said substrate-side resin film being formed onto a surface of a substrate at least having a pixel electrode and a switching element connected with the pixel electrode; a counter resin film made from said photosensitive prepolymer which has been polymerized, said counter resin film being arranged to face said substrate-side resin film; and a liquid crystal layer containing a dichroic dye, said liquid crystal layer being sandwiched between said substrate-side resin film and said counter resin film, said substrate-side resin film, said counter resin film and said liquid crystal layer being formed integrally.

The liquid crystal which contains the dichroic dye and is sandwiched between the substrate-side resin film formed on the single substrate and the counter resin film makes the device lighter in weight than a liquid crystal display device in which the liquid crystal containing a dichroic dye is sandwiched between a pair of substrates. The substrate-side resin film, the counter resin film and the liquid crystal layer, which are integrally formed to compose the liquid crystal display device, are in absolute contact with each other to prevent the entry of foreign particles such as dusts between adjacent components. This eliminates wasted space between the substrate-side resin film and the liquid crystal layer and between the liquid crystal layer and the counter resin film allowing the device to have the thinnest possible thickness, thereby to achieve a lightweight, slim liquid crystal display device with a bright display.

Making the substrate-side resin film and the counter resin film thinner allows the alignment of the liquid crystal to be controlled at a low voltage, and also allows the liquid crystal display device to have wider viewing angle properties.

The invention of claim 195 is the liquid crystal display device of claim 194 further comprising a counter electrode arranged on a side of said counter resin film that is opposite said liquid crystal layer, wherein said counter electrode, said substrate-side resin film, said counter resin film and said liquid crystal layer compose a display layer, and a plurality of display layers having respective liquid crystal layers are formed, said respective liquid crystal layers containing different dichroic dyes from each other.

In this structure, the absence of the color filter realizes a bright display, making it easier to provide a color liquid crystal display device. In addition, the liquid crystal display device has wider viewing angle properties because it can be thinner than conventional devices.

The invention of claim 196 is the liquid crystal display device of claim 195, wherein said plurality of display layers have a three-layered structure and said dichroic dyes contained in said respective liquid crystal layers are yellow, magenta and cyan.

In this structure, a color liquid crystal display device can be easily realized.

The invention of claims 197 through 199 is the liquid crystal display device of claims 194 through 196 further comprising a supporting member formed between said substrate-side resin film and said counter resin film in a manner to be integral therewith.

In this structure, the supporting member supporting the space between the substrate-side resin film and the counter resin film is formed integrally with these films, so that the space can be kept securely in a stable manner. The supporting member also functions to reinforce the structure of the liquid crystal display device integrally with the substrate-side resin film and the counter resin film.

Furthermore, the substrate-side resin film, the counter resin film and the supporting member are formed integrally without seam, so that the liquid crystal layer can have the thinnest possible thickness, thereby realizing a liquid crystal display device which is lighter in weight, more compact and has a stable display.

The invention of claim 200 is the liquid crystal display device of claim 194, wherein said substrate-side resin film and said counter resin film contain a polyester acrylate system compound.

The use of the polyester acrylate system resin having excellent transparency provides the liquid crystal display device with excellent transparency against light in a visible region and a bright display.

The invention of claims 201 and 202 is the liquid crystal display device of claim 194, wherein said liquid crystal layer contains nematic liquid crystal, and more specifically, tolane system nematic liquid crystal.

The use of this type of liquid crystal realizes an inexpensive liquid crystal display device which performs stable operations.

The invention of claims 203 through 205 is the liquid crystal display device of claim 194, wherein at least one of said counter resin film and said substrate-side resin film is formed by photo-curing said photosensitive prepolymer with irradiation of polarized light to align molecules of said photosensitive prepolymer in a direction.

In this structure, the liquid crystal molecules in the liquid crystal layer are aligned in a predetermined direction when no electric field is applied, and the dichroic dye contained in the liquid crystal layer is aligned parallel to the liquid crystal molecules. Therefore, by applying electric field or using another method, the direction of the dichroic dye against incident light can be easily controlled in accordance with the alignment of the liquid crystal molecules in the liquid crystal layer so as to further improve the contrast.

The invention of claim 206 is the liquid crystal display device of claim 196, wherein of counter electrodes included in said plurality of display layers, an outermost counter electrode is made from a light-reflecting material.

This feature realizes a lightweight, slim and color liquid crystal display device of reflection type.

The invention of claim 207 is the liquid crystal display device of claim 196, wherein said counter electrode contained in each of said plurality of display layers is made from a transparent conductive film.

This feature realizes a lightweight, slim and color liquid crystal display device of transmission type.

The invention of claim 208 is a method for fabricating a liquid crystal display device comprising: a substrate-side resin film made from a photosensitive prepolymer which has been polymerized, said substrate-side resin film being formed on a surface of a light-transmitting substrate having a pixel electrode and a switching element connected with the pixel electrode; a counter resin film made from said photosensitive prepolymer which has been polymerized, said counter resin film being arranged to face said substrate-side resin film; and a liquid crystal layer sandwiched between said substrate-side resin film and said counter resin film, said liquid crystal layer containing a dichroic dye, said substrate-side resin film, said counter resin film and said liquid crystal layer being formed integrally, said method comprising the steps of: forming the pixel electrode and the switching element connected with the pixel electrode onto said light-transmitting substrate; forming a liquid crystal-prepolymer mixture film consisting of said photosensitive prepolymer, said dichroic dye and liquid crystal onto a surface of said substrate having the pixel electrode and the switching element; forming a counter resin film on a surface of said liquid crystal-prepolymer mixture film by irradiating the surface of said liquid crystal-prepolymer mixture film with light having a wavelength and intensity capable of selectively photo-curing only the surface of said liquid crystal-prepolymer mixture film, and by extracting said liquid crystal and said dichroic dye existing in the surface of said liquid crystal-prepolymer mixture film to said substrate side; and forming the substrate-side resin film onto said liquid crystal-prepolymer mixture film on said substrate side so as to face said counter resin film by photo-curing said photosensitive prepolymer remaining in said liquid crystal-prepolymer mixture film with irradiation of light from a rear side of said substrate, and by extracting dissociated liquid crystal and dichroic dye between said counter resin film and said substrate-side resin film.

The counter resin film and the substrate-side resin film are formed by the curing of the photosensitive prepolymer contained in the mixture film, while the liquid crystal layer is made from the liquid crystal and the dichroic dye remaining in the mixture film. This eliminates the need for the time-consuming liquid crystal filling process, thereby to simplify the fabrication process and to reduce the fabrication cost. Furthermore, the absence of the liquid crystal filling process realizes the quick formation of a liquid crystal layer even when the liquid crystal display device has a large area.

In addition, the liquid crystal which contains the dichroic dye and is sandwiched between the counter resin film and the substrate-side resin film formed on the single substrate makes the device lighter in weight than a liquid crystal display device in which the liquid crystal containing the dichroic dye is sandwiched between a pair of substrates. The substrate-side resin film, the counter resin film and the liquid crystal layer, which are integrally formed to compose the liquid crystal display device, are in absolute contact with each other to prevent the entry of foreign particles such as dusts between adjacent components. This eliminates wasted space between the substrate-side resin film and the liquid crystal layer and between the liquid crystal layer and the counter resin film allowing the device to have the thinnest possible thickness, thereby to achieve a lightweight, slim liquid crystal display device with a bright display.

The invention of claim 209 is a method for fabricating a liquid crystal display device comprising: a substrate-side resin film made from a photosensitive prepolymer which has been photo-cured, said substrate-side resin film being formed onto a surface of a light-transmitting substrate having a pixel electrode and a switching element connected with the pixel electrode formed thereon; a counter resin film made from said photosensitive prepolymer which has been photo-cured, said counter resin film being arranged to face said substrate-side resin film; and a liquid crystal layer sandwiched between said substrate-side resin film and said counter resin fun, said liquid crystal layer containing a dichroic dye, said substrate-side resin film, said counter resin film and said liquid crystal layer being formed integrally, said method comprising the steps of: forming the pixel electrode and the switching element connected with the pixel electrode onto said light-transmitting substrate; forming a liquid crystal-prepolymer mixture film consisting of said photosensitive prepolymer, said dichroic dye and liquid crystal onto a surface of said substrate; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said dichroic dye and said liquid crystal existing in and around the surface of said liquid crystal-prepolymer mixture film to said substrate side; forming the substrate-side resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said dichroic dye and said liquid crystal existing in and around the substrate-side surface of said liquid crystal-prepolymer mixture film to said protection resin film side; and forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength from said protection resin film side, and by forming dissociated dichroic dye and liquid crystal between the first resin film and the substrate-side resin film.

The counter resin film and the substrate-side resin film are formed by the curing of the photosensitive prepolymer contained in the mixture film, while the liquid crystal layer is made from the liquid crystal remaining in the mixture film. This eliminates the need for the time-consuming liquid crystal filling process, thereby to simplify the fabrication process and to reduce the fabrication cost.

In addition, the mixture film can be protected between the substrate and the protection resin film formed on the film. The protection resin film prevents the surface of the mixture film from having asperities or becoming wavy due to contact during the fabrication process, which make it possible that the photo mask or the polarizer can be laid on the surface of the protection resin film to be irradiated by the light.

The invention of claim 210 is a method for fabricating a liquid crystal display device comprising: a substrate-side resin film made from a photosensitive prepolymer which has been photo-cured, said substrate-side resin film being formed onto a surface of a light-transmitting substrate having a pixel electrode and a switching element connected with the pixel electrode formed thereon; a counter resin film made from said photosensitive prepolymer which has been photo-cured, said counter resin film being arranged to face said substrate-side resin film; and a liquid crystal layer sandwiched between said substrate-side resin film and said counter resin film, said liquid crystal layer containing a dichroic dye, said substrate-side resin film, said counter resin film and said liquid crystal layer being formed integrally, said method comprising the steps of: forming the pixel electrode and the switching element connected with the pixel electrode onto said light-transmitting substrate; forming a liquid crystal-prepolymer mixture film consisting of said photosensitive prepolymer, said dichroic dye and liquid crystal onto a surface of said substrate; forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer in and around the surface of said liquid crystal-prepolymer mixture film selectively, and by extracting said dichroic dye and said liquid crystal existing in and around the surface of said liquid crystal-prepolymer mixture film to said substrate side; forming a supporting member made from said photosensitive prepolymer photo-cured in a desired form by putting a mask in a desired pattern onto said protection resin film and by forming said liquid crystal-prepolymer mixture film with light having a second wavelength through said mask; forming the substrate-side resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate through a polarizer, and by extracting said dichroic dye and said liquid crystal existing in and around the substrate-side surface of said liquid crystal-prepolymer mixture film to said protection resin film side; and forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength from said protection resin film side through a polarizer laid on said protection resin film, further forming said counter resin film from said protection resin film and the first resin film by extracting dissociated dichroic dye and liquid crystal between the first resin film and the substrate-side resin film.

The formation of the supporting member by the photosensitive prepolymer in the mixture film simplifies the fabrication process. In addition, the supporting member, which is formed integrally with the first and second resin films, can keep the space between these films securely in a stable manner, and also function to reinforce the structure of the liquid crystal display device. As a result, the obtained liquid crystal display device can be further lighter in weight and more compact and rugged.

The counter resin film and the substrate-side resin film are formed by the curing of the photosensitive prepolymer contained in the mixture film, while the liquid crystal layer is made from the liquid crystal remaining in the mixture film. This eliminates the need for the time-consuming liquid crystal filling process, thereby to simplify the fabrication process and to reduce the fabrication cost.

The supporting member is made from the photosensitive prepolymer contained in the mixture film to simplify the fabrication process. The supporting member, which is formed integrally with the counter resin film (protection resin film and first resin film) and the substrate-side resin film (second resin film), secures the space between these resin films in a stable manner, and also functions to reinforce the structure of the liquid crystal display device. As a result, the obtained liquid crystal display device is lighter in weight, more compact and rugged.

In the first resin film formation process and the supporting member formation process, the surface of the mixture film is protected by the protection resin film, which make it possible that the photo mask or the polarizer can be laid directly on the surface of the protection resin film to be irradiated by the light.

In the first resin film formation process and the substrate-side resin film formation process, the irradiation of the light having the third wavelength through the polarizer makes the molecules of the first and substrate-side resin films be polymerized with directivity so as to provide the molecules with the alignment function for aligning the liquid crystal molecules in the predetermined direction. This eliminates the need for the rubbing treatment, thereby simplifying the fabrication process.

The invention of claim 211 is the method for fabricating a liquid crystal display device of 209, wherein
the first wavelength is within an absorption band region in absorption curves of said photosensitive prepolymer; and
said light having the third wavelength has smaller absorbance of said photosensitive prepolymer than said light having the first wavelength.

The light having the first wavelength, which hardly passes through the mixture film and is almost entirely absorbed in and around the surface of the mixture film, facilitates the formation of the protection resin film onto the surface of the mixture film. The light having the third wavelength, which passes through the already formed protection resin film and the light-transmitting substrate relatively easily but is likely to be absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film.

The invention of claim 212 is the method for fabricating a liquid crystal display device of 211, wherein said irradiation of said light having the first wavelength and said light having the third wavelength is performed in a reciprocity law failure condition.

The irradiation of the light having the first wavelength in the reciprocity law failure condition promotes the curing of the photosensitive prepolymer on and around the surface of the mixture film to facilitate the selective formation of the protection resin film onto the surface of the mixture film.

The irradiation of the light having the third wavelength in the reciprocity law failure condition promotes the curing of the photosensitive prepolymer in the portion of the mixture film that is in the vicinity of the protection resin film to form the first resin film there, and also facilitates the curing of the photosensitive prepolymer in the portion of the mixture film that is in the vicinity of the substrate to form the substrate-side resin film there.

The invention of claim 213 is the method for fabricating a liquid crystal display device of 212, wherein said photosensitive prepolymer contains a polyester acrylate system compound; and said light having the first wavelength is far-ultraviolet light, the first wavelength being 254 nm.

The irradiated light can be substantially absorbed in and around the surface of the mixture film to cure the photosensitive prepolymer, which further facilitates the selective formation of the protection resin film on the surface of the mixture film, and the control of the thickness of the protection resin film with very high precision.

The invention of claim 214 is the method for fabricating a liquid crystal display device of 210, wherein the first wavelength is within an absorption band region in absorption curves of said photosensitive prepolymer; said light having the second wavelength has smaller absorbance of said photosensitive prepolymer than said light having the first wavelength; and said light having the third wavelength has smaller absorbance of said photosensitive prepolymer than said light having the first wavelength and larger absorbance than said light having the second wavelength.

The light having the first wavelength, which hardly passes through the mixture film and is almost entirely absorbed in and around the surface of the mixture film, facilitates the selective formation of the protection resin film onto the surface of the mixture film. The light having the second wavelength, which is easy to reach the vicinity of the substrate in the mixture film, facilitates the secure formation of the supporting member between the counter resin film and the substrate-side resin film. The light having the third wavelength, which passes through the already formed protection resin film and the light-transmitting substrate relatively easily but is likely to be absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film.

The invention of claim 215 is the method for fabricating a liquid crystal display device of 214, wherein said liquid crystal-prepolymer mixture film further contains one of a polymerization initiator and a sensitizer; in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition; the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the substrate-side resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film by extracting the photosensitive polymer in the reciprocity law failure condition.

The invention of claims 216 and 217 is the method for fabricating a liquid crystal display device of 209, wherein said liquid crystal layer containing said dichroic dye contains nematic liquid crystal, and more specifically, tolane system nematic liquid crystal.

The liquid crystal of this type facilitates the dissociation of the photosensitive prepolymer and the liquid crystal containing the dichroic dye from each other by irradiating the mixture film with the light, so that the photosensitive prepolymer can be easily polarization hardened to form the counter resin film and the substrate-side resin film. In addition, it becomes possible to fabricate a liquid crystal device performing stable operations with the use of the fairly available liquid crystal.

The invention of claims 218 and 219 is the method for fabricating a liquid crystal display device of 215, wherein one of said polymerization initiator and said sensitizer is a benzoyl system compound, and more specifically,
2,2-dimethoxy- 1,2-diphenylethane-1-one.

The presence of these materials increases the efficiency of the curing of the photosensitive prepolymer, so that the hardening rate of the photosensitive prepolymer can be increased to further simplify the fabrication process.

The invention of claim 220 is the method for fabricating a liquid crystal display device of 215, wherein said photosensitive prepolymer contains a polyester acrylate system material; said liquid crystal layer containing said dichroic dye contains tolane system nematic liquid crystal and one of an azo system dye, a perylene system dye and an anthraquinone system dye; said liquid crystal-prepolymer mixture film further contains 2,2- dimethoxy- 1,2- diphenylethane- 1 -one; said light having the first wavelength is far-ultraviolet light, the first wavelength being 254 nm; said light having the second wavelength is ultraviolet light, the second wavelength being 365 nm; and said light having the third wavelength is ultraviolet light, the third wavelength being 313 nm.

The light having the first wavelength, which hardly passes through the mixture film and is substantially absorbed in and around the surface of the mixture film, facilitates the selective formation of the protection resin film onto the surface of the mixture film by curing the photosensitive polymer in the reciprocity law failure condition. The light having the second wavelength, which is easy to reach the vicinity of the substrate in the mixture film, facilitates the secure and efficient formation of the supporting member between the first resin film and the substrate-side resin film in the reciprocity law condition. The light having the third wavelength, which passes through the already formed protection resin film and the light-transmitting substrate relatively easily but is easily absorbed in the portions of the mixture film that are in the vicinity of the protection resin film and in the vicinity of the substrate, facilitates the formation of the first resin film inside the protection resin film and of the substrate-side resin film onto the substrate-side surface of the mixture film by extracting the photosensitive polymer in the reciprocity law failure condition.

The invention of claim 221 is the method for fabricating a liquid crystal display device of 208 further comprising the step of forming a counter electrode onto a side of said counter resin film that is opposite said liquid crystal layer.

This feature realizes a lightweight slim liquid crystal display device.

The invention of claim 222 is the method for fabricating a liquid crystal display device of 221, wherein in said counter electrode formation step, said counter electrode is provided by forming a transparent conductive film onto the side of said counter resin film that is opposite said liquid crystal layer containing said dichroic dye.

This feature realizes a lightweight slim liquid crystal display device of transmission type.

The invention of claim 223 is the method for fabricating a liquid crystal display device of 221, wherein in said counter electrode formation step, said counter electrode is provided by forming a light-reflecting film onto the side of said counter resin film that is opposite said liquid crystal layer.

This feature realizes a lightweight slim liquid crystal display device of reflection type.

The invention of claim 224 is a liquid crystal display device comprising: a substrate-side resin film made from a photosensitive prepolymer which has been photo-cured, said substrate-side resin film being formed on a surface of a substrate having one of a pixel signal electrode and a scan electrode thereon; a counter resin film made from said photosensitive prepolymer which has been photo-cured, said counter resin film having an other one of the pixel signal electrode and the scan electrode thereon and being formed to face said substrate-side resin film; and a liquid crystal layer sandwiched between said substrate-side resin film and said counter resin film, said liquid crystal layer containing a dichroic dye, said substrate-side resin film, said counter resin film and said liquid crystal layer being formed integrally.

The liquid crystal which contains the dichroic dye and is sandwiched between the counter resin film and the substrate-side resin film formed on the single substrate makes the device lighter in weight than a liquid crystal display device in which the liquid crystal containing a dichroic dye is sandwiched between a pair of substrates. As a result, a liquid crystal display device of simple-matrix type suitable for portable appliances can be obtained. The substrate-side resin film, the counter resin film and the liquid crystal layer, which are integrally formed to compose the liquid crystal display device, are in absolute contact with each other to prevent the entry of foreign particles such as dusts between adjacent components. This eliminates wasted space between the substrate-side resin film and the liquid crystal layer and between the liquid crystal layer and the counter resin film allowing the device to have the thinnest possible thickness, thereby to achieve a lightweight slim liquid crystal display device with a bright display.

### BRIEF DESCRIPTION OF THE DRAWINGS

Figure 1 shows a vertical cross sectional view of the transmission TN liquid crystal display device of Embodiment 1-1 of the first invention group.
Figures 2 (a)-2 (d) show fabrication processes of the liquid crystal display device of Embodiment 1-1: Figure 2 (a) shows the process of forming the TFTs and the pixel electrodes on the substrate, Figure 2 (b) shows the process of forming the alignment film on the substrate, Figure 2 (c) shows the process of applying the liquid crystal-prepolymer mixture solution on the surface of the substrate and Figure 2 (d) shows the process of forming the protection resin film by irradiating the first light.
Figures 3 (e)-3 (g) show fabrication processes of the liquid crystal display device of Embodiment 1-1: Figure 3 (e) shows the process of forming the supporting member by irradiating the second light, Figure 3 (f) shows the process of forming the inner-side resin film by irradiating the third light and Figure 3 (g) shows the process of forming the counter electrode and the color filter.
Figure 4 is a graph showing the visible and ultraviolet spectral absorption characteristics of the liquid crystal-prepolymer mixture solution of Embodiment 1-1.
Figure 5 shows a vertical cross sectional view of the reflective TN liquid crystal display device of Embodiment 1-2.
Figure 6 shows a vertical cross sectional view of the transmission IPS liquid crystal display device of Embodiment 1-3.
Figure 7 shows a vertical cross sectional view of the reflective IPS liquid crystal display device of Embodiment 1-4.
Figure 8 shows a vertical cross sectional view of the liquid crystal device of Embodiment 1-5.
Figure 9 shows a vertical cross sectional view of the transmission TN liquid crystal display device of Embodiment 2-1 of the second invention group.
Figures 10 (a)-10 (c) show fabrication processes of the liquid crystal display device of Embodiment 2-1: Figure 10 (a) shows the process of forming the TFTs and the pixel electrodes on the substrate, Figure 10 (b) shows the process of applying the liquid crystal-prepolymer mixture solution onto the surface of the substrate and Figure 10 (c) shows the process of forming the protection resin film by irradiating the first light.
Figures 11 (d) and 11(e) show fabrication processes of the liquid crystal display device of Embodiment 2-1: Figure 11 (d) shows the process of putting the photo mask onto the protection resin film and Figure 11 (e) shows the process of forming the supporting member by irradiating the second light.
Figures 12 (f) and 12 (g) show fabrication processes of the liquid crystal display device of Embodiment 2-1: Figure 12 (f) shows the process of forming the substrate-side resin film by irradiating the third light and Figure 12 (g) shows the process of forming the first resin film inside the protection resin film by irradiating the third light.
Figure 13 (h) shows the fabrication process of forming the counter electrode and the color filter.
Figure 14 is a graph showing the visible and ultraviolet spectral absorption characteristics of the liquid crystal-prepolymer mixture solution of Embodiment 2-1.
Figure 15 shows a vertical cross sectional view of the reflective TN liquid crystal display device of Embodiment 2-2.
Figure 16 shows a vertical cross sectional view of the transmission IPS liquid crystal display device of Embodiment 2-3.
Figure 17 shows a vertical cross sectional view of the reflective IPS liquid crystal display device of Embodiment 2-4.
Figure 18 shows a vertical cross sectional view of the blind glass of Embodiment 2-5.
Figure 19 shows a vertical cross sectional view of the transmission liquid crystal display device of Embodiment 3-1 of the third invention group.
Figures 20 (a)-20 (c) show fabrication processes of the liquid crystal display device of Embodiment 3-1: Figure 20 (a) shows the process of forming the TFTs and the pixel electrodes onto the substrate, Figure 20 (b) shows the process of applying the liquid crystal-prepolymer mixture solution onto the surface of the substrate and Figure 20 (c) shows the process of forming the protection resin film by irradiating the first light.
Figures 21 (d)-21 (e) show fabrication processes of the liquid crystal display device of Embodiment 3-1: Figure 21 (d) shows the process of putting the photo mask onto the protection resin film and Figure 21 (e) shows the process of forming the supporting member by irradiating the second light.
Figures 22 (f) and 22 (g) show fabrication processes of the liquid crystal display device of Embodiment 3-1: Figure 22 (f) shows the process of forming the substrate-side resin film by irradiating the third light and Figure 22 (g) shows the process of forming the first resin film inside the protection resin film by irradiating the third light.
Figures 23 (h) and 23 (i) show fabrication processes of the liquid crystal display device of Embodiment 3-1: Figure 23 (h) shows the process of forming the counter electrode and Figure 23 (i) shows the process of realizing the three-layered structure by performing the processes from Figure 23 (a) to Figure 23 (h) twice.
Figure 24 is a graph showing the visible and ultraviolet spectral absorption characteristics of the liquid crystal-prepolymer mixture solution of Embodiment 3-1.
Figure 25 shows a vertical cross sectional view of the reflective liquid crystal display device of Embodiment 3-2.
Figure 26 shows a vertical cross sectional view of the blind glass of Embodiment 3-3.

### BEST MODE FOR CARRYING OUT THE INVENTION

### (1) Embodiments of the first invention group

The first invention group of the present invention will be described as follows based on the drawings.

### [EMBODIMENT 1-1]

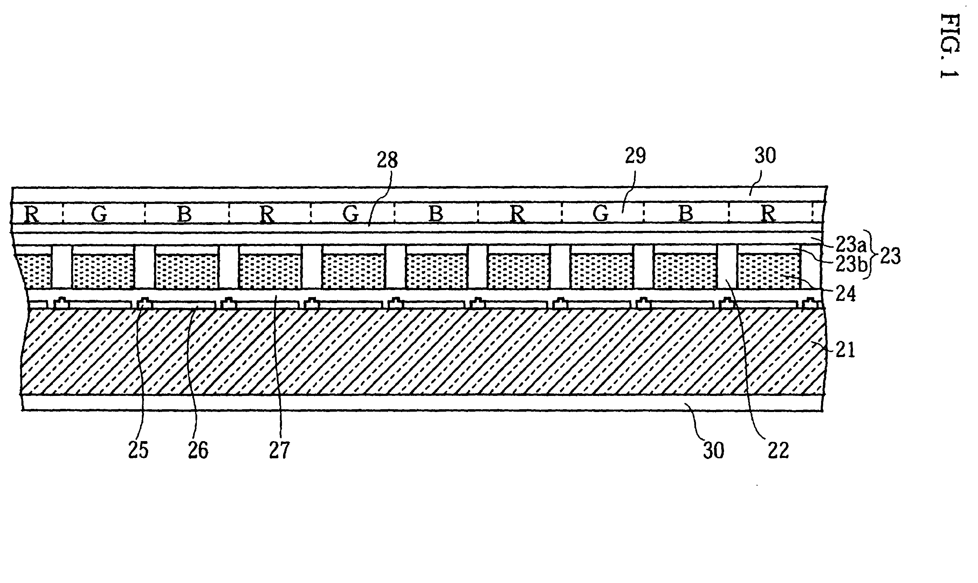

As Embodiment 1-1 of the present invention, a transmission TN liquid crystal display device driven by TFTs will be described as follows based on Figures 1 through 4.

As shown in Figure 1, this liquid crystal display device comprises a glass substrate 21, a supporting member 22 in the form of division walls provided on the substrate 21, an about 1.2 µm-thick resin film 23 supported by the member 22 and a liquid crystal layer 24 having liquid crystal sandwiched between the glass substrate 21 and the resin film 23. On the substrate 21, there are TFTs 25, pixel electrodes 26 made of an indium-tin oxide (ITO) transparent conductive film and an alignment film 27. On the resin film 23, there are a counter electrode 28 made of an ITO transparent conductive film having a sheet resistance of 50 to 100 Ω/□ and a color mosaic filter 29 composed of fine filters of red, green and blue. The liquid crystal display device further comprises a pair of polarizers 30, 30 arranged outside the glass substrate 21 and the color mosaic filter 29.

The supporting member 22 and the resin film 23 are formed by curing a photo-polymeric monomer or an oligomer as photosensitive prepolymer by ultraviolet radiation. The resin film 23 is composed of a protection resin film 23a and an inner-side resin film 23b formed by individual ultraviolet radiation. The ultraviolet radiation used to form the inner-side resin film 23b is polarized in a predetermined direction so as to provide a TN liquid crystal display device having liquid crystal molecules 90° twisted between the glass substrate 21 and the resin film 23.

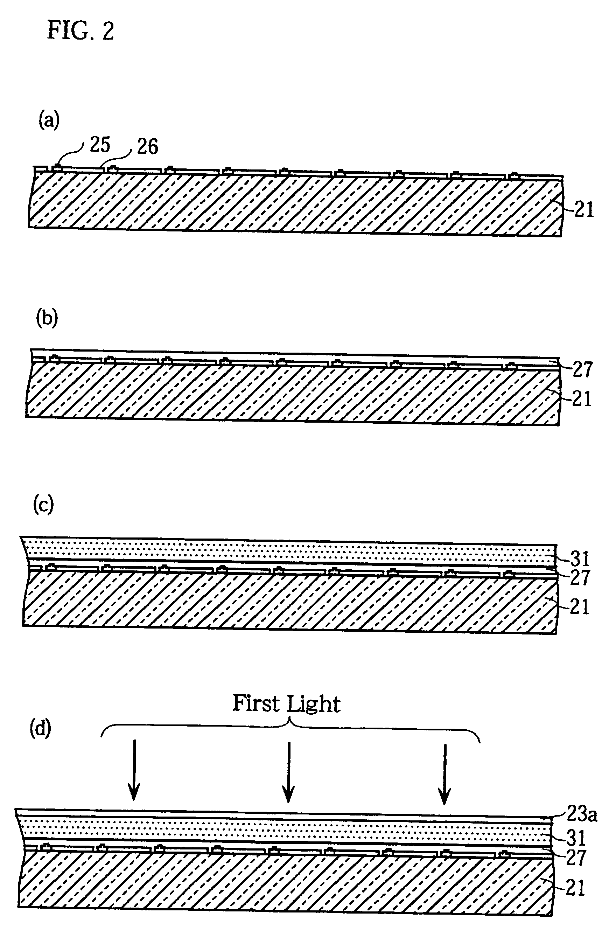

This liquid crystal display device will be fabricated as follows.
(1) As shown in Figure 2 (a), the TFTs 25 and the pixel electrodes 26 are formed on the glass substrate 21.
(2) As shown in Figure 2 (b), a polyimide resin for an alignment film is applied as thick as 100 nm or so by using a spinner and heated to harden for about 20 minutes at 250°C. Then, the resin is rubbed in the predetermined direction to provide the alignment film 27.
(3) As shown in Figure 2 (c), a liquid crystal-prepolymer mixture solution 31 is applied as thick as 6 µ m or so over the entire surface of the alignment film 27 by using a spinner. The mixture solution 31 is a mixture of a photo-polymeric monomer or an oligomer as photosensitive prepolymer, a polymerization initiator or a sensitizer to improve their reactivity and nematic liquid crystal. To be more specific, the mixture solution 31 can be composed of:
   (a) multi-functional polyester acrylate (produced by Dainippon Ink and Chemicals, Inc.): 20%,
   (b) IRGACURE 651 (produced by Chiba-Geigy): 2% (benzoyl system 2,2-dimethoxy-1,2-diphenylethane- 1-one), and
   (c) tolane system nematic liquid crystal (KT450:Dainippon Ink and Chemicals, Inc.):78%.

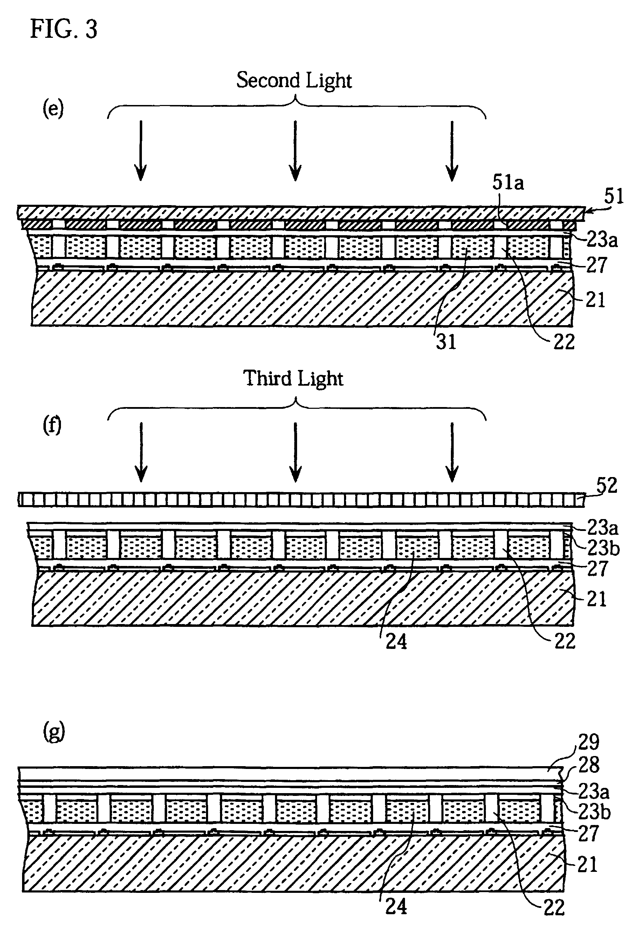

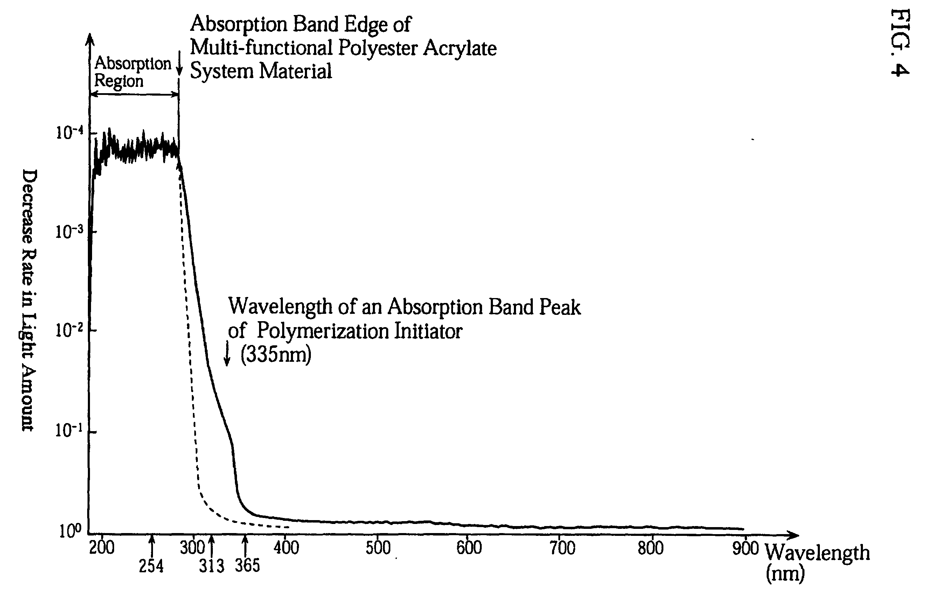

   This is not the only possible materials or mixture ratio of the mixture solution 31. For example, the mixture ratio of the multi-functional polyester acrylate can be set in accordance with the thickness of the resin film 23. Although the liquid crystal may not be dispersed in the mixture solution depending on the mixture ratio, there is no problem as long as the mixture solution is homogeneous.
   The liquid crystal-prepolymer mixture solution 31 can have visible and ultraviolet spectral absorption characteristics (absorption curves) shown in the graph of Figure 4. The graph indicates that the mixture solution 31 has an absorption band region where the absorbance is extremely high against light having a wavelength of about 300 nm or below. In the graph, the solid and broken lines indicate absorption curves before and after polymerization, respectively.
(4) As shown in Figure 2 (d), the entire surface of the liquid crystal-prepolymer mixture solution 31 is irradiated with first light having a wavelength of 254 nm and an intensity of 0.5 mW/cm² at around 300 mJ/cm², thereby curing the polyester acrylate contained in the mixture solution 31 only by about 50% in and around the surface of the mixture solution 31, so as to form the protection resin film 23a of about 0.5 µ m thick.
   The wavelength (254 nm) of the first light is in the absorption band region (shorter than the longest wavelength in the absorption band region) in the absorption curves of multi-functional polyester acrylate system material. The first light hardly passes through the liquid crystal-prepolymer mixture solution 31 and is absorbed in and around its surface. Since the first light has very low intensity (in the reciprocity law failure condition), the polyester acrylate contained in the mixture solution 31 is dissociated therefrom to extract and cure so as to provide the protection resin film 23a.
(5) As shown in Figure 3 (e), a photo mask 51 having 5 µ m-lattice gaps 51a in the positions corresponding to the supporting member 22 is aligned with the liquid crystal-prepolymer mixture solution 31 and pressed thereonto. Under the condition that the mixture solution 31 is made to have a uniform thickness, second light having a wavelength of 365 nm and sufficiently high intensity (in the reciprocity law condition) is irradiated to form the supporting member 22 in the positions corresponding to the gaps 51a of the photo mask 51.
   The wavelength (365 nm) of the second light is in the region of longer wavelength than the absorption band peak wavelength (335 nm) in the absorption curves of the polymerization initiator (2,2-dimethoxy-1,2-diphenylethane-1-one). The second light is likely to pass through the liquid crystal-prepolymer mixture solution 31, so that the polyester acrylate contained in the mixture solution 31 is cured in its thickness direction or between the alignment film 27 and the protection resin film 23a so as to form the supporting member 22 in the form of division walls. The polymerization is done in a relatively short time because the second light has high intensity. Although such short time polymerization causes the liquid crystal contained in the liquid crystal-prepolymer mixture solution 31 to be dispersedly held in the supporting member 22, it does not affect the display operations of the liquid crystal display device in particular.
   The photo mask 51 with the lattice gaps 51a could be replaced, for example, by a photo mask with several tens µ m-square openings to provide a columnar supporting member.
(6) As shown in Figure 3 (f), the entire surface of the liquid crystal-prepolymer mixture solution 31 is irradiated with third light having a wavelength of 313 nm and intensity of 0.5 mW/cm² at 1000 mJ/cm² through the polarizer 52 so as to form the inner-side resin film 23b of about 0.7 µ m thick onto the protection resin film 23a on the glass substrate 21 side. In addition, the liquid crystal layer 24 is made from the liquid crystal remaining in the liquid crystal-prepolymer mixture solution 31.
   The wavelength (313 nm) of the third light lies between the absorption band peak wavelength in the absorption curves of the polymerization initiator and the longest wavelength in the absorption band region in the absorption curves of the above-mentioned polyester acrylate system photo-polymeric material. The third light is absorbed in and around the surface of the liquid crystal-prepolymer mixture solution 31 because it does not pass through the mixture solution 31 (non-hardened polyester acrylate) very well, although it passes through the protection resin film 23a (cured polyester acrylate) relatively well. Furthermore, the third light having very low intensity like the first light (in the reciprocity law failure condition) causes the polyester acrylate contained in the liquid crystal-prepolymer mixture solution 31 to be dissociated and extracted around the bottom surface of the protection resin film 23a and to be cured, thereby to provide the inner-side resin film 23b. The thorough extraction of the polyester acrylate contained in the liquid crystal-prepolymer mixture solution 31 allows the liquid crystal layer 24 to have liquid crystal of relatively high purity sandwiched between the alignment film 27 and the inner-side resin film 23b.
   The above-mentioned irradiation is done through the polarizer 52, so that the polyester acrylate is polymerized with directional molecules, thereby providing the inner-side resin film 23b with a feature as an alignment film for aligning the liquid crystal molecules in the vicinity of its surface in the polarizing direction of the polarizer 52. As a result, by setting the polarizing direction of the polarizer 52, for example, 90° apart from the rubbing direction of the alignment film 27, a TN liquid crystal cell structure is formed between the alignment film 27 and the resin film 23 in which the alignment direction of the liquid crystal molecules is twisted by 90°.
   When the prepolymer to be used has higher transmittance against light having a predetermined wavelength after having been cured, the inner-side resin film 23b can be formed effectively. Even when the transmittance of the material to be used hardly improves after polymerization, the inner-side resin film 23b could be formed in the same manner by using light having a wavelength which passes through the protection resin film 23a to a degree as the third light.
(7) As shown in Figure 3 (g), an ITO transparent conductive film (sheet resistance: 50 to 100 Ω/□) is deposited onto the resin film 23 to provide the counter electrode 28. Then, the color mosaic filter 29 of red, green and blue is formed onto the counter electrode 28 by a well-known method. Alternatively, the color mosaic filter 29 and the counter electrode 28 could be arranged in reverse order.
(8) Under these conditions, the polarizers 30, 30 are arranged outside the glass substrate 21 and the color mosaic filter 29 to provide the liquid crystal display device shown in Figure 1.

The inner-side resin film 23b is dispensable; however, the provision of this film facilitates the extraction of the polyester acrylate remaining in the liquid crystal-prepolymer mixture solution 31 so as to increase the purity of the liquid crystal contained in the liquid crystal layer 24.

The resin film could be formed after the supporting member 22 is formed; however, in general, forming the resin film first makes it easier to prevent the asperities of the film. When the processes (4) and (5) are performed in revere order, the mask alignment in the process (5) requires proximity exposure or projection exposure.

In forming the supporting member 22, a well-known printing, lithography, resist exposure and development or the like may be done before the application of the mixture solution 31 instead of curing the polyester acrylate contained in the liquid crystal-prepolymer mixture solution 31. In this case, the process (5) becomes unnecessary.

When the thickness of the liquid crystal layer 24 can be uniform by another spacer or the like, the provision of the supporting member 22 is not essential.

It is also possible that the surface of the mixture solution 31 gets in contact with material which stimulates the polymerization of the prepolymer such as an amine system activating reagent to form the resin film either before or in place of the exposure of the liquid crystal-prepolymer mixture solution 31.

When a liquid crystal display device has the homeotropic alignment structure instead of the TN structure, the formation of the inner-side resin film 23b does not require the irradiation of polarized light.

### [EMBODIMENT 1-2]

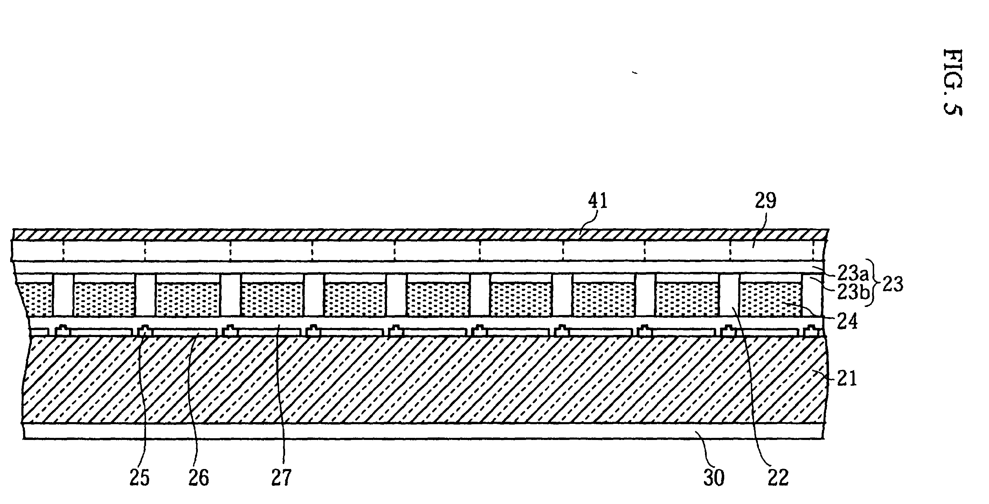

Besides the transmission TN liquid crystal display device shown in Embodiment 1-1, a reflective TN liquid crystal display device as shown in Figure 5 can be fabricated by forming the color mosaic filter 29 onto the resin film 23, and then depositing a reflection film 41 as a counter electrode onto the color mosaic filter 29. The film 41 is about 1 µ m thick and mainly composed of metallic aluminum (for example, 98% of aluminum and 2% of silicon). Another reflective TN liquid crystal display device can be provided by using a reflection film for the pixel electrodes 26 or by forming a reflection film outside the glass substrate 21.

### [EMBODIMENT 1-3]

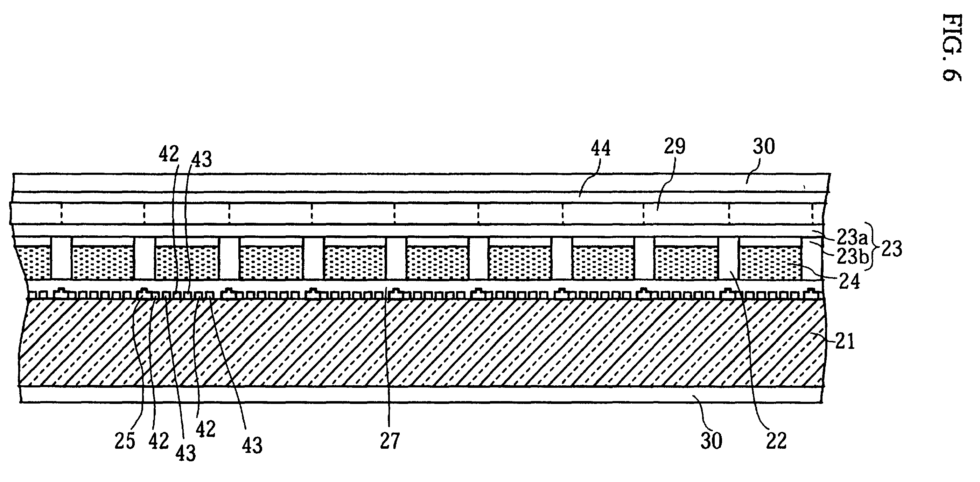

As shown in Figure 6, a transmission IPS liquid crystal display device can be fabricated by forming pixel electrodes 42 and common electrodes (counter electrodes) 43 onto the glass substrate 21. In this case, it is not essential to provide the inner-side resin film 23b having the alignment feature by the irradiation of polarized light; however, the feature can promote the alignment stability of the liquid crystal molecules. Since the alignment of the liquid crystal molecules is controlled by the electric field formed between the pixel electrodes 42 and the common electrodes 43, there is no need to provide the counter electrode 28 on the resin film 23. However, when a transparent electrode 44 having a sheet resistance of about 50 to 100 Ω/□ similar to the counter electrode 28 is provided onto the color mosaic filter 29 or the resin film 23 through deposition or another method, the alignment of the liquid crystal molecules is less affected by static electricity even if the resin film 23 is thin, which provides the IPS liquid crystal display device with excellent alignment stability.

### [EMBODIMENT 1-4]

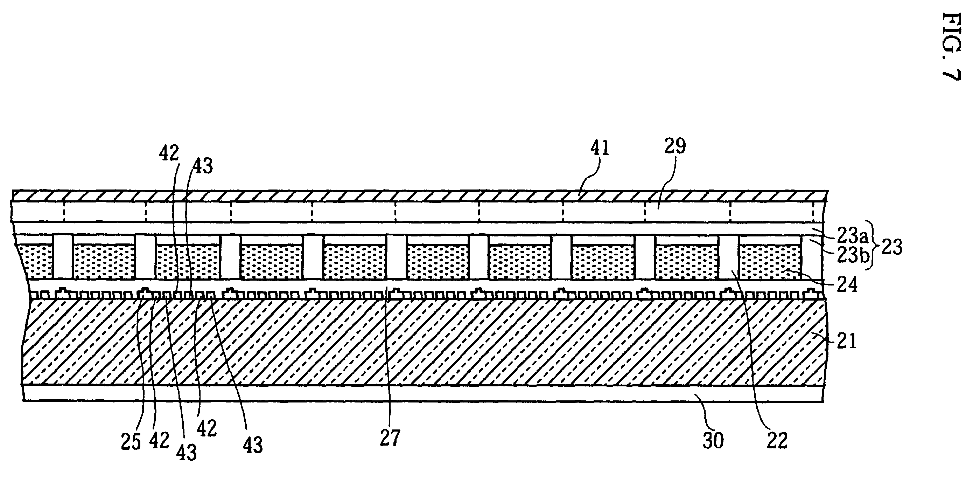

A reflective IPS liquid crystal display device can be realized by replacing the transparent electrode 44 of Embodiment 1-3 by the reflection film 41 shown in Figure 7 which is the same as the one in Embodiment 1-2.

Besides the TFT-driven liquid crystal display devices shown in Embodiments 1-1 to 1-4, a liquid crystal display device of simple matrix drive can be structured by providing scan signal lines and pixel signal lines at both sides of the liquid crystal layer 24 or on the glass substrate 21 and the resin film 23. Alternatively, a monochrome liquid crystal display device can be structured without providing the color mosaic filter 29.

### [EMBODIMENT 1-5]

The following is a description of a liquid crystal device to be applied to blind glass or a liquid crystal shutter which makes the alignment of the liquid crystal consistent across the entire surface of the substrate and has a light-control feature.

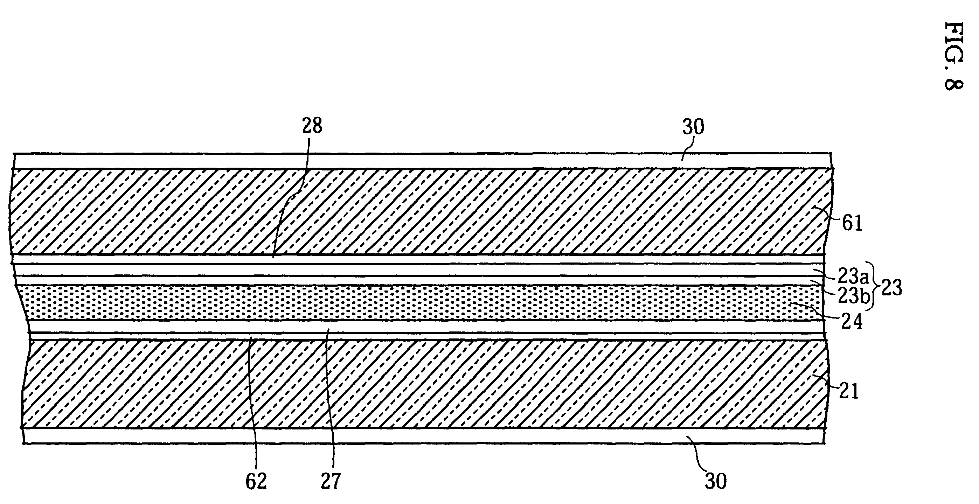

As shown in Figure 8, this liquid crystal device comprises a pair of glass substrates 21, 61 and a control electrode 62 lying across the entire surface of the substrate 21. On the electrode 62, the alignment film 27, the liquid crystal layer 24, and the resin film 23 and the counter electrode 28 which are formed in the same manner as in Embodiment 1-1 are provided in this order. Instead of providing the supporting member 22 of Embodiment 1-1, an unillustrated sealing member is used in the vicinity of the glass substrates 21, 61 to seal the liquid crystal and to fix the distance between the glass substrates 21, 61.

The liquid crystal device is fabricated as follows.
(11) In the same process as the formation of the pixel electrodes 26 of Embodiment 1-1, the control electrode 62 made of an ITO film is formed across the entire surface of the glass substrate 21.
(12) In the same manner as the process (2) of Embodiment 1-1, the alignment film 27 is formed.
(13) In the same manner as the process (3) of Embodiment 1-1, the liquid crystal-prepolymer mixture solution 31 is applied across the surface of the alignment film 27.
(14) In the same manner as the process (4) of Embodiment 1-1, the mixture solution 31 is irradiated with the first light having a wavelength of 254 nm and an intensity of 0.5 mW/cm² at around 300 mJ/cm², so as to form the protection resin film 23a.
(15) In the same manner as the process (6) of Embodiment 1-1, the liquid crystal-prepolymer mixture solution 31 is irradiated with the third light having a wavelength of 313 nm and an intensity of 0.5 mW/cm² at around 1000 mJ/cm² so as to form the inner-side resin film 23b, and also to make the liquid crystal layer 24 from the liquid crystal remaining in the mixture solution 31. In this manner, the liquid crystal layer 24 can be formed without filling liquid crystal; this feature can facilitate the fabrication of a liquid crystal device having a large area such as blind glass.
(16) In the same manner as the process (7) of Embodiment 1-1, the counter electrode 28 is formed.
(17) The glass substrate 61 is bonded onto the counter electrode 28.
(18) The polarizers 30, 30 are arranged at both sides of the glass substrates 21, 61, to finally provide the liquid crystal device shown in Figure 8.

In the present embodiment, the supporting member 22 may be provided like in Embodiment 1-1. In that case, the thickness of the liquid crystal layer 24 can be easily kept uniform without the provision of the glass substrate 61.

The glass substrate 61 could be replaced by a protection film or a resin substrate. Furthermore, the resin film 23 could be thickened to have a sufficient strength and stiffness.

When the alignment of the liquid crystal is controlled by light or temperature instead of the electric field, there is no need to provide the control electrode 62 or the counter electrode 28.

### (2) Embodiments of the second invention group

The second invention group of the present invention will be described as follows with reference to the drawings.

### [EMBODIMENT 2-1]

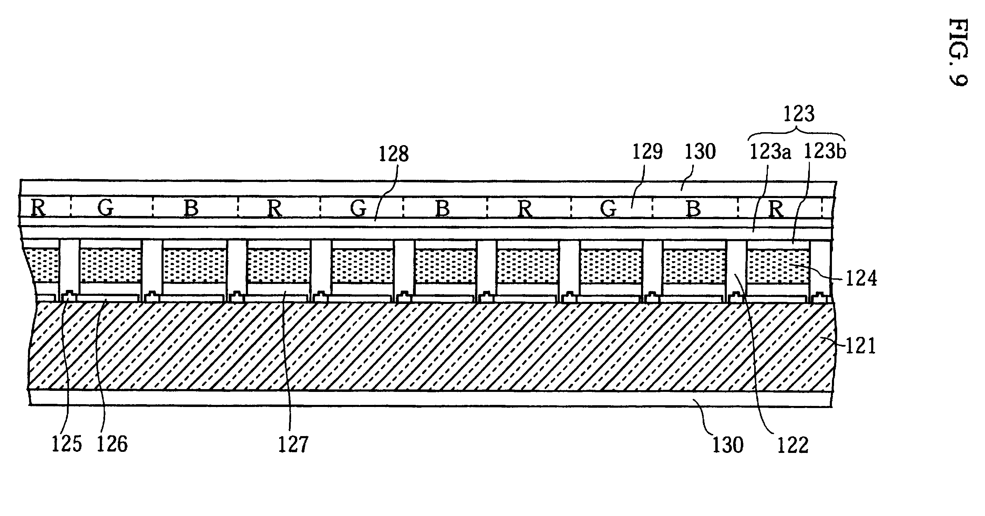

Embodiment 2-1 of the present invention will be described as follows with reference to Figures 9 through 14.

As Embodiment 2-1 of the present invention, a transmission TN liquid crystal display device which is driven by TFTs and uses a resin/liquid crystal composite will be described as follows.

As shown in Figure 9, this liquid crystal display device comprises a glass substrate 121, a substrate-side resin film 127, a supporting member 122 in the form of division walls and an about 1.6 µ m-thick counter resin film 123 supported by the supporting member 122, which are laid in that order. The device further comprises a liquid crystal layer 124 having liquid crystal sandwiched between the substrate-side resin film 127 and the counter resin film 123. On the glass substrate 121, there are TFTs 125 and pixel electrodes 126 made of an ITO transparent conductive film.

On the counter resin film 123, there are a counter electrode 128 made of an ITO transparent conductive film having a sheet resistance of about 50 to 100 Ω/□, and a color mosaic filter 129 composed of fine filters of red, green and blue.

The device further comprises polarizers 130, 130 arranged outside the glass substrate 121 and the color mosaic filter 129.

The supporting member 122, the counter resin film 123, the liquid crystal layer 124 and the substrate-side resin film (second resin film) 127 are integrally formed to compose a resin/liquid crystal composite. The supporting member 122, the counter resin film 123 and the substrate-side resin film 127 are integrally formed as a result that a photo-polymeric monomer or an oligomer as photosensitive prepolymer is cured by ultraviolet radiation.

The counter resin film 123 is composed of a protection resin film 123a formed by ultraviolet radiation and a first resin film 123b formed by ultraviolet radiation through the film 123a after the formation of the film 123a.

The ultraviolet rays used to form the first resin film 123b and the substrate-side resin film 127 are polarized in the respective predetermined directions in order to make these films have orientations, thereby to provide a TN liquid crystal display device where the liquid crystal molecules are twisted by 90° between the first resin film 123b and the substrate-side resin film 127.

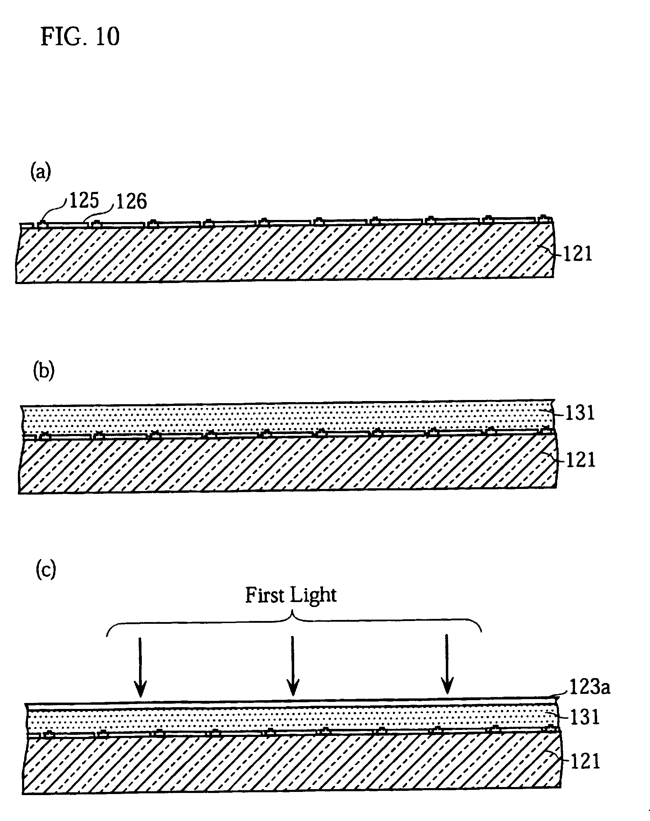

The above-mentioned liquid crystal display device will be fabricated as follows.
(1) As shown in Figure 10 (a), the TFTs 125 and the pixel electrodes 126 are formed onto the glass substrate 121.
(2) As shown in Figure 10 (b), a liquid crystal-prepolymer mixture solution 131 is applied as thick as 6 µ m or so over the substrate 121 by using a spinner. The mixture solution 131 is a mixture of a photo-polymeric monomer or an oligomer as photosensitive prepolymer, a polymerization initiator or a sensitizer to improve their reactivity and nematic liquid crystal. To be more specific, the mixture solution 31 can be composed of:
   (a) multi-functional polyester acrylate (produced by Dainippon Ink and Chemicals, Inc.): 30%,
   (b) IRGACURE 651 (produced by Chiba-Geigy): 2% (benzoyl system 2,2-dimethoxy-1,2-diphenylethane-1-one), and
   (c) tolane system nematic liquid crystal (KT450:Dainippon Ink and Chemicals, Inc.):68%.

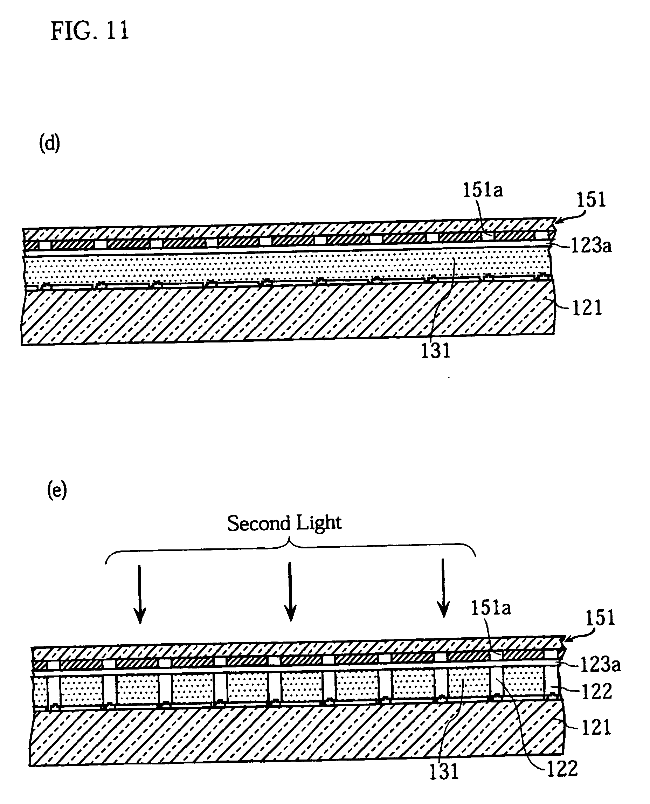

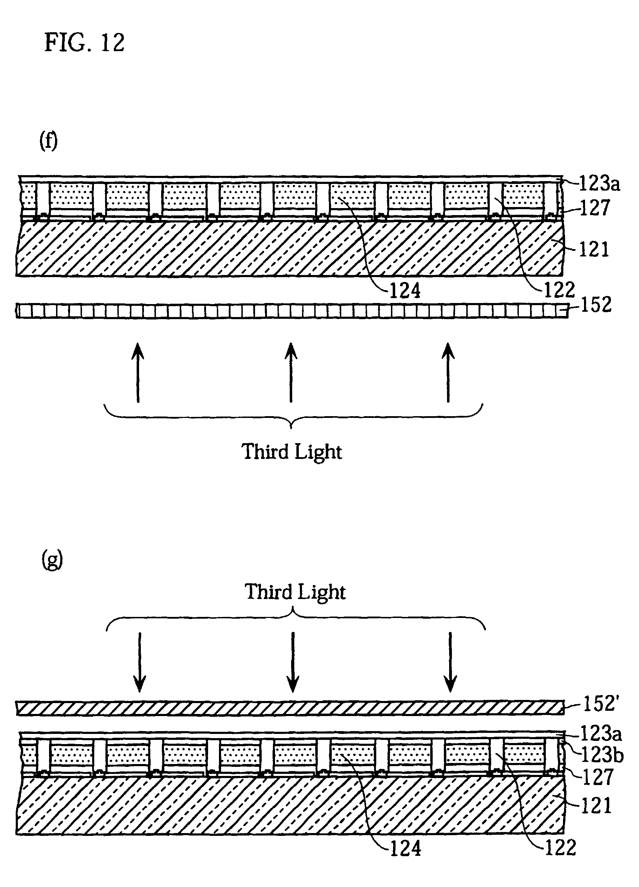

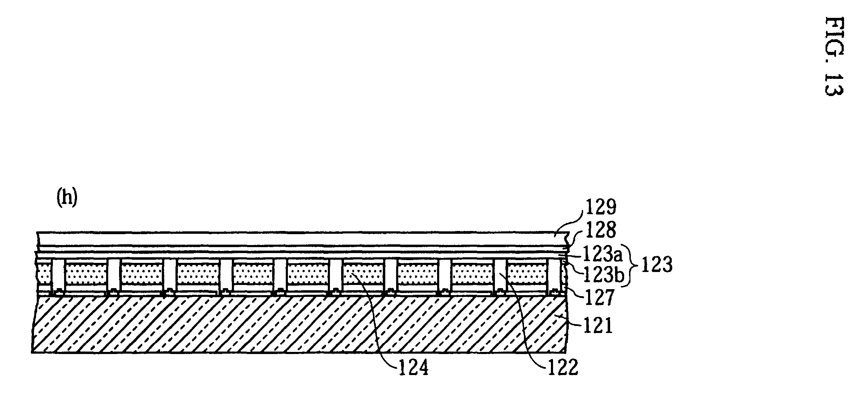

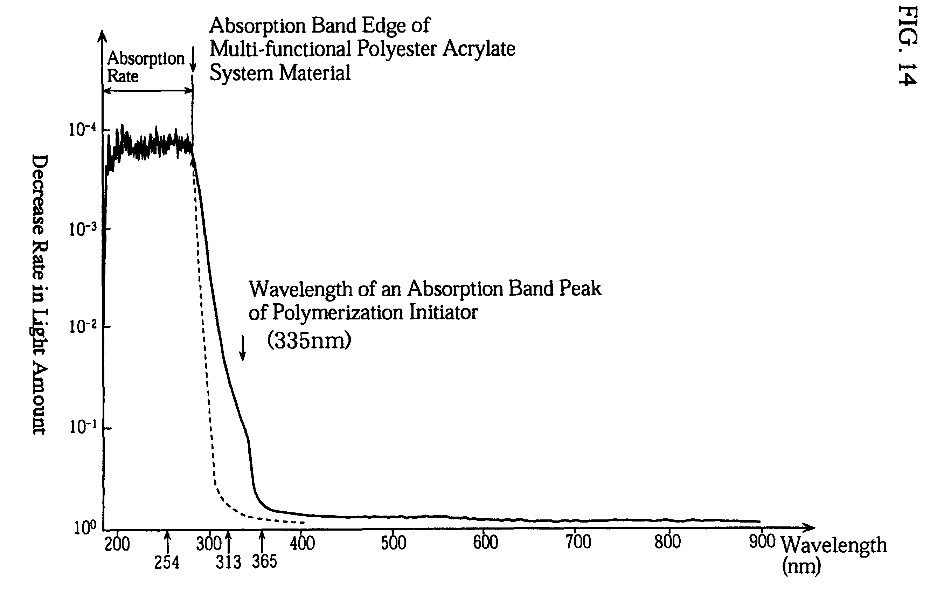

   This is not the only possible materials or mixture ratio of the mixture solution 131. For example, the mixture ratio of the multi-functional polyester acrylate can be set in accordance with the thickness of the counter resin film 123 or the substrate-side resin film 127. Although the liquid crystal may not be dispersed in the mixture solution depending on the mixture ratio, there is no problem as long as the mixture solution is homogeneous.
   The liquid crystal-prepolymer mixture solution 131 has visible and ultraviolet spectral absorption characteristics (absorption curves) as shown in the graph of Figure 14. The graph indicates that the mixture solution 131 has an absorption band region where the absorbance is extremely large against light having a wavelength of about 300 nm or below. In the graph, the solid and broken lines indicate absorption curves before and after polymerization, respectively.
(3) As shown in Figure 10 (c), the entire surface of the liquid crystal-prepolymer mixture solution 131 is irradiated with first light having a wavelength of 254 nm and an intensity of 5 mW/cm² at around 300 mJ/cm², thereby curing the polyester acrylate contained in the mixture solution 131 in and around the surface of the mixture solution 131, so as to form the protection resin film 123a of about 1.5 µ m thick.
   The wavelength (254 nm) of the first light is in the absorption band region (shorter than the longest wavelength in the absorption band region) in the absorption curves of multi-functional polyester acrylate system material. The first light does not pass through the liquid crystal-prepolymer mixture solution 131 substantially and is absorbed in and around its surface. Since the first light has very low intensity (in the reciprocity law failure condition), the polyester acrylate contained in the mixture solution 131 is dissociated therefrom to be selectively cured, thereby to provide the protection resin film 123a.
(4) As shown in Figure 11 (d), a photo mask 151 having 5 µ m lattice gaps 151a in the positions corresponding to the supporting member 122 is aligned with the protection resin film 123a of the liquid crystal-prepolymer mixture solution 131 and pressed thereonto. Under the condition that the mixture solution 131 is made to have a uniform thickness, second light having a wavelength of 365 nm and a sufficiently high intensity in the reciprocity law condition is irradiated to form the supporting member 122 in the positions corresponding to the gaps 151a of the photo mask 151.
   The wavelength (365 nm) of the second light is in the region of longer wavelength than the absorption band peak wavelength (335 nm) in the absorption curves of the polymerization initiator (2,2-dimethoxy-1,2-diphenylethane-1-one). Since the second light passes through the liquid crystal-prepolymer mixture solution 131, the polyester acrylate contained in the mixture solution 131 is cured in its thickness direction or between the protection resin film 123a and the substrate 121. As a result, the supporting member 122 made of the cured polyester acrylate is provided in the form of division walls. The polymerization is done in a relatively short time because the second light has high intensity. Although such short time polymerization causes the liquid crystal contained in the liquid crystal-prepolymer mixture solution 131 to be dispersedly held in the supporting member 122, it does not affect the display operations of the liquid crystal display device in particular.
   The photo mask 151 with the lattice gaps 151a could be replaced, for example, by a photo mask with several tens µ m-square openings to provide a columnar supporting member.
(5) As shown in Figure 12 (f), third light having a wavelength of 313 nm and an intensity of 0.5 mW/cm² is irradiated from the glass substrate 121 side at 500 mJ/cm² through the polarizer 152 so as to form the substrate-side resin film 127 of about 0.2 µ m thick onto the glass substrate 121 on the protection resin film 123a side.
(6) As shown in Figure 12 (g), the entire surface of the liquid crystal-prepolymer mixture solution 131 is irradiated with the third light at 800 mJ/cm² through the polarizer 152' so as to form the first resin film 123b of about 0.1 µ m thick onto the protection resin film 123a on the glass substrate 121 side. In addition, the liquid crystal layer 124 is made from the liquid crystal remaining in the liquid crystal-prepolymer mixture solution 131.
   The wavelength (313 nm) of the third light lies between the absorption band peak wavelength in the absorption curves of the polymerization initiator and the longest wavelength in the absorption band region in the absorption curves of the above-mentioned polyester acrylate system photo-polymeric material. The third light is absorbed in and around the surface of the liquid crystal-prepolymer mixture solution 131 because it does not pass through the mixture solution 131 (non-hardened polyester acrylate) very well, although it passes through the protection resin film 123a (cured polyester acrylate) relatively well. Furthermore, the third light having very low intensity like the first light (in the reciprocity law failure condition) causes the polyester acrylate contained in the liquid crystal-prepolymer mixture solution 131 to be dissociated and cured around the bottom surface of the protection resin film 123a, thereby to provide the inner-side resin film 123b. Similarly, the substrate-side resin film 127 is formed onto the glass substrate 121 on the liquid crystal layer 124 side.
   The thorough extraction of the polyester acrylate contained in the liquid crystal-prepolymer mixture solution 131 allows the liquid crystal layer 124 to have liquid crystal of relatively high purity sandwiched between the first resin film 123b and the substrate-side resin film 127.
   Since the above-mentioned irradiation is done through the polarizers 152, 152' the polyester acrylate is polymerized with directional molecules, which provides the first resin film 123b and the substrate-side resin film 127 with a feature as alignment films for aligning the liquid crystal molecules in the vicinity of their surface in the polarizing directions of the polarizers 152, 152', respectively. As a result, by setting the polarizing directions of the polarizers 152, 152', for example, 90° apart from each other, a TN liquid crystal cell structure is formed between the first resin film 123b and the substrate-side resin film 127 in which the alignment direction of the liquid crystal molecules is twisted by 90°. The processes (5) and (6) could be performed in reverse order. To be more specific, the entire surface of the liquid crystal-prepolymer mixture solution 131 is irradiated with the third light having a wavelength of 313 nm and an intensity of 0.5 mW/cm² at 500 mJ/cm² so as to form the first resin film 123b of about 0.1 µ m thick onto the protection resin film 123a on the glass substrate 121 side, and then the same third light is irradiated at 800 mJ/cm² from the glass substrate 121 side through the polarizer 152 to form the substrate-side resin film 127 of about 0.2 µ m thick onto the glass substrate 121 on the counter resin film 123 side.
   When the prepolymer to be used has higher transmittance against light having a predetermined wavelength after having been cured, the first resin film 123b can be formed effectively. Even when the transmittance of the material to be used hardly improves after polymerization, the first resin film 123b could be formed in the same manner by using light having a wavelength which passes through the protection resin film 123a to a degree as the third light.
(7) As shown in Figure 13 (h), an ITO transparent conductive film (sheet resistance: 50 to 100 Ω/□) is deposited onto the counter resin film 123 to provide the counter electrode 128, and then the color mosaic filter 129 of red, green and blue is formed onto the counter electrode 128 by a well-known method.
   Alternatively, the color mosaic filter 129 and the counter electrode 128 could be arranged in reverse order. Another approach would be that the color mosaic filter 129 is previously formed on the glass substrate 121 and then the liquid crystal-prepolymer mixture solution 131 is applied thereonto.
(8) Under these conditions, the polarizers 130, 130 are arranged outside the glass substrate 121 and the color mosaic filter 129 to provide the liquid crystal display device shown in Figure 9.

The protection resin film 123a is dispensable; however, the provision of this film allows the liquid crystal-prepolymer mixture solution 131 to be protected by the protection resin film 123a and the glass substrate 121. This makes it possible that irradiation of light can be done with the photo mask and the polarizer being laid on the protection resin film 123a, without having asperities on the surface of the mixture solution 131.

It is not necessary that the first resin film 123b and the substrate-side resin film 127 are both cured to align their molecules in a direction by irradiating polarized light; however, the alignment of the liquid crystal molecules is more stabilized when both films have an alignment feature.

It is also possible that the above-mentioned processes are performed by adding a chiral agent to the liquid crystal-prepolymer mixture solution so as to seal the liquid crystal and the chiral agent between the counter resin film 123 and the substrate-side resin film 127. This realizes liquid crystal of the axially symmetric aligned mode (ASM) in which the liquid crystal is aligned symmetrical about the axis for each dot in a pixel.

The liquid crystal may have either positive anisotropy in permittivity (the liquid crystal is aligned parallel to an impressed electric field) or negative anisotropy in permittivity (the liquid crystal is aligned orthogonal to an impressed electric field).

The counter resin film 123 could be formed after the supporting member 122 is formed; however, forming the film 123 first can prevent the asperities of the film. When the processes (3) and (4) are performed in revere order, the mask alignment in the process (4) requires proximity exposure or projection exposure.

In forming the supporting member 122, a well-known printing, lithography, resist exposure and development or the like may be done before the application of the liquid crystal-prepolymer mixture solution 131 instead of curing the polyester acrylate contained in the mixture solution 131. In this case, the process (4) becomes unnecessary.

When the thickness of the liquid crystal layer 124 can be uniform by another spacer or the like, the provision of the supporting member 122 is not essential.

It is also possible that the surface of the mixture solution 131 gets in contact with material which stimulates the polymerization of the prepolymer such as an amine system activating reagent to form the resin film either before or in place of the exposure of the liquid crystal-prepolymer mixture solution 131.

### [EMBODIMENT 2-2]

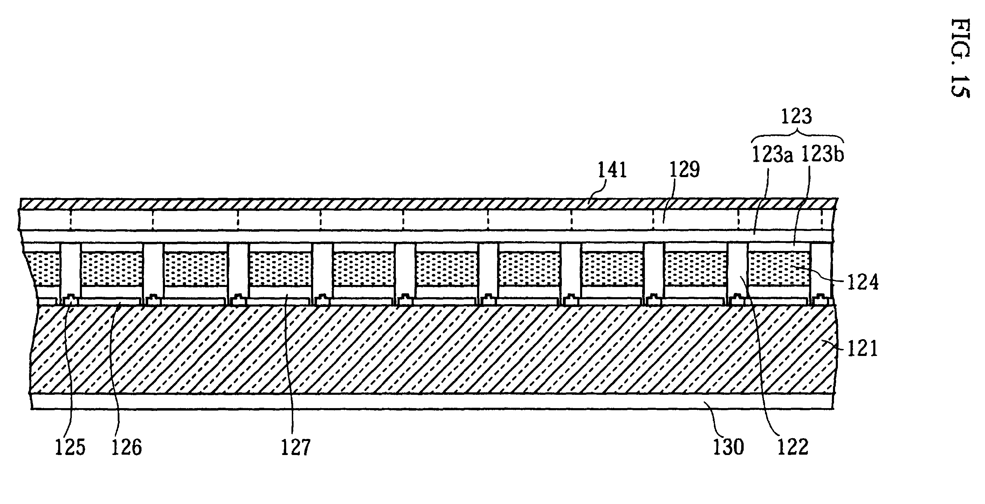

Besides the transmission TN liquid crystal display device shown in Embodiment 2-1, a reflective TN liquid crystal display device as shown in Figure 15 can be fabricated by forming the color mosaic filter 129 onto the counter resin film 123, and then depositing a reflection film 141 as a counter electrode onto the color mosaic filter 129. The film 141 is about 1 µ m thick and mainly composed of metallic aluminum (for example, 98% of aluminum and 2% of silicon). Another reflective TN liquid crystal display device can be provided by using a reflection film outside the glass substrate 121.

### [EMBODIMENT 2-3]

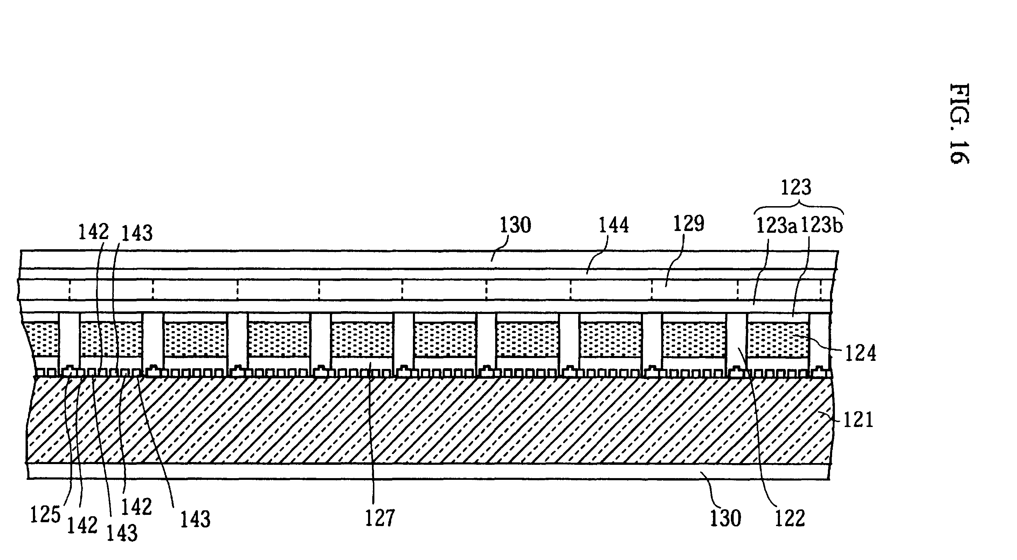

As shown in Figure 16, a transmission IPS liquid crystal display device can be fabricated by forming pixel electrodes 142 and common electrodes (counter electrodes) 143 onto the glass substrate 121. In this case, it is not essential to provide the first resin film 123b having the alignment feature by the irradiation of polarized light; however, the feature can promote the alignment stability of the liquid crystal molecules. Since the alignment of the liquid crystal molecules is controlled by the electric field formed between the pixel electrodes 142 and the common electrodes 143, there is no need to provide the counter electrode 128 on the resin film 123. However, when a transparent electrode 144 having a sheet resistance of about 50 to 100 Ω/□ similar to the counter electrode 128 is provided onto the color mosaic filter 129 or the counter resin film 123 through deposition or another method, the alignment of the liquid crystal molecules is less affected by static electricity even if the resin film 123 is thin, thereby providing the IPS liquid crystal display device with excellent alignment stability.

### [EMBODIMENT 2-4]

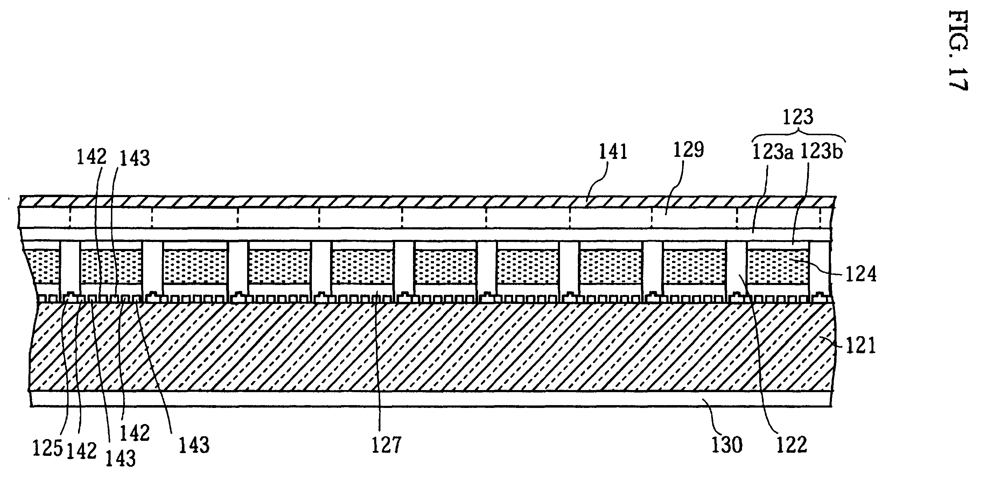

A reflective IPS liquid crystal display device can be realized by replacing the transparent electrode 144 of Embodiment 2-3 by the reflection film 141 shown in Figure 17 which is the same as in Embodiment 2-2.

Besides the TFT-driven liquid crystal display devices shown in Embodiments 2-1 to 2-4, a liquid crystal display device of simple matrix drive can be structured by providing scan signal lines and pixel signal lines at both sides of the liquid crystal layer 124 or on the glass substrate 121 and the counter resin film 123. Alternatively, a monochrome liquid crystal display device can be structured without providing the color mosaic filter 129.

### [EMBODIMENT 2-5]

The following is a description of blind glass or a liquid crystal shutter (hereinafter referred to as blind glass) which uses a resin/liquid crystal composite to make the alignment of the liquid crystal consistent and to have a light-control feature.

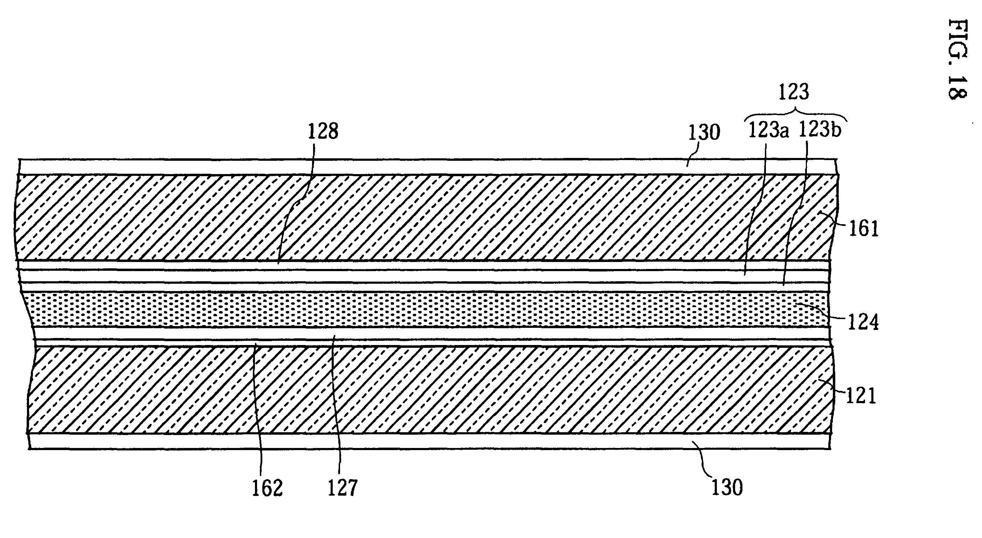

As shown in Figure 18, the blind glass comprises a pair of glass substrates 121, 161; a control electrode 162 lying across the entire surface of the substrate 121; the substrate-side resin film 127, the liquid crystal layer 124 and the counter resin film 123 which are integrally formed to compose a resin/liquid crystal composite in the same manner as in Embodiment 2-1; and the counter electrode 128. In place of the supporting member 122 of Embodiment 2-1, an unillustrated sealing member is used in the vicinity of the glass substrates 121, 161 to seal the liquid crystal and also to fix the distance between these substrates 121, 161.

This blind glass is fabricated as follows.
(11) In the same process as the formation of the pixel electrodes 126 of Embodiment 2-1, the control electrode 162 made of an ITO film is formed across the entire surface of the glass substrate 121.
(12) In the same manner as the process (2) of Embodiment 2-1, the liquid crystal-prepolymer mixture solution 131 is applied by using a spinner.
(13) In the same manner as the process (3) of Embodiment 2-1, the entire surface of the liquid crystal-prepolymer mixture solution 131 is irradiated with the first light having a wavelength of 254 nm and an intensity of 5 mW/cm² at around 300 mJ/cm² to cure the polyester acrylate contained in the mixture solution 131 on and around its surface, thereby to form the protection resin film 123a.
(14) In the same manner as the process (5) of Embodiment 2-1, the third light having a wavelength of 313 nm and an intensity of 0.5 mW/cm² is irradiated at around 500 mJ/cm² from the glass substrate 121 side so as to form the substrate-side resin film 127 onto the substrate 121.
(15) In the same manner as the process (6) of Embodiment 2-1, the liquid crystal-prepolymer mixture solution 131 is irradiated with the third light having a wavelength of 313 nm and an intensity of 0.5 mW/cm² at around 800 mJ/cm² so as to form the first resin film 123b onto the protection resin film 123a on the glass substrate 121 side, and also to make the liquid crystal layer 124 from the liquid crystal remaining in the mixture solution 131. In this manner, the liquid crystal layer 124 can be formed without filling liquid crystal; this feature can facilitate the fabrication of a liquid crystal device having a large area such as blind glass.
(16) In the same manner as the process (7) of Embodiment 2-1, the counter electrode 128 is formed.
(17) The glass substrate 161 is bonded onto the counter electrode 128.
(18) The polarizers 130, 130 are arranged at both sides of the glass substrates 121, 161, to finally provide the blind glass shown in Figure 17.

In the present embodiment, the supporting member 122 may be provided in the same manner as in Embodiment 2-1.

In that case, the thickness of the liquid crystal layer 124 can be easily kept uniform without providing the glass substrate 161.

The glass substrate 161 can be replaced by a protection film or a resin substrate. Furthermore, the counter resin film 123 can be thickened to have a sufficient strength and stiffness.

When the alignment of the liquid crystal is controlled by light or temperature instead of the electric field, there is no need to provide the control electrode 162 or the counter electrode 128.

### (3) Embodiments of the third invention group

The third invention group of the present invention will be described as follows based on the drawings.

### [EMBODIMENT 3-1]

The guest-host mode liquid crystal display device with a dichroic dye of the present embodiment will be described as follows.

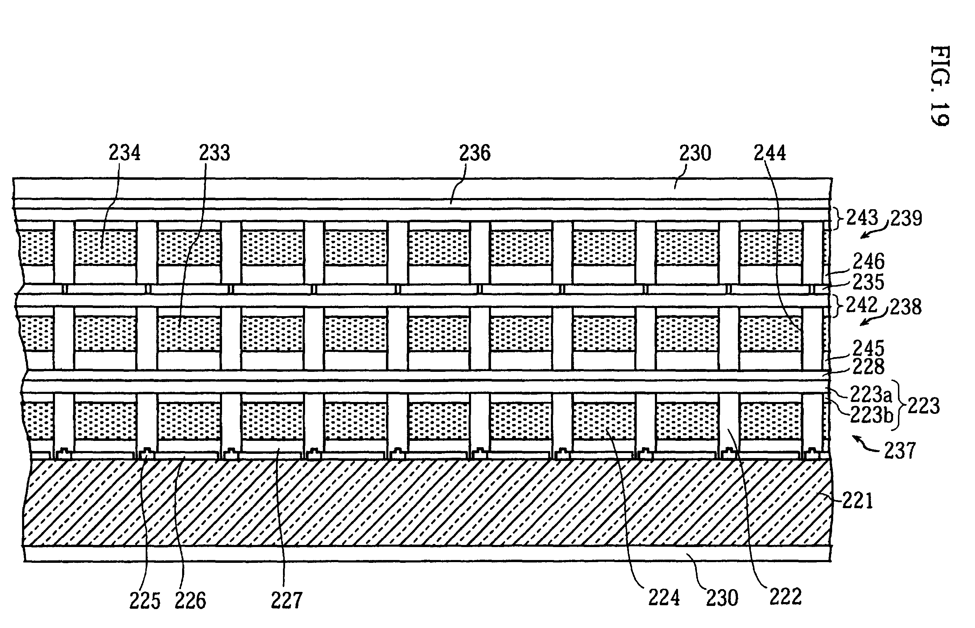

As shown in Figure 19, the liquid crystal display device of the present embodiment comprises a glass substrate 221, a substrate-side resin film 227, a supporting member 222 in the form of division walls and an about 1.6 µ m-thick counter resin film 223 supported by the supporting member 222 which are laid in that order. The device further comprises a first liquid crystal layer 224 which has liquid crystal containing a dichroic dye (tolane system nematic liquid crystal and an azo system yellow dye) sandwiched between the substrate-side resin film 227 and the counter resin film 223. On the glass substrate 221, TFTs 225 and pixel electrodes 226 made of an ITO transparent conductive film are formed.

On the counter resin film 223, there is a counter electrode 228 made of an ITO transparent conductive film having a sheet resistance of about 50 to 100 Ω/□. The counter electrode 228, the first liquid crystal layer 224, the supporting member 222, the substrate-side resin film 227 and the counter resin film 223 compose a first display layer 237.

A second display layer 238 and a third display layer 239 are laid in that order on the first display layer 237. These layers 238 and 239 have the same structure as the first display layer 237 except that the second display layer 238 has a second liquid crystal layer 233 containing a magenta perylene system dye as the dichroic dye, and the third display layer 233 has a third liquid crystal layer 234 containing a cyan anthraquinone system dye as the dichroic dye.

The liquid crystal display device of the present embodiment further comprises polarizers 230, 230 arranged outside the glass substrate 221 and a counter electrode 236 of the third display layer 239.

The supporting member 222, the counter resin film 223, the first liquid crystal layer 224 and the substrate-side resin film (second resin film) 227 are integrally formed to compose a resin/liquid crystal composite. The supporting member 222, the counter resin film 223 and the substrate-side resin film 227 are integrally formed as a result that a photo-polymeric monomer or an oligomer as photosensitive prepolymer is cured by ultraviolet radiation.

The counter resin film 223 is composed of a protection resin film 223a formed by ultraviolet radiation and a first resin film 223b formed by ultraviolet radiation through the film 223a after the formation of the film 223a.

The ultraviolet rays used to form the first resin film 223b and the substrate-side resin film 227 are polarized in respective predetermined directions in order to make these films have orientations, thereby to provide a TN guest-host mode liquid crystal display device where the liquid crystal molecules are twisted by 90° between the first resin film 223b and the substrate-side resin film 227.

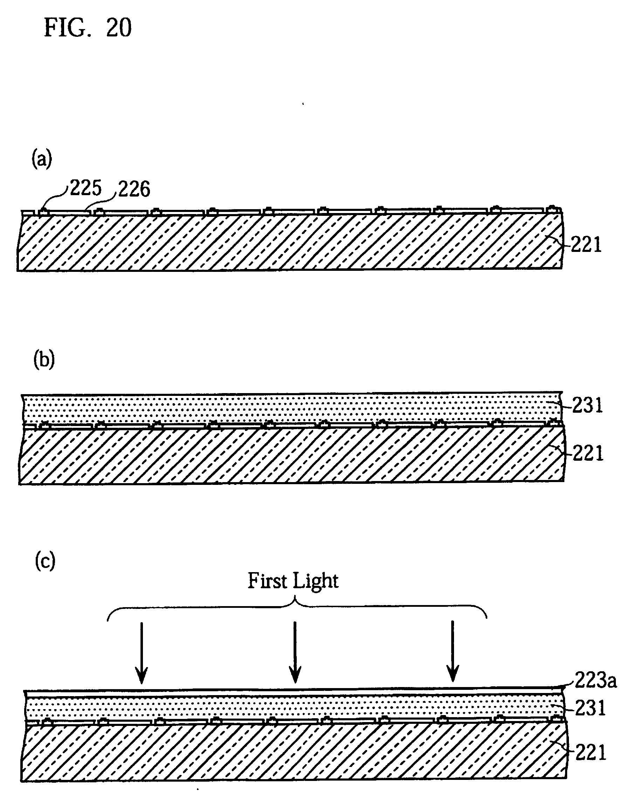

This liquid crystal display device will be fabricated as follows.
(1) As shown in Figure 20 (a), the TFTs 225 and the pixel electrodes 226 are formed onto the glass substrate 221.
(2) As shown in Figure 20 (b), a liquid crystal-prepolymer mixture solution 231 is applied as thick as 6 µ m or so across the substrate 221 by using a spinner. The mixture solution 231 is a mixture of a photo-polymeric monomer or an oligomer as photosensitive prepolymer, a polymerization initiator or a sensitizer to improve their reactivity, nematic liquid crystal and a dichroic dye. To be more specific, the mixture solution 231 can be composed of:
   (a) multi-functional polyester acrylate (produced by Dainippon Ink and Chemicals, Inc.): 30%,
   (b) IRGACURE 651 (produced by Chiba-Geigy): 2% (benzoyl system 2,2-dimethoxy-1,2- diphenylethane-1- one),
   (c) tolane system nematic liquid crystal (KT450:Dainippon Ink and Chemicals, Inc.):65%, and
   (d) an azo system yellow dye (SI-209:Mitsui Chemicals, Inc.): 3%.

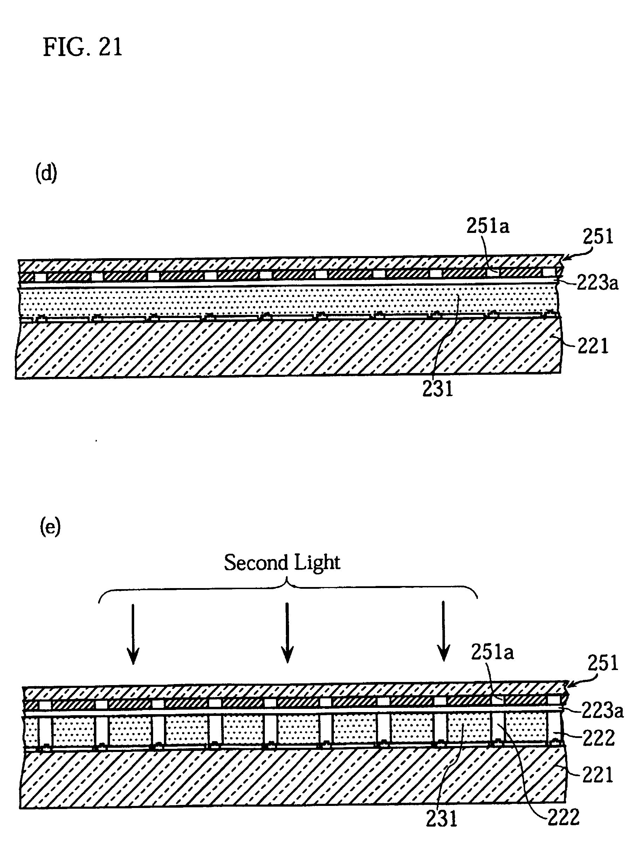

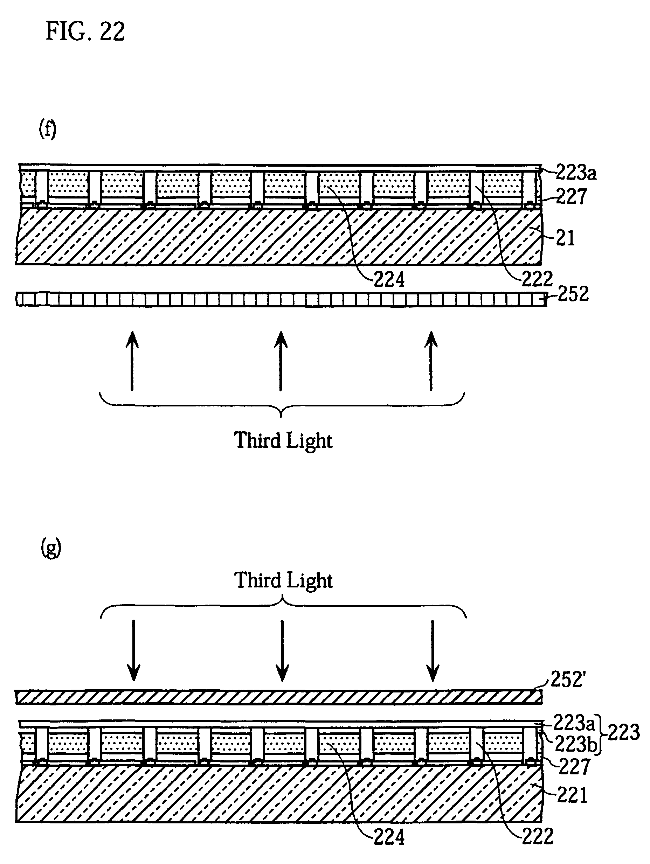

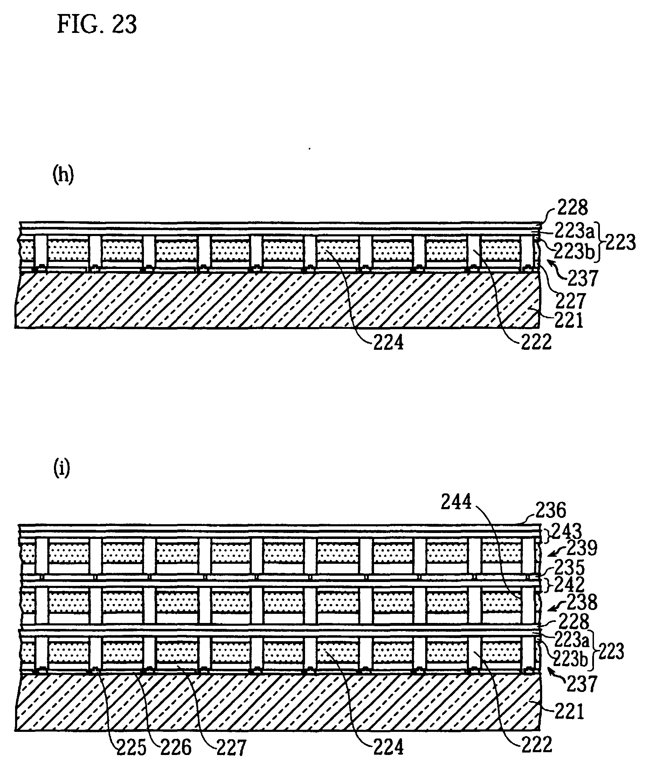

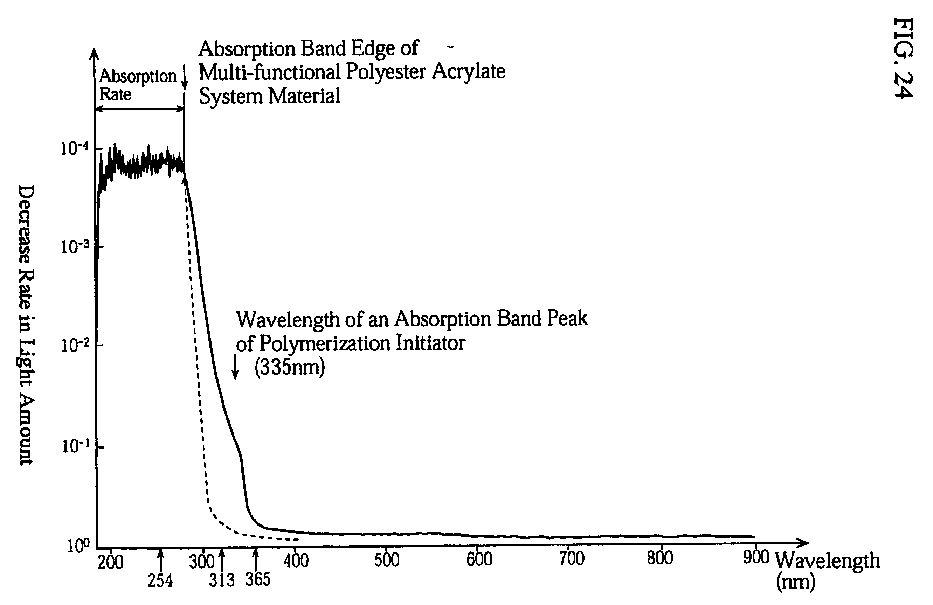

   This is not the only possible materials or mixture ratio of the mixture solution 231. For example, the mixture ratio of the multi-functional polyester acrylate can be set in accordance with the thickness of the counter resin film 223 or the substrate-side resin film 227.
   The liquid crystal-prepolymer mixture solution 231 has visible and ultraviolet spectral absorption characteristics (absorption curves) as shown in the graph of Figure 24 (in the visible and ultraviolet spectral absorption characteristics shown in the graph, the mixture solution 231 does not contain the dichroic dye).
   The graph shows that the mixture solution 231 has an absorption band region where the absorbance is extremely large against light having a wavelength of about 300 nm or below. In the graph, the solid and broken lines indicate absorption curves before and after polymerization, respectively.
(3) As shown in Figure 20 (c), the entire surface of the liquid crystal-prepolymer mixture solution 231 is irradiated with the first light having a wavelength of 254 nm and an intensity of 5 mW/cm² at around 300 mJ/cm², thereby curing the polyester acrylate contained in the mixture solution 231 on and around its surface, so as to form the protection resin film 223a of about 1.5 µ m thick.
   The wavelength (254 nm) of the first light is in the absorption band region (shorter than the longest wavelength in the absorption band region) in the absorption curves of multi-functional polyester acrylate system material. The first light does not pass through the liquid crystal-prepolymer mixture solution 231 substantially and is absorbed in and around its surface. Since the first light has very low intensity (in the reciprocity law failure condition), the polyester acrylate contained in the mixture solution 231 is dissociated therefrom to be selectively cured, thereby to provide the protection resin film 223a.
(4) As shown in Figure 21 (d), a photo mask 251 having about 5 µ m-lattice gaps 251a formed in the positions corresponding to the supporting member 222 is aligned with the protection resin film 223a of the liquid crystal-prepolymer mixture solution 231 and pressed thereonto. Under the condition that the mixture solution 231 is made to have a uniform thickness, second light having a wavelength of 365 nm and a sufficiently high intensity in the reciprocity law condition is irradiated to form the supporting member 222 in the positions of the gaps 251a of the photo mask 251.
   The wavelength (365 nm) of the second light is in the region of longer wavelength than the absorption band peak wavelength (335 nm) in the absorption curves of the polymerization initiator (2,2-dimethoxy- 1,2-diphenylethane -1-one). Since the second light passes through the liquid crystal-prepolymer mixture solution 231, the polyester acrylate contained in the mixture solution 231 is cured in its thickness direction or between the protection resin film 223a and the substrate 221. As a result, the supporting member 222 made of the cured polyester acrylate is provided in the form of division walls. Since the second light has high intensity, the polymerization can be done in a relatively short time. Although such short time polymerization causes the liquid crystal and the azo system yellow dye contained in the liquid crystal-prepolymer mixture solution 231 to be dispersedly held in the supporting member 222, it does not affect the display operations of the liquid crystal display device in particular.
   The photo mask 251 with the lattice gaps 251a could be replaced, for example, by a photo mask with several tens µ m-square openings to provide a columnar supporting member.
(5) As shown in Figure 22 (f), third light having a wavelength of 313 nm and an intensity of 0.5 mW/cm² is irradiated from the glass substrate 221 side at 500 mJ/cm² through the polarizer 252 to form the substrate-side resin film 227 of about 0.2 µ m thick onto the glass substrate 221 on the protection resin film 223a side.
(6) As shown in Figure 22 (g), the entire surface of the liquid crystal-prepolymer mixture solution 231 is irradiated with the third light having a wavelength of 313 nm and an intensity of 0.5 mW/cm² at 800 mJ/cm² through the polarizer 252' to form the first resin film 223b of about 0.1 µ m thick onto the protection resin film 223a on the glass substrate 221 side, and further to make the liquid crystal layer 224 from the liquid crystal and the azo system yellow dye remaining in the mixture solution 231. The processes (5) and (6) could be performed in reverse order. To be more specific, the entire surface of the liquid crystal-prepolymer mixture solution 231 is irradiated with the third light having a wavelength of 313 nm and an intensity of 0.5 mW/cm² at 500 mJ/cm² through the polarizer 252' so as to form the first resin film 223b of about 0.1 µ m thick onto the protection resin film 223a on the glass substrate 221 side, and then the same third light is irradiated at 800 mJ/cm² from the glass substrate 221 side through the polarizer 252 to form the substrate-side resin film 227 of about 0.2 µ m thick onto the glass substrate 221 on the counter resin film 223 side.
   The wavelength (313 um) of the third light lies between the absorption band peak wavelength in the absorption curves of the polymerization initiator and the longest wavelength in the absorption band region in the absorption curves of the above-mentioned polyester acrylate system photo-polymeric material. The third light is absorbed in and around the surface of the liquid crystal-prepolymer mixture solution 231 because it does not pass through the mixture solution 231 (non-hardened polyester acrylate) very well, although it passes through the protection resin film 223a (cured polyester acrylate) and the glass substrate 221 relatively well. Furthermore, the third light having a very low intensity like the first light (in the reciprocity law failure condition) causes the polyester acrylate contained in the liquid crystal-prepolymer mixture solution 231 to be dissociated and cured around the bottom surface of the protection resin film 223a to provide the first resin film 223b. Similarly, the substrate-side resin film 227 is formed onto the glass substrate 221 on the first liquid crystal layer 224 side.
   The thorough curing of the polyester acrylate contained in the liquid crystal-prepolymer mixture solution 231 allows the liquid crystal layer 224 to have liquid crystal and azo system yellow dye of relatively high purity sandwiched between the first resin film 223b and the substrate-side resin film 227.
   Since the above-mentioned irradiation is done through the polarizers 252, 252', the polyester acrylate is polymerized with directional molecules, which provides the first resin film 223b and the substrate-side resin film 227 with a feature as alignment films for aligning the liquid crystal molecules in the vicinity of their surface in the polarizing directions of the polarizers 252, 252', respectively. As a result, by setting the polarizing directions of the polarizers 252, 252', for example, 90° apart from each other, a TN guest-host mode liquid crystal cell structure is formed between the first resin film 223b and the substrate-side resin film 227 in which the alignment direction of the liquid crystal molecules is twisted by 90°.
   When the prepolymer to be used has higher transmittance against light having a predetermined wavelength after having been cured, the first resin film 223b can be formed effectively. Even when the transmittance of the material to be used hardly improves after polymerization, the first resin film 223b could be formed in the same manner by using light having a wavelength which passes through the protection resin film 223a to a degree as the third light.
(7) As shown in Figure 23 (h), an ITO transparent conductive film (sheet resistance: 50 to 100 Ω/□) is deposited onto the counter resin film 223 to provide the counter electrode 228, and then the first display layer 237 (a yellow layer containing an azo system yellow dye) is formed.
   The protection resin film 223a is dispensable; however, the provision of this film allows the liquid crystal-prepolymer mixture solution 231 to be protected by the protection resin film 223a and the glass substrate 221. This makes it possible that irradiation of light can be done with the photo mask and the polarizer being laid on the protection resin film 223a, without having asperities on the surface of the mixture solution 231.
   It is not necessary that the first resin film 223b and the substrate-side resin film 227 are both cured to align their molecules in a direction by irradiating polarized light through a polarizer; however, when their molecules have directivity, the liquid crystal molecules in the liquid crystal layer are aligned in a predetermined direction under no application of electric field, and the dichroic dye contained in the liquid crystal layer is aligned parallel to the liquid crystal molecules. As a result, the alignment direction of the dichroic dye can be easily controlled in accordance with the alignment of the liquid crystal molecules in the liquid crystal layer by applying electric field or another method, which improves the contrast.
   The counter resin film 223 could be formed after the supporting member 222 is formed; however, forming the film 223 first can prevent the asperities of the film. When the processes (3) and (4) are performed in revere order, the mask alignment in the process (4) requires proximity exposure or projection exposure.
   In forming the supporting member 222, a well-known printing, lithography, resist exposure and development or the like may be done before the application of the liquid crystal-prepolymer mixture solution 231 instead of curing the polyester acrylate contained in the mixture solution 231. In this case, the process (4) becomes unnecessary.
   When the thickness of the first liquid crystal layer 224 can be uniform by another spacer or the like, the provision of the supporting member 222 is not essential.
   It is also possible that the surface of the mixture solution 231 gets in contact with material which stimulates the polymerization of the prepolymer such as an amine system activating reagent to form the protection resin film either before or in place of the exposure of the liquid crystal-prepolymer mixture solution 231.
(8) The above-mentioned processes (1) through (7) are performed twice to lay the second display layer 238 and the third display layer 239 in that order onto the first display layer 237 as shown in Figure 23 (i). As the dichroic dye, the second display layer 238 uses the magenta perylene system dye, and the third display layer 239 uses the cyan anthraquinone system dye. Under these conditions, the polarizers 230, 230 are arranged outside the counter electrode 236 laid in the uppermost position and the glass substrate 221 to provide the guest-host mode transmission liquid crystal display device shown in Figure 1.

Although it is not illustrated in Figure 23 (i), in forming the second display layer 238, prior to the process (7), contact holes are formed between the counter resin film 242 and a switching element on the substrate via the supporting members 222 and 244 by dry etching from the counter resin film 242 side. The contact holes are filled with conductive paste or the like, and an ITO transparent conductive film is deposited onto the counter resin film 242 in the form of a pattern, thereby to form the counter electrode 235 in accordance with the process (7). The counter electrode 235 and the switching element on the substrate are connected to each other via the conductive paste.

In forming the second display layer 238, before the process (7), a polyimide resin or the like can be applied onto the counter electrode 228 of the first display layer 237, dried and subjected to a rubbing treatment to provide an alignment film. In that case, the substrate-side resin film 245 of the second display layer 238 does not have to be cured with irradiation of light, and the process (5) becomes unnecessary. Similarly, in forming the third display layer 239, an alignment film can be formed by applying the polyimide resin or the like onto the counter electrode 235 of the second display layer 238.

### [EMBODIMENT 3-2]

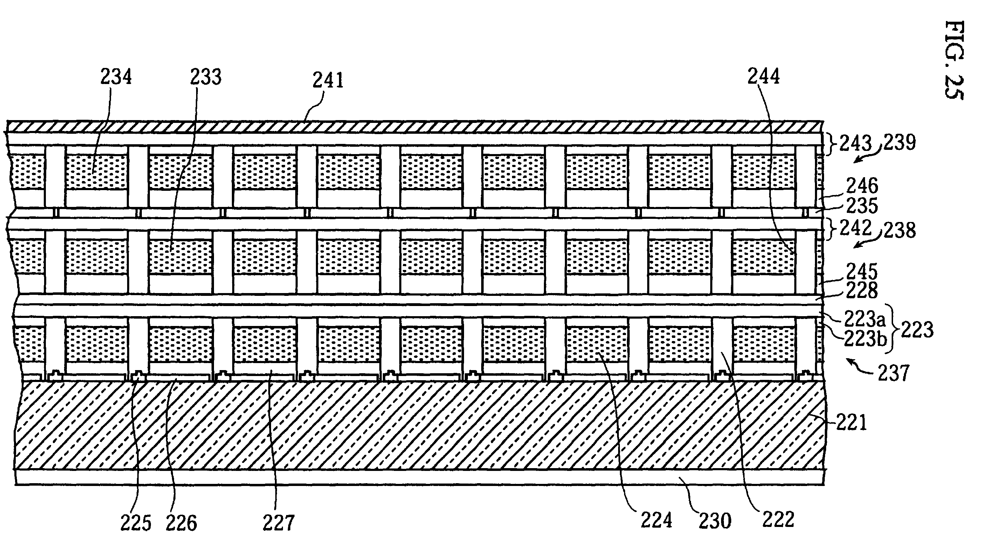

Besides the guest-host mode transmission liquid crystal display device shown in Embodiment 3-1, a guest-host mode reflective liquid crystal display device as shown in Figure 25 can be fabricated by depositing an about 1 µ m-thick reflection film 241 mainly composed of metallic aluminum (for example, 98% of aluminum and 2% of silicon) as a counter electrode onto a counter resin film 243. Another guest-host mode reflective liquid crystal display device can be provided by using a reflection film outside the glass substrate 221.

Besides the TFT-driven liquid crystal display devices shown in Embodiments 3-1 and 3-2, a liquid crystal display device of simple matrix drive can be structured by arranging a scan signal line on the glass substrate and pixel signal lines on the respective counter resin films of the first, second and third display layers.

### [EMBODIMENT 3-3]

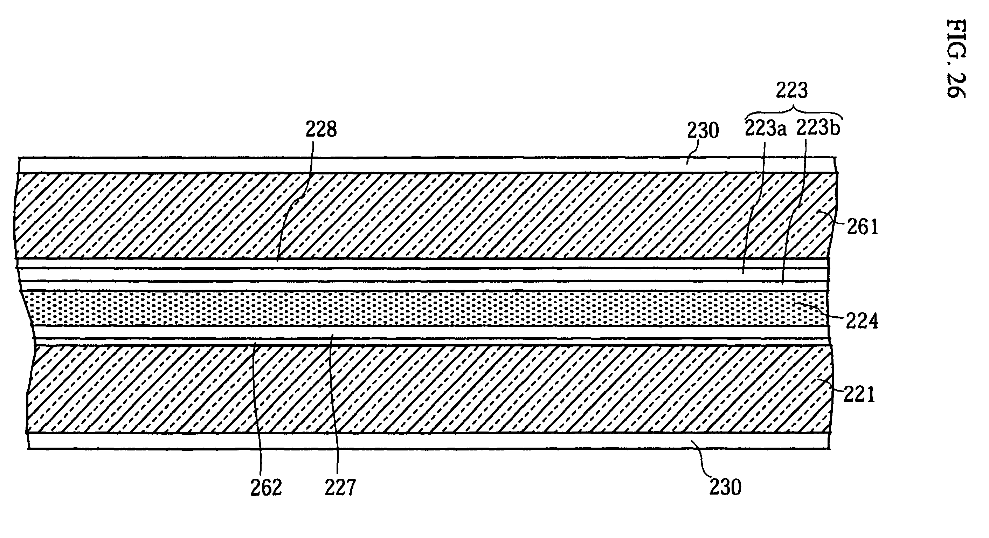

The following is a description of blind glass or a liquid crystal shutter (hereinafter referred to as blind glass) which makes the alignment of the liquid crystal consistent throughout the surface of the substrate and has a light-control feature with reference to Figure 26.

As shown in Figure 26, the blind glass comprises a pair of glass substrates 221, 261; a control electrode 262 lying across the entire surface of the substrate 221; the first liquid crystal layer (a liquid crystal layer containing a dichroic dye) 224; the substrate-side resin film 227 and the counter resin film 223 which are formed in the same manner as in Embodiment 3-1; and the counter electrode 228. In place of the supporting member 222 of Embodiment 3-1, an unillustrated sealing member is used in the vicinity of the glass substrates 221, 261 to seal the liquid crystal containing a dichroic dye and also to fix the distance between these substrates 221, 261.

This blind glass is fabricated as follows.
(11) In the same process as the formation of the pixel electrodes 226 of Embodiment 3-1, the control electrode 262 made of an ITO film is formed across the entire surface of the glass substrate 221.
(12) In the same manner as the process (2) of Embodiment 3-1, the liquid crystal-prepolymer mixture solution 231 is applied by using a spinner.
(13) In the same manner as the process (3) of Embodiment 3-1, the entire surface of the liquid crystal-prepolymer mixture solution 231 is irradiated with the first light having a wavelength of 254 nm and an intensity of 5 mW/cm² at around 300 mJ/cm² to cure the polyester acrylate contained in the mixture solution 231 in and around its surface, thereby to provide the protection resin film 223a.
(14) In the same manner as the process (5) of Embodiment 3-1, the third light having a wavelength of 313 nm and an intensity of 0.5 mW/cm² is irradiated at around 500 mJ/cm² from the glass substrate 221 side so as to provide the substrate-side resin film 227 onto the glass substrate 221.
(15) In the same manner as the process (6) of Embodiment 3-1, the liquid crystal-prepolymer mixture solution 231 is irradiated with the third light having a wavelength of 313 nm and an intensity of 0.5 mW/cm² at around 800 mJ/cm² to form the first resin film 223b onto the protection resin film 223a on the glass substrate 221 side, and also to make the first liquid crystal layer 224 from the liquid crystal and the dichroic dye remaining in the mixture solution 231. In this manner, the liquid crystal layer 224 can be formed without filling liquid crystal or a dichroic dye; this feature can facilitate the fabrication of a device having a large area such as blind glass.
(16) In the same manner as the process (7) of Embodiment 3-1, the counter electrode 228 is formed.
(17) The glass substrate 261 is bonded onto the counter electrode 228.
(18) The polarizers 230, 230 are arranged at both sides of the glass substrates 221, 261, to finally provide the blind glass shown in Figure 26.

In the present embodiment the supporting member 222 may be provided in the same manner as in Embodiment 3-1.

In that case, the thickness of the first liquid crystal layer 224 can be easily kept uniform without providing the glass substrate 261.

The glass substrate 261 can be replaced by a protection film or a resin substrate. Furthermore, the counter resin film 223 can be thickened to have a sufficient strength and stiffness.

When the alignment of the liquid crystal is controlled by light or temperature instead of the electric field, there is no need to provide the control electrode 262 or the counter electrode 228.

### INDUSTRIAL APPLICABILITY

As described hereinbefore, according to the present invention each and every object of the present invention can be fully achieved.

In the first invention group, a mixture film containing a photosensitive prepolymer and liquid crystal are irradiated with light to extract and cure the prepolymer contained therein to form a resin film onto the surface of the mixture film. The liquid crystal layer is made from the liquid crystal remaining in the mixture film between the substrate and the resin film. This makes it unnecessary to perform a liquid crystal filling process, thereby simplifying the fabrication process and reducing the fabrication cost. Furthermore, the liquid crystal sandwiched between the single substrate and the resin film reduces the weight of a liquid crystal device or a liquid crystal display device as compared with those having a pair of substrates to seal liquid crystal therebetween.

In the second invention group, the first resin film, the second resin film facing the first resin film and the liquid crystal layer sandwiched between these films which are integrally formed to compose the resin/liquid crystal composite, are in absolute contact with each other to prevent the entry of foreign particles such as dusts between adjacent components. This eliminates wasted space inside the resin/liquid crystal composite, allowing the composite to have the thinnest possible thickness. When the resin/liquid crystal composite is applied to a liquid crystal display device, the device has a liquid crystal layer sandwiched between the substrate side resin film formed on the single substrate and the counter resin film. Consequently, the device can be lighter in weight than a liquid crystal display device having a liquid crystal layer sandwiched between a pair of substrates. Furthermore, the mixture film containing the photosensitive prepolymer and the liquid crystal is irradiated with light to selectively cure the prepolymer contained in the mixture film so as to form the first resin film onto the mixture film and to form the second resin film on the other side of the mixture film. Between the first and second resin films, the liquid crystal layer is made from the liquid crystal remaining in the mixture film after the prepolymer is cured. This eliminates the need for a liquid crystal filling process, thereby improving the fabrication efficiency. The formation of the first and second resin films by being cured with the irradiation of polarized light eliminates the need for the rubbing treatment, thereby simplifying the fabrication process and reducing the fabrication cost.

In the third invention group, the absence of the color filter realizes a bright display, making it easier to provide a color liquid crystal display device. The liquid crystal display device has wider viewing angle properties because it is thinner than conventional devices. Similar to the second invention group, the liquid crystal layer can be formed without the liquid crystal filling process to improve the fabrication efficiency.

## Claims

1. A liquid crystal display device comprising:
a substrate at least having a pixel electrode, a switching element connected to the pixel electrode and an alignment film;
a resin film formed by curing a photosensitive prepolymer contained in a liquid crystal-prepolymer mixture with irradiation of light; and
a liquid crystal layer sandwiched between said substrate and said resin film.

2. The liquid crystal display device of claim 1 further comprising a supporting member formed between said substrate and said resin film by selective curing said photosensitive prepolymer with light irradiation.

3. The liquid crystal display device of claim 1, wherein said resin film contains an acrylate system material.

4. The liquid crystal display device of claim 1, wherein said liquid crystal layer contains nematic liquid crystal.

5. The liquid crystal display device of claim 4, wherein said nematic liquid crystal includes tolane system nematic liquid crystal.

6. The liquid crystal display device of claim 1 further comprising a counter electrode formed onto a side of said resin film that is opposite said liquid crystal layer, wherein
said light irradiated to form said resin film is so polarized that molecules of said photosensitive prepolymer are aligned in a direction.

7. The liquid crystal display device of claim 2 further comprising a counter electrode formed onto a side of said resin film that is opposite said liquid crystal layer, wherein
said light irradiated to form said resin film is so polarized that molecules of said photosensitive prepolymer are aligned in a direction.

8. The liquid crystal display device of claim 6 further comprising a color filter formed onto the side of said resin film that is opposite said liquid crystal layer.

9. The liquid crystal display device of claim 8, wherein said counter electrode is made of a transparent conductive film and is positioned either between said resin film and said color filter or onto a side of said color filter that is opposite said resin film.

10. The liquid crystal display device of claim 8, wherein
said counter electrode is made from a light-reflecting material; and
said color filter is positioned between said resin film and said counter electrode.

11. The liquid crystal display device of claim 1, wherein said substrate further has a common electrode.

12. The liquid crystal display device of claim 2, wherein said substrate further has a common electrode.

13. The liquid crystal display device of claim 11, wherein said light irradiated to form said resin film is so polarized that molecules of said photosensitive prepolymer are aligned in a direction.

14. The liquid crystal display device of claim 12, wherein said light irradiated to form said resin film is so polarized that molecules of said photosensitive prepolymer are aligned in a direction.

15. The liquid crystal display device of claim 11 further comprising a color filter formed onto the side of said resin film that is opposite said liquid crystal layer.

16. The liquid crystal display device of claim 15 further comprising an electrode made of a transparent conductive film, said electrode being formed either between said resin film and said color filter or onto a side of said color filter that is opposite said resin film.

17. The liquid crystal display device of claim 15 further comprising an electrode made from a light-reflecting material, said electrode being arranged on a side of said color filter that is opposite said resin film.

18. A method for fabricating a liquid crystal display device comprising:
a substrate having a pixel electrode, a switching element connected to the pixel electrode and an alignment film;
a resin film formed by curing a photosensitive prepolymer contained in a liquid crystal-prepolymer mixture with irradiation of light having a first wavelength; and
a liquid crystal layer sandwiched between said substrate and said resin film,
said method comprising at least the steps of:
forming the pixel electrode, the switching element and the alignment film onto said substrate;
forming a mixture film containing said photosensitive prepolymer and liquid crystal onto said substrate; and
forming said resin film onto a surface of said mixture film by irradiating said mixture film with said light having a first wavelength from an other side of said substrate to extract and photo-cure said photosensitive prepolymer contained in said mixture film.

19. The method for fabricating a liquid crystal display device of claim 18, wherein
in said resin film formation step, said resin film is formed by extracting and photo-curing a predetermined amount of said photosensitive prepolymer contained in said mixture film with light having a first wavelength, and
said method further comprising the step of, by selectively irradiating a predetermined region in said mixture film with light having a second wavelength to cure said photosensitive prepolymer remaining in said mixture film, forming a supporting member in said predetermined region between said substrate and said resin film.

20. The method for fabricating a liquid crystal display device of claim 19, wherein in said supporting member formation step, said supporting member is formed by extracting a predetermined amount of said photosensitive prepolymer remaining in said mixture film, and
said method further comprising the step of forming an inner-side resin film onto said resin film on said substrate side by irradiating said mixture film with light having a third wavelength from said resin film side to extract and photo-cure said photosensitive prepolymer remaining in said mixture film.

21. The method for fabricating a liquid crystal display device of claim 18, wherein said photosensitive prepolymer contains an acrylate system material.

22. The method for fabricating a liquid crystal display device of claim 18, wherein said liquid crystal contains nematic liquid crystal.

23. The method for fabricating a liquid crystal display device of claim 22, wherein said nematic liquid crystal contains tolane system nematic liquid crystal.

24. The method for fabricating a liquid crystal display device of claim 18, wherein said mixture film further contains one of a polymerization initiator and a sensitizer for said photosensitive prepolymer.

25. The method for fabricating a liquid crystal display device of claim 19, wherein said mixture film further contains one of a polymerization initiator and a sensitizer for said photosensitive prepolymer.

26. The method for fabricating a liquid crystal display device of claim 20, wherein said mixture film further contains one of a polymerization initiator and a sensitizer for said photosensitive prepolymer.

27. The method for fabricating a liquid crystal display device of claim 24, wherein one of said polymerization initiator and said sensitizer contains a benzoyl system material.

28. The method for fabricating a liquid crystal display device of claim 25, wherein one of said polymerization initiator and said sensitizer contains a benzoyl system material.

29. The method for fabricating a liquid crystal display device of claim 26, wherein one of said polymerization initiator and said sensitizer contains a benzoyl system material.

30. The method for fabricating a liquid crystal display device of claim 27, wherein one of said polymerization initiator and said sensitizer contains 2,2-dimethoxy-1,2-diphenylethane - 1-one.

31. The method for fabricating a liquid crystal display device of claim 28, wherein one of said polymerization initiator and said sensitizer contains 2, 2-dimethoxy- 1, 2-diphenylethane- 1-one.

32. The method for fabricating a liquid crystal display device of claim 29, wherein one of said polymerization initiator and said sensitizer contains 2,2-dimethoxy- 1, 2-diphenylethane-1-one.

33. The method for fabricating a liquid crystal display device of claim 18, wherein said resin film formation step is performed by irradiating said mixture film with said light having the first wavelength in a reciprocity law failure condition.

34. The method for fabricating a liquid crystal display device of claim 19, wherein said resin film formation step is performed by irradiating said mixture film with said light having the first wavelength in a reciprocity law failure condition.

35. The method for fabricating a liquid crystal display device of claim 20, wherein said resin film formation step is performed by irradiating said mixture film with said light having the first wavelength in a reciprocity law failure condition.

36. The method for fabricating a liquid crystal display device of claim 18, wherein the first wavelength is within an absorption band region in absorption curves of said photosensitive prepolymer.

37. The method for fabricating a liquid crystal display device of claim 19, wherein the first wavelength is within an absorption band region in absorption curves of said photosensitive prepolymer.

38. The method for fabricating a liquid crystal display device of claim 20, wherein the first wavelength is within an absorption band region in absorption curves of said photosensitive prepolymer.

39. The method for fabricating a liquid crystal display device of claim 36, wherein
said photosensitive prepolymer contains a polyester acrylate system material; and
said light having the first wavelength is far-ultraviolet light, the first wavelength being 254 nm obtained by excimer laser.

40. The method for fabricating a liquid crystal display device of claim 37, wherein
said photosensitive prepolymer contains a polyester acrylate system material; and
said light having the first wavelength is far-ultraviolet light, the first wavelength being 254 nm obtained by excimer laser.

41. The method for fabricating a liquid crystal display device of claim 38, wherein
said photosensitive prepolymer contains a polyester acrylate system material; and
said light having the first wavelength is far-ultraviolet light, the first wavelength being 254 nm obtained by excimer laser.

42. The method for fabricating a liquid crystal display device of claim 19, wherein
said resin film formation step is performed by irradiating said mixture film with said light having the first wavelength in a reciprocity law failure condition; and
said supporting member formation step is performed by irradiating said mixture film with said light having the second wavelength in a reciprocity law condition.

43. The method for fabricating a liquid crystal display device of claim 20, wherein
said resin film formation step is performed by irradiating said mixture film with said light having the first wavelength in a reciprocity law failure condition; and
said supporting member formation step is performed by irradiating said mixture film with said light having the second wavelength in a reciprocity law condition.

44. The method for fabricating a liquid crystal display device of claim 19, wherein said light having the second wavelength has smaller absorbance of said photosensitive prepolymer than said light having the first wavelength.

45. The method for fabricating a liquid crystal display device of claim 20, wherein said light having the second wavelength has smaller absorbance of said photosensitive prepolymer than said light having the first wavelength.

46. The method for fabricating a liquid crystal display device of claim 20, wherein
said resin film formation step is performed by irradiating said mixture film with said light having the first wavelength in a reciprocity law failure condition;
said supporting member formation step is performed by irradiating said mixture film with said light having the second wavelength in a reciprocity law condition; and
said inner-side resin film formation step is performed by irradiating said mixture film with said light having the third wavelength in the reciprocity law failure condition.

47. The method for fabricating a liquid crystal display device of claim 20, wherein said light having the third wavelength has absorbance of said photosensitive prepolymer smaller than said light having the first wavelength and larger than said light having the second wavelength.

48. The method for fabricating a liquid crystal display device of claim 20, wherein
said mixture film further contains one of a polymerization initiator and a sensitizer for said photosensitive prepolymer;
the first wavelength is within an absorption band region in absorption curves of said photosensitive prepolymer, said mixture film being irradiated with said light having the first wavelength in a reciprocity law failure condition;
the second wavelength is longer than an absorption band peak wavelength in absorption curves of one of said polymerization initiator and said sensitizer, said mixture film being irradiated with said light having the second wavelength in a reciprocity law condition; and
the third wavelength is between a longest wavelength in the absorption band region on absorption curves of said photosensitive prepolymer and the absorption band peak wavelength on the absorption curves of one of said polymerization initiator and said sensitizer, said mixture film being irradiated with said light having the third wavelength in the reciprocity law failure condition.

49. The method for fabricating a liquid crystal display device of claim 48, wherein
said photosensitive prepolymer contains a polyester acrylate system material;
said liquid crystal contains tolane system nematic liquid crystal;
said mixture film further contains 2,2-dimethoxy-1,2-diphenylethane- 1-one;
said light having the first wavelength is far-ultraviolet light, the first wavelength being 254 nm;
said light having the second wavelength is ultraviolet light, the second wavelength being 365 nm; and
said light having the third wavelength is ultraviolet light, the third wavelength being 313 nm.

50. The method for fabricating a liquid crystal display device of claim 18 further comprising the step of forming a counter electrode onto a side of said resin film that is opposite said liquid crystal layer.

51. The method for fabricating a liquid crystal display device of claim 20, wherein in said inner-side resin film formation step, said irradiation of said light having the third wavelength is performed through a polarizer.

52. The method for fabricating a liquid crystal display device of claim 50, wherein in said counter electrode formation step, said counter electrode is provided by forming a transparent conductive film onto said resin film on the other side of said liquid crystal layer, and
said method further comprising the step of forming a color filter onto one of said resin film and said counter electrode either before or after said counter electrode formation step.

53. The method for fabricating a liquid crystal display device of claim 50, wherein in said counter electrode formation step, said counter electrode is provided by forming a light-reflecting film onto the side of said resin film that is opposite said liquid crystal layer, and
said method further comprising the step of forming a color filter onto said resin film before said counter electrode formation step.

54. The method for fabricating a liquid crystal display device of claim 18 further comprising the step of forming a common electrode onto said substrate.

55. The method for fabricating a liquid crystal display device of claim 19 further comprising the step of forming a common electrode onto said substrate.

56. The method for fabricating a liquid crystal display device of claim 20 further comprising the step of forming a common electrode onto said substrate.

57. The method for fabricating a liquid crystal display device of claim 56 wherein in said inner-side resin film formation step, said irradiation of said light having the third wavelength is performed through a polarizer.

58. The method for fabricating a liquid crystal display device of claim 54 further comprising the step of forming a color filter onto said resin film.

59. The method for fabricating a liquid crystal display device of claim 58 further comprising the step of forming a transparent electrode onto one of said resin film and said color filter either before or after said color filter formation step.

60. The method for fabricating a liquid crystal display device of claim 58 further comprising the step of forming a conductive light-reflecting film onto said color filter.

61. A liquid crystal display device comprising:
a substrate having an alignment film and one of a pixel signal electrode and a scan electrode formed thereon;
a resin film formed by curing a photosensitive prepolymer contained in a liquid crystal-prepolymer mixture with irradiation of light, said resin film having an other one of the pixel signal electrode and said scan electrode formed thereon; and
a liquid crystal layer sandwiched between said substrate and said resin film.

62. The liquid crystal display device of claim 61 further comprising a color filter arranged either on the other one of the pixel signal electrode and said scan electrode on said resin film side or on an other side of said resin film.

63. A liquid crystal device comprising:
a substrate having an alignment film formed thereon;
a resin film formed by curing a photosensitive prepolymer contained in a liquid crystal-prepolymer mixture with irradiation of light; and
a liquid crystal layer sandwiched between said substrate and said resin film.

64. The liquid crystal device of claim 63 further comprising a supporting member formed between said substrate and said resin film by curing said photosensitive prepolymer with irradiation of light.

65. The liquid crystal device of claim 63 further comprising transparent electrodes formed on said substrate and said resin film.

66. The liquid crystal device of claim 63, wherein said light irradiated to form said resin film is so polarized that molecules of said photosensitive prepolymer are aligned in a direction.

67. The liquid crystal device of claim 64, wherein said light irradiated to form said resin film is so polarized that molecules of said photosensitive prepolymer are aligned in a direction.

68. The liquid crystal device of claim 65, wherein said light irradiated to form said resin film is so polarized that molecules of said photosensitive prepolymer are aligned in a direction.

69. The liquid crystal device of claim 63, wherein said resin film contains an acrylate system material.

70. The liquid crystal device of claim 63, wherein said liquid crystal layer contains nematic liquid crystal.

71. The liquid crystal device of claim 70, wherein said nematic liquid crystal includes tolane system nematic liquid crystal.

72. A method for fabricating a liquid crystal device comprising:
a substrate having an alignment film formed thereon;
a resin film formed by curing a photosensitive prepolymer contained in a liquid crystal-prepolymer mixture with irradiation of light; and
a liquid crystal layer sandwiched between said substrate and said resin film,
said method comprising at least the steps of:
forming a mixture film containing said photosensitive prepolymer and liquid crystal onto said substrate having said alignment film thereon; and
forming said resin film at the surface of said mixture film by irradiating a surface of said mixture film with said light having a first wavelength from an other side of said substrate to extract and cure said photosensitive prepolymer at the surface of said mixture film.

73. The method for fabricating a liquid crystal device of claim 72, wherein in said resin film formation step, said resin film is formed by extracting a predetermined amount of said photosensitive prepolymer contained in said mixture film, and
said method further comprising the step of, by selectively irradiating a predetermined region in said mixture film with light having a second wavelength to cure said photosensitive prepolymer remaining in said mixture film, forming a supporting member in said predetermined region between said substrate and said resin film.

74. The method for fabricating a liquid crystal device of claim 73, wherein in said supporting member formation step, said supporting member is formed by extracting a predetermined amount of said photosensitive prepolymer remaining in said mixture film, and
said method further comprising the step of forming an inner-side resin film onto said resin film on said substrate side by irradiating said mixture film with light having a third wavelength from said resin film side to extract and cure said photosensitive prepolymer remaining in said mixture film.

75. The method for fabricating a liquid crystal device of claim 72, wherein said photosensitive prepolymer contains an acrylate system material.

76. The method for fabricating a liquid crystal device of claim 72, wherein said liquid crystal contains nematic liquid crystal.

77. The method for fabricating a liquid crystal device of claim 76, wherein said liquid crystal contains tolane system nematic liquid crystal.

78. The method for fabricating a liquid crystal device of claim 72, wherein said mixture film further contains one of a polymerization initiator and a sensitizer for said photosensitive prepolymer.

79. The method for fabricating a liquid crystal device of claim 73, wherein said mixture film further contains one of a polymerization initiator and a sensitizer for said photosensitive prepolymer.

80. The method for fabricating a liquid crystal device of claim 74, wherein said mixture film further contains one of a polymerization initiator and a sensitizer for said photosensitive prepolymer.

81. The method for fabricating a liquid crystal device of claim 78, wherein one of said polymerization initiator and said sensitizer contains a benzoyl system material.

82. The method for fabricating a liquid crystal device of claim 79, wherein one of said polymerization initiator and said sensitizer contains a benzoyl system material.

83. The method for fabricating a liquid crystal device of claim 80, wherein one of said polymerization initiator and said sensitizer contains a benzoyl system material.

84. The method for fabricating a liquid crystal device of claim 81, wherein one of said polymerization initiator and said sensitizer contains 2, 2-dimethoxy-1,2-diphenylethane -1-one.

85. The method for fabricating a liquid crystal device of claim 82, wherein one of said polymerization initiator and said sensitizer contains 2,2-dimethoxy-1, 2-diphenylethane- 1-one.

86. The method for fabricating a liquid crystal device of claim 83, wherein one of said polymerization initiator and said sensitizer contains 2,2-dimethoxy- 1,2-diphenylethane- 1-one.

87. The method for fabricating a liquid crystal device of claim 72, wherein said resin film formation step is performed by irradiating said mixture film with said light having the first wavelength in a reciprocity law failure condition.

88. The method for fabricating a liquid crystal device of claim 73, wherein said resin film formation step is performed by irradiating said mixture film with said light having the first wavelength in a reciprocity law failure condition.

89. The method for fabricating a liquid crystal device of claim 74, wherein said resin film formation step is performed by irradiating said mixture film with said light having the first wavelength in a reciprocity law failure condition.

90. The method for fabricating a liquid crystal device of claim 72, wherein the first wavelength is within an absorption band region in absorption curves of said photosensitive prepolymer.

91. The method for fabricating a liquid crystal device of claim 73, wherein the first wavelength is within an absorption band region in absorption curves of said photosensitive prepolymer.

92. The method for fabricating a liquid crystal device of claim 74, wherein the first wavelength is within an absorption band region in absorption curves of said photosensitive prepolymer.

93. The method for fabricating a liquid crystal device of claim 90, wherein
said photosensitive prepolymer contains a polyester acrylate system material; and
said light having the first wavelength is far-ultraviolet light, the first wavelength being 254 nm.

94. The method for fabricating a liquid crystal device of claim 91, wherein
said photosensitive prepolymer contains a polyester acrylate system material; and
said light having the first wavelength is far-ultraviolet light, the first wavelength being 254 nm.

95. The method for fabricating a liquid crystal device of claim 92, wherein
said photosensitive prepolymer contains a polyester acrylate system material; and
said light having the first wavelength is far-ultraviolet light, the first wavelength being 254 nm.

96. The method for fabricating a liquid crystal device of claim 73, wherein
said resin film formation step is performed by irradiating said mixture film with said light having the first wavelength in a reciprocity law failure condition; and
said supporting member formation step is performed by irradiating said mixture film with said light having the second wavelength in a reciprocity law condition.

97. The method for fabricating a liquid crystal device of claim 74, wherein
said resin film formation step is performed by irradiating said mixture film with said light having the first wavelength in a reciprocity law failure condition; and
said supporting member formation step is performed by irradiating said mixture film with said light having the second wavelength in a reciprocity law condition.

98. The method for fabricating a liquid crystal device of claim 73, wherein said light having the second wavelength has smaller absorbance of said photosensitive prepolymer than said light having the first wavelength.

99. The method for fabricating a liquid crystal device of claim 74, wherein said light having the second wavelength has smaller absorbance of said photosensitive prepolymer than said light having the first wavelength.

100. The method for fabricating a liquid crystal device of claim 74, wherein
said resin film formation step is performed by irradiating said mixture film with said light having the first wavelength in a reciprocity law failure condition;
said supporting member formation step is performed by irradiating said mixture film with said light having the second wavelength in a reciprocity law condition; and
said inner-side resin film formation step is performed by irradiating said mixture film with said light having the third wavelength in the reciprocity law failure condition.

101. The method for fabricating a liquid crystal device of claim 74, wherein said light having the third wavelength has absorbance of said photosensitive prepolymer smaller than said light having the first wavelength and larger than said light having the second wavelength.

102. The method for fabricating a liquid crystal device of claim 74, wherein
said mixture film further contains one of a polymerization initiator and a sensitizer for said photosensitive prepolymer;
the first wavelength is within an absorption band region on absorption curves of said photosensitive prepolymer, said mixture film being irradiated with said light having the first wavelength in a reciprocity law failure condition;
the second wavelength is longer than an absorption band peak wavelength on absorption curves of one of said polymerization initiator and said sensitizer, said mixture film being irradiated with said light having the second wavelength in a reciprocity law condition; and
the third wavelength is between a longest wavelength in the absorption band region on absorption curves of said photosensitive prepolymer and the absorption band peak wavelength on the absorption curves of one of said polymerization initiator and said sensitizer, said mixture film being irradiated with said light having the third wavelength in the reciprocity law failure condition.

103. The method for fabricating a liquid crystal device of claim 102, wherein said photosensitive prepolymer contains a polyester acrylate system material;
said liquid crystal contains tolane system nematic liquid crystal;
said mixture film further contains 2,2- dimethoxy-1,2- diphenylethane-1-one;
said light having the first wavelength is far-ultraviolet light, the first wavelength being 254 nm;
said light having the second wavelength is ultraviolet light, the second wavelength being 365 nm; and
said light having the third wavelength is ultraviolet light, the third wavelength being 313 nm.

104. The method for fabricating a liquid crystal device of claim 74, wherein in said inner-side resin film formation step, said irradiation of said light having the third wavelength is performed through a polarizer.

105. A resin/liquid crystal composite comprising:
a first resin film;
a second resin film facing the first resin film; and
a liquid crystal layer sandwiched between the first resin film and the second resin film,
the first resin film, the second resin film and said liquid crystal layer being formed integrally.

106. The resin/liquid crystal composite of claim 105, wherein at least one of the first resin film and the second resin film has an alignment function for aligning liquid crystal molecules in a predetermined direction in said liquid crystal layer.

107. The resin/liquid crystal composite of claim 105, wherein the first resin film and the second resin film are made of a same resin formed by curing a photosensitive prepolymer contained in a liquid crystal-prepolymer mixture with irradiation of light.

108. The resin/liquid crystal composite of claim 106, wherein the first resin film and the second resin film are made of a same resin formed by curing a photosensitive prepolymer contained in a liquid crystal-prepolymer mixture with irradiation of light.

109. The resin/liquid crystal composite of claim 107 further comprising a supporting member for supporting the first resin film and the second resin film with a fixed space therebetween, said supporting member being formed integrally with the first resin film and the second resin film.

110. The resin/liquid crystal composite of claim 108 further comprising a supporting member for supporting the first resin film and the second resin film with a fixed space therebetween, said supporting member being formed integrally with the first resin film and the second resin film.

111. The resin/liquid crystal composite of claim 105, wherein said resin composing the first resin film and the second resin film is a polyester acrylate system material.

112. The resin/liquid crystal composite of claim 105, wherein said liquid crystal layer contains nematic liquid crystal.

113. The resin/liquid crystal composite of claim 112, wherein said nematic liquid crystal is tolane system nematic liquid crystal.

114. A method for fabricating a resin/liquid crystal composite integrally composed of a first resin film, a second resin film facing the first resin film and a liquid crystal layer sandwiched between the first resin film and the second resin film, said method comprising the steps of:
forming a liquid crystal-prepolymer mixture film containing a photosensitive prepolymer and liquid crystal onto a surface of a light-transmitting substrate;
forming a first resin film onto a surface of said liquid crystal-prepolymer mixture film by irradiating the surface of said liquid crystal-prepolymer mixture film with first light having a wavelength and intensity capable of selectively curing only the surface of said liquid crystal-prepolymer mixture film, and by extracting said liquid crystal existing in the surface of said liquid crystal-prepolymer mixture film to said substrate side; and
forming the second resin film onto said liquid crystal-prepolymer mixture film on said substrate side so as to face the first resin film by curing said photosensitive prepolymer remaining in said liquid crystal-prepolymer mixture film with irradiation of second light from a rear side of said substrate, and by arranging dissociated liquid crystal between the first resin film and the second resin film.

115. A method for fabricating a resin/liquid crystal composite integrally composed of a first resin film, a second resin film facing the first resin film and a liquid crystal layer sandwiched between the first resin film and the second resin film, said method comprising the steps of:
forming a liquid crystal-prepolymer mixture film containing a photosensitive prepolymer and liquid crystal onto a surface of a light-transmitting substrate;
forming a protection resin film onto a surface of said liquid crystal-prepolymer mixture film by irradiating the surface of said liquid crystal-prepolymer mixture film with light having a first wavelength not passing through said liquid crystal prepolymer mixture film substantially to cure said photosensitive prepolymer existing in and around the surface of said liquid crystal-prepolymer mixture film selectively, and by extracting said liquid crystal existing in and around the surface of said liquid crystal-prepolymer mixture film to said substrate side;
forming the second resin film on a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said liquid crystal existing in the substrate-side surface of said liquid crystal-prepolymer mixture film to said protective resin side; and
forming the first resin film inside said protection resin film to be integral therewith by photo-curing said photosensitive prepolymer remaining in said liquid crystal-prepolymer mixture film by irradiating said liquid crystal-prepolymer mixture film with said light having the third wavelength from said protection resin film side through said protection resin film, and by arranging dissociated liquid crystal between the first resin film and the second resin film.

116. A method for fabricating a resin/liquid crystal composite integrally composed of a first resin film; a second resin film facing the first resin film; a liquid crystal layer sandwiched between the first resin film and the second resin film; and a supporting member supporting the first resin film and the second resin film with a predetermined space therebetween, said method comprising the steps of:
forming a liquid crystal-prepolymer mixture film containing at least a photosensitive prepolymer and liquid crystal onto a surface of a light-transmitting substrate;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said liquid crystal existing in and around the surface of said liquid crystal-prepolymer mixture film to said substrate side;
forming said supporting member made from said photosensitive prepolymer cured in a desired form by putting a mask in a desired pattern onto said protection resin film and by irradiating said liquid crystal-prepolymer mixture film with light having a second wavelength through said mask;
forming the second resin film onto a substrate-side surface of said liquid crystal-prepolymer mixture film by selectively photo-curing said photosensitive prepolymer existing in the substrate-side surface of said liquid crystal-prepolymer mixture film by irradiating said liquid crystal-prepolymer mixture film with light having a third wavelength from a rear side of said substrate through said substrate and a polarizer, and by extracting said liquid crystal existing in the substrate-side surface to said protection resin film side; and
forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength through said protection resin film and a polarizer laid thereon, and by arranging dissociated liquid crystal between the first resin film and the second resin film.

117. The method for fabricating a resin/liquid crystal composite of claim 115, wherein
the first wavelength is within an absorption band region in absorption curves of said photosensitive prepolymer; and
said light having the third wavelength has smaller absorbance of said photosensitive prepolymer than said light having the first wavelength.

118. The method for fabricating a resin/liquid crystal composite of claim 117, wherein said irradiation of said light having the first wavelength and said light having the third wavelength is performed in a reciprocity law failure condition.

119. The method for fabricating a resin/liquid crystal composite of claim 118, wherein
said photosensitive prepolymer contains a polyester acrylate system compound; and
said light having the first wavelength is far-ultraviolet light, the first wavelength being 254 nm.

120. The method for fabricating a resin/liquid crystal composite of claim 116, wherein
the first wavelength is within an absorption band region in absorption curves of said photosensitive prepolymer;
said light having the second wavelength has smaller absorbance of said photosensitive prepolymer than said light having the first wavelength; and
said light having the third wavelength has smaller absorbance of said photosensitive prepolymer than said light having the first wavelength and larger absorbance than said light having the second wavelength.

121. The method for fabricating a resin/liquid crystal composite of claim 120, wherein
said liquid crystal-prepolymer mixture film further contains one of a polymerization initiator and a sensitizer;
in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition;
the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and
in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

122. The method for fabricating a resin/liquid crystal composite of claim 115, wherein said liquid crystal is nematic liquid crystal.

123. The method for fabricating a resin/liquid crystal composite of claim 122, wherein said nematic liquid crystal is tolane system nematic liquid crystal.

124. The method for fabricating a resin/liquid crystal composite of claim 121, wherein one of said polymerization initiator and said sensitizer is a benzoyl system compound.

125. The method for fabricating a resin/liquid crystal composite of claim 124, wherein said benzoyl system compound is 2,2-dimethoxy-1,2-diphenylethane- 1-one.

126. The method for fabricating a resin/liquid crystal composite of claim 121, wherein
said photosensitive prepolymer contains a polyester acrylate system material;
said liquid crystal contains tolane system nematic liquid crystal;
said liquid crystal-prepolymer film further contains 2,2-dimethoxy- 1,2-diphenylethane -1 -one;
said light having the first wavelength is far-ultraviolet light, the first wavelength being 254 nm;
said light having the second wavelength is ultraviolet light, the second wavelength being 365 nm; and
said light having the third wavelength is ultraviolet light, the third wavelength being 313 nm.

127. A liquid crystal display device comprising:
a substrate-side resin film made from a photosensitive prepolymer which has been polymerized, said substrate-side resin film being formed onto a surface of a substrate at least having a pixel electrode and a switching element connected with the pixel electrode;
a counter resin film made from said photosensitive prepolymer which has been polymerized, said counter resin film being arranged to face said substrate-side resin film; and
a liquid crystal layer sandwiched between said substrate-side resin film and said counter resin film,
said substrate-side resin film, said counter resin film and said liquid crystal layer being formed integrally.

128. The liquid crystal display device of claim 127 further comprising a supporting member formed between said substrate-side resin film and said counter resin film in a manner to be integral therewith.

129. The liquid crystal display device of claim 127, wherein said substrate-side resin film and said counter resin film contain a polyester acrylate system compound.

130. The liquid crystal display device of claim 128, wherein said substrate-side resin film and said counter resin film contain a polyester acrylate system compound.

131. The liquid crystal display device of claim 127, wherein said liquid crystal layer contains nematic liquid crystal.

132. The liquid crystal display device of claim 131, wherein said nematic liquid crystal includes tolane system nematic liquid crystal.

133. The liquid crystal display device of claim 127 further comprising a counter electrode arranged on a side of said counter resin film that is opposite said liquid crystal layer, wherein
at least one of said counter resin film and said substrate-side resin film is formed by photo-curing said photosensitive prepolymer with irradiation of polarized light to align molecules of said photosensitive prepolymer in a direction.

134. The liquid crystal display device of claim 128 further comprising a counter electrode arranged on a side of said counter resin film that is opposite said liquid crystal layer, wherein
at least one of said counter resin film and said substrate-side resin film is formed by photo-curing said photosensitive prepolymer with irradiation of polarized light to align molecules of said photosensitive prepolymer in a direction.

135. The liquid crystal display device of claim 133 further comprising a color filter arranged on the side of said counter resin film that is opposite said liquid crystal layer.

136. The liquid crystal display device of claim 135, wherein said counter electrode is made of a transparent conductive film and is formed either between said counter resin film and said color filter or on a side of said color filter that is opposite said counter resin film.

137. The liquid crystal display device of claim 135, wherein
said counter electrode is made from a light-reflecting material; and
said color filter is formed between said counter resin film and said counter electrode.

138. The liquid crystal display device of claim 127, wherein said substrate further has a common electrode thereon.

139. The liquid crystal display device of claim 128, wherein said substrate further has a common electrode thereon.

140. The liquid crystal display device of claim 138, wherein at least one of said counter resin film and said substrate-side resin film is formed by photo-curing said photosensitive prepolymer with irradiation of polarized light to align molecules of said photosensitive prepolymer in a direction.

141. The liquid crystal display device of claim 139, wherein at least one of said counter resin film and said substrate-side resin film is formed by photo-curing said photosensitive prepolymer with irradiation of polarized light to align molecules of said photosensitive prepolymer in a direction.

142. The liquid crystal display device of claim 138 further comprising a color filter arranged on the side of said counter resin film that is opposite said liquid crystal layer.

143. The liquid crystal display device of claim 142 further comprising an electrode made of a transparent conductive film, said electrode being formed either between said counter resin film and said color filter or on a side of said color filter that is opposite said counter resin film.

144. The liquid crystal display device of claim 142 further comprising an electrode made from a light-reflecting material, said electrode being arranged on a side of said color filter that is opposite said counter resin film.

145. A method for fabricating a liquid crystal display device comprising:
a substrate-side resin film made from a photosensitive prepolymer which has been polymerized, said substrate-side resin film being formed on a surface of a light-transmitting substrate having a pixel electrode and a switching element connected with the pixel electrode;
a counter resin film made from said photosensitive prepolymer which has been polymerized, said counter resin film being arranged to face said substrate-side resin film; and
a liquid crystal layer sandwiched between said substrate-side resin film and said counter resin film,
said substrate-side resin film, said counter resin film and said liquid crystal layer being formed integrally,
said method comprising the steps of:
forming the pixel electrode and the switching element connected with the pixel electrode onto said light-transmitting substrate;
forming a liquid crystal-prepolymer mixture film consisting of said photosensitive prepolymer and liquid crystal onto a surface of said substrate having the pixel electrode and the switching element;
forming a counter resin film onto a surface of said liquid crystal-prepolymer mixture film by irradiating the surface of said liquid crystal-prepolymer mixture film with light having a wavelength and intensity capable of selectively photo-curing only the surface of said liquid crystal-prepolymer mixture film, and by extracting said liquid crystal existing in the surface of said liquid crystal-prepolymer mixture film to said substrate side; and
forming the substrate-side resin film onto said liquid crystal-prepolymer mixture film on said substrate side so as to face said counter resin film by photo-curing said photosensitive prepolymer remaining in said liquid crystal-prepolymer mixture film with irradiation of light from a rear side of said substrate, and to sandwich dissociated liquid crystal between said counter resin film and said substrate-side resin film.

146. A method for fabricating a liquid crystal display device comprising:
a substrate-side resin film made from a photosensitive prepolymer which has been cured, said substrate-side resin film being formed onto a surface of a light-transmitting substrate having a pixel electrode and a switching element connected with the pixel electrode formed thereon;
a counter resin film made from said photosensitive prepolymer which has been cured, said counter resin film being formed to face said substrate-side resin film; and
a liquid crystal layer sandwiched between said substrate-side resin film and said counter resin film,
said substrate-side resin film, said counter resin film and said liquid crystal layer being formed integrally,
said method comprising the steps of:
forming the pixel electrode and the switching element connected with the pixel electrode onto said light-transmitting substrate;
forming a liquid crystal-prepolymer mixture film consisting of said photosensitive prepolymer and liquid crystal onto a surface of said substrate having the pixel electrode and the switching element thereon;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said liquid crystal existing in and around the surface of said liquid crystal-prepolymer mixture film to said substrate side;
forming the substrate-side resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said liquid crystal existing in and around the substrate-side surface of said liquid crystal prepolymer mixture film to said protection resin film side; and
forming the first resin film inside said protection resin film to be integral therewith by curing said photosensitive prepolymer remaining in said liquid crystal-prepolymer mixture film by irradiating said liquid crystal-prepolymer mixture film with said light having the third wavelength from said protection resin film side through said protection resin film so as to sandwich dissociated liquid crystal between the first resin film and the substrate-side resin film.

147. A method for fabricating a liquid crystal display device comprising:
a substrate-side resin film made from a photosensitive prepolymer which has been photo-cured, said substrate-side resin film being formed onto a surface of a light-transmitting substrate having a pixel electrode and a switching element connected with the pixel electrode formed thereon;
a counter resin film made from said photosensitive prepolymer which has been photo-cured, said counter resin film being formed to face said substrate-side resin film; and
a liquid crystal layer sandwiched between said substrate-side resin film and said counter resin film,
said substrate-side resin film, said counter resin film and said liquid crystal layer being formed integrally,
said method comprising the steps of:
forming the pixel electrode and the switching element connected with the pixel electrode onto said light-transmitting substrate;
forming a liquid crystal-prepolymer mixture film consisting of said photosensitive prepolymer and liquid crystal onto a surface of said substrate having the pixel electrode and the switching element;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said liquid crystal existing in and around the surface of said liquid crystal-prepolymer mixture film to said substrate side;
forming a supporting member made from said photosensitive prepolymer selectively photo-cured in a desired form by putting a mask in a desired pattern onto said protection resin film and by irradiating said liquid crystal-prepolymer mixture film with light having a second wavelength through said mask;
forming the substrate-side resin film onto a substrate-side surface of said liquid crystal-prepolymer mixture film by selectively curing said photosensitive prepolymer existing in the substrate-side surface of said liquid crystal-prepolymer mixture film by irradiating said liquid crystal-prepolymer mixture film with light having a third wavelength from a rear side of said substrate through said substrate and a polarizer, and by extracting said liquid crystal existing in the substrate-side surface of said liquid crystal-prepolymer mixture film to said protection resin film side; and
forming the first resin film inside said protection resin film to be integrated therewith by curing said photosensitive prepolymer remaining in said liquid crystal-prepolymer mixture film by irradiating said liquid crystal-prepolymer mixture film with said light having the third wavelength from said protection resin film side through said protection resin film and a polarizer laid thereon, further forming said counter resin film from said protection resin film and the first resin film so as to sandwich dissociated liquid crystal between the first resin film and the substrate-side resin film.

148. The method for fabricating a liquid crystal display device of claim 146, wherein
the first wavelength is within an absorption band region in absorption curves of said photosensitive prepolymer; and
said light having the third wavelength has smaller absorbance of said photosensitive prepolymer than said light having the first wavelength.

149. The method for fabricating a liquid crystal display device of claim 148, wherein said irradiation of said light having the first wavelength and said light having the third wavelength is performed in a reciprocity law failure condition.

150. The method for fabricating a liquid crystal display device of claim 149, wherein
said photosensitive prepolymer contains a polyester acrylate system compound; and
said light having the first wavelength is far-ultraviolet light, the first wavelength being 254 nm.

151. The method for fabricating a liquid crystal display device of claim 147, wherein
the first wavelength is within an absorption band region in absorption curves of said photosensitive prepolymer;
said light having the second wavelength has smaller absorbance of said photosensitive prepolymer than said light having the first wavelength; and
said light having the third wavelength has smaller absorbance of said photosensitive prepolymer than said light having the first wavelength and larger absorbance than said light having the second wavelength.

152. The method for fabricating a liquid crystal display device of claim 151, wherein
said liquid crystal-prepolymer mixture film further contains one of a polymerization initiator and a sensitizer;
in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition;
the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and
in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

153. The method for fabricating a liquid crystal display device of claim 146, wherein said liquid crystal is nematic liquid crystal.

154. The method for fabricating a liquid crystal display device of claim 153, wherein said nematic liquid crystal contains tolane system nematic liquid crystal.

155. The method for fabricating a liquid crystal display device of claim 152, wherein one of said polymerization initiator and said sensitizer is a benzoyl system compound.

156. The method for fabricating a liquid crystal display device of claim 155, wherein said benzoyl system compound is 2,2-dimethoxy- 1,2-diphenylethane-1-one.

157. The method for fabricating a liquid crystal display device of claim 152, wherein
said photosensitive prepolymer contains a polyester acrylate system material;
said liquid crystal contains tolane system nematic liquid crystal;
said liquid crystal-prepolymer mixture film further contains 2, 2-dimethoxy- 1,2- diphenylethane- 1-one;
said light having the first wavelength is far-ultraviolet light, the first wavelength being 254 nm;
said light having the second wavelength is ultraviolet light, the second wavelength being 365 nm; and
said light having the third wavelength is ultraviolet light, the third wavelength being 313 nm.

158. The method for fabricating a liquid crystal display device of claim 145 further comprising the step of forming a counter electrode onto a side of said counter resin film that is opposite said liquid crystal layer.

159. The method for fabricating a liquid crystal display device of claim 158, wherein in said counter electrode formation step, said counter electrode is provided by forming a transparent conductive film onto the side of said counter resin film that is opposite said liquid crystal layer, and
said method further comprising the step of forming a color filter onto one of said counter resin film and said counter electrode either before or after said counter electrode formation step.

160. The method for fabricating a liquid crystal display device of claim 158, wherein in said counter electrode formation step, said counter electrode is provided by forming a light-reflecting film onto the side of said counter resin film that is opposite said liquid crystal layer, and
said method further comprising the step of forming a color filter onto said counter resin film before said counter electrode formation step.

161. The method for fabricating a liquid crystal display device of claim 145 further comprising the step of forming a common electrode onto said substrate.

162. The method for fabricating a liquid crystal display device of claim 146 further comprising the step of forming a common electrode onto said substrate.

163. The method for fabricating a liquid crystal display device of claim 147 further comprising the step of forming a common electrode onto said substrate.

164. The method for fabricating a liquid crystal display device of claim 161, wherein in at least one of said first resin film formation step and said substrate-side resin film formation step, said irradiation of said light having the third wavelength is performed through a polarizer.

165. The method for fabricating a liquid crystal display device of claim 162, wherein in at least one of said first resin film formation step and said substrate-side resin film formation step, said irradiation of said light having the third wavelength is performed through a polarizer.

166. The method for fabricating a liquid crystal display device of claim 163, wherein in at least one of said first resin film formation step and said substrate-side resin film formation step, said irradiation of said light having the third wavelength is performed through a polarizer.

167. The method for fabricating a liquid crystal display device of claim 161 further comprising the step of forming a color filter onto said counter resin film.

168. The method for fabricating a liquid crystal display device of claim 167 further comprising the step of forming a transparent electrode onto one of said counter resin film and said color filter either before or after said color filter formation step.

169. The method for fabricating a liquid crystal display device of claim 167 further comprising the step of forming a conductive light-reflecting film onto said color filter.

170. A liquid crystal display device comprising:
a substrate-side resin film made from a photosensitive prepolymer which has been polymerized, said substrate-side resin film being formed on a surface of a substrate having one of a pixel signal electrode and a scan electrode thereon;
a counter resin film made from said photosensitive prepolymer which has been polymerized, said counter resin film having an other one of the pixel signal electrode and the scan electrode thereon, and being arranged to face said substrate-side resin film; and
a liquid crystal layer sandwiched between said substrate-side resin film and said counter resin film,
said substrate-side resin film, said counter resin film and said liquid crystal layer being formed integrally.

171. The liquid crystal display device of claim 170 further comprising a color filter formed onto the other one of the pixel signal electrode and the scan electrode either on said counter resin film side or on an other side thereof.

172. A resin/liquid crystal composite comprising:
a first resin film;
a second resin film facing the first resin film; and
a liquid crystal layer containing a dichroic dye, said liquid crystal layer being sandwiched between the first resin film and the second resin film,
the first resin film, the second resin film and said liquid crystal layer being formed integrally.

173. The resin/liquid crystal composite of claim 172, wherein at least one of the first resin film and the second resin film has an alignment function for aligning liquid crystal molecules a predetermined direction in said liquid crystal layer containing said dichroic dye.

174. The resin/liquid crystal composite of claim 172, wherein the first resin film and the second resin film are made of a same resin formed by photo-curing a photosensitive prepolymer contained in a liquid crystal-prepolymer mixture with irradiation of light.

175. The resin/liquid crystal composite of claim 173, wherein the first resin film and the second resin film are made of a same resin formed by photo-curing a photosensitive prepolymer contained in a liquid crystal-prepolymer mixture with irradiation of light.

176. The resin/liquid crystal composite of claim 174 further comprising a supporting member for supporting the first resin film and the second resin film with a fixed space therebetween, said supporting member being formed integrally with the first resin film and the second resin film.

177. The resin/liquid crystal composite of claim 175 further comprising a supporting member for supporting the first resin film and the second resin film with a fixed space therebetween, said supporting member being formed integrally with the first resin film and the second resin film.

178. The resin/liquid crystal composite of claim 172, wherein said resin composing the first resin film and the second resin film is a polyester acrylate system material.

179. The resin/liquid crystal composite of claim 172, wherein said liquid crystal layer contains nematic liquid crystal.

180. The resin/liquid crystal composite of claim 179, wherein said nematic liquid crystal is tolane system nematic liquid crystal.

181. A method for fabricating a resin/liquid crystal composite integrally composed of a first resin film; a second resin film facing the first resin film; and a liquid crystal layer which contains a dichroic dye and is sandwiched between the first resin film and the second resin film, said method comprising the steps of:
forming a liquid crystal-prepolymer mixture film containing a photosensitive prepolymer, said dichroic dye and liquid crystal onto a surface of a light-transmitting substrate;
forming the first resin film onto a surface of said liquid crystal-prepolymer mixture film by irradiating the surface of said liquid crystal-prepolymer mixture film with first light having a wavelength and intensity capable of selectively curing only the surface of said liquid crystal-prepolymer mixture film, and by extracting said dichroic dye and said liquid crystal existing in the surface of said liquid crystal-prepolymer mixture film to said substrate side; and
forming the second resin film onto a substrate-side surface of said liquid crystal prepolymer mixture film so as to face the first resin film by curing said photosensitive prepolymer remaining in said liquid crystal-prepolymer mixture film with irradiation of second light from a rear side of said substrate, and by arranging dissociated dichroic dye and liquid crystal between the first resin film and the second resin film.

182. A method for fabricating a resin/liquid crystal composite integrally composed of a first resin film; a second resin film facing the first resin film; and a liquid crystal layer which contains a dichroic dye and is sandwiched between the first resin film and the second resin film, said method comprising the steps of:
forming a liquid crystal-prepolymer mixture film containing a photosensitive prepolymer, said dichroic dye and liquid crystal onto a surface of a light-transmitting substrate;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to cure the photosensitive prepolymer existing in and around the surface of said liquid crystal-prepolymer mixture film selectively, and by extracting said dichroic dye and said liquid crystal existing in and around the surface of said liquid crystal-prepolymer mixture film to said substrate side;
forming the second resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said dichroic dye and said liquid crystal existing in and around the substrate-side surface of said liquid crystal-prepolymer mixture film to said protective resin side; and
forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength from said protection resin film side through said protection resin film, so as to sandwich dissociated dichroic dye and liquid crystal between the first resin film and the second resin film.

183. A method for fabricating a resin/liquid crystal composite integrally composed of a first resin film; a second resin film facing the first resin film; a liquid crystal layer which contains a dichroic dye and is sandwiched between the first resin film and the second resin film and a supporting member supporting the first resin film and the second resin film with a predetermined space therebetween, said method comprising the steps of:
forming a liquid crystal-prepolymer mixture film containing at least a photosensitive prepolymer, said dichroic dye and liquid crystal onto a surface of a light-transmitting substrate;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure the photosensitive prepolymer existing in and around the surface of said liquid crystal-prepolymer mixture film selectively by extracting said dichroic dye and said liquid crystal existing in and around the surface of said liquid crystal-prepolymer mixture film to said substrate side;
forming said supporting member made from said photosensitive prepolymer which has been photo-cured in a desired form by putting a mask in a desired pattern onto said protection resin film and by irradiating said liquid crystal-prepolymer mixture film with light having a second wavelength through said mask;
forming the second resin film onto a substrate-side surface of said liquid crystal-prepolymer mixture film by selectively photo-curing said photosensitive prepolymer existing in the substrate-side surface of said liquid crystal-prepolymer mixture film by irradiating said liquid crystal-prepolymer mixture film with light having a third wavelength from a rear side of said substrate through said substrate and a polarizer, and by extracting said dichroic dye and said liquid crystal existing in the substrate-side surface to said protection resin film side; and
forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength through said protection resin film and a polarizer laid thereon, and by forming dissociated dichroic dye and liquid crystal between the first resin film and the second resin film.

184. The method for fabricating a resin/liquid crystal composite of claim 182, wherein
the first wavelength is within an absorption band region in absorption curves of said photosensitive prepolymer; and
said light having the third wavelength has smaller absorbance of said photosensitive prepolymer than said light having the first wavelength.

185. The method for fabricating a resin/liquid crystal composite of claim 184, wherein said irradiation of said light having the first wavelength and said light having the third wavelength is performed in a reciprocity law failure condition.

186. The method for fabricating a resin/liquid crystal composite of claim 185, wherein
said photosensitive prepolymer contains a polyester acrylate system compound; and
said light having the first wavelength is far-ultraviolet light, the first wavelength being 254 nm.

187. The method for fabricating a resin/liquid crystal composite of claim 183, wherein
the first wavelength is within an absorption band region in absorption curves of said photosensitive prepolymer;
said light having the second wavelength has smaller absorbance of said photosensitive prepolymer than said light having the first wavelength; and
said light having the third wavelength has smaller absorbance of said photosensitive prepolymer than said light having the first wavelength and larger absorbance than said light having the second wavelength.

188. The method for fabricating a resin/liquid crystal composite of claim 187, wherein
said liquid crystal-prepolymer mixture film further contains one of a polymerization initiator and a sensitizer;
in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition;
the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and
in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

189. The method for fabricating a resin/liquid crystal composite of claim 182, wherein said liquid crystal layer contains nematic liquid crystal.

190. The method for fabricating a resin/liquid crystal composite of claim 189, wherein said nematic liquid crystal is tolane system nematic liquid crystal.

191. The method for fabricating a resin/liquid crystal composite of claim 188, wherein one of said polymerization initiator and said sensitizer is a benzoyl system compound.

192. The method for fabricating a resin/liquid crystal composite of claim 191, wherein said benzoyl system compound is 2,2-dimethoxy-1,2-diphenylethane- 1-one.

193. The method for fabricating a resin/liquid crystal composite of claim 188, wherein
said photosensitive prepolymer contains a polyester acrylate system material;
said liquid crystal layer which contains said dichroic dye contains tolane system nematic liquid crystal;
said liquid crystal-prepolymer mixture film further contains 2,2-dimethoxy- 1,2-diphenylethane -1 -one;
said light having the first wavelength is far-ultraviolet light, the first wavelength being 254 nm;
said light having the second wavelength is ultraviolet light, the second wavelength being 365 nm and
said light having the third wavelength is ultraviolet light, the third wavelength being 313 nm.

194. A liquid crystal display device comprising:
a substrate-side resin film made from a photosensitive prepolymer which has been polymerized, said substrate-side resin film being formed onto a surface of a substrate at least having a pixel electrode and a switching element connected with the pixel electrode;
a counter resin film made from said photosensitive prepolymer which has been polymerized, said counter resin film being arranged to face said substrate-side resin film; and
a liquid crystal layer containing a dichroic dye, said liquid crystal layer being sandwiched between said substrate-side resin film and said counter resin film,
said substrate-side resin film, said counter resin film and said liquid crystal layer being formed integrally.

195. The liquid crystal display device of claim 194 further comprising a counter electrode arranged on a side of said counter resin film that is opposite said liquid crystal layer, wherein
said counter electrode, said substrate-side resin film, said counter resin film and said liquid crystal layer compose a display layer, and
a plurality of display layers having respective liquid crystal layers are formed, said respective liquid crystal layers containing different dichroic dyes from each other.

196. The liquid crystal display device of claim 195, wherein
said plurality of display layers have a three-layered structure and
said dichroic dyes contained in said respective liquid crystal layers are yellow, magenta and cyan.

197. The liquid crystal display device of claim 194 further comprising a supporting member arranged between said substrate-side resin film and said counter resin film in a manner to be integral therewith.

198. The liquid crystal display device of claim 195 further comprising a supporting member formed between said substrate-side resin film and said counter resin film in a manner to be integral therewith.

199. The liquid crystal display device of claim 196 further comprising a supporting member formed between said substrate-side resin film and said counter resin film in a manner to be integral therewith.

200. The liquid crystal display device of claim 194, wherein said substrate-side resin film and said counter resin film contain a polyester acrylate system compound.

201. The liquid crystal display device of claim 194, wherein said liquid crystal layer contains nematic liquid crystal.

202. The liquid crystal display device of claim 201, wherein said nematic liquid crystal is tolane system nematic liquid crystal.

203. The liquid crystal display device of claim 194, wherein at least one of said counter resin film and said substrate-side resin film is formed by photo-curing said photosensitive prepolymer with irradiation of polarized light to align molecules of said photosensitive prepolymer in a direction.

204. The liquid crystal display device of claim 195, wherein at least one of said counter resin film and said substrate-side resin film is formed by photo-curing said photosensitive prepolymer with irradiation of polarized light to align molecules of said photosensitive prepolymer in a direction.

205. The liquid crystal display device of claim 196, wherein at least one of said counter resin film and said substrate-side resin film is formed by photo-curing said photosensitive prepolymer with irradiation of polarized light to align molecules of said photosensitive prepolymer in a direction.

206. The liquid crystal display device of claim 196, wherein of counter electrodes included in said plurality of display layers, an outermost counter electrode is made from a light-reflecting material.

207. The liquid crystal display device of claim 196, wherein said counter electrode contained in each of said plurality of display layers is made from a transparent conductive film.

208. A method for fabricating a liquid crystal display device comprising:
a substrate-side resin film made from a photosensitive prepolymer which has been polymerized, said substrate-side resin film being formed on a surface of a light-transmitting substrate having a pixel electrode and a switching element connected with the pixel electrode;
a counter resin film made from said photosensitive prepolymer which has been polymerized, said counter resin film being arranged to face said substrate-side resin film; and
a liquid crystal layer sandwiched between said substrate-side resin film and said counter resin film, said liquid crystal layer containing a dichroic dye,
said substrate-side resin film, said counter resin film and said liquid crystal layer being formed integrally,
said method comprising the steps of:
forming the pixel electrode and the switching element connected with the pixel electrode onto said light-transmitting substrate;
forming a liquid crystal-prepolymer mixture film consisting of said photosensitive prepolymer, said dichroic dye and liquid crystal onto a surface of said substrate having the pixel electrode and the switching element;
forming a counter resin film on a surface of said liquid crystal-prepolymer mixture film by irradiating the surface of said liquid crystal-prepolymer mixture film with light having a wavelength and intensity capable of selectively photo-curing only the surface of said liquid crystal-prepolymer mixture film, and by extracting said liquid crystal and said dichroic dye existing in the surface of said liquid crystal-prepolymer mixture film to said substrate side; and
forming the substrate-side resin film onto said liquid crystal-prepolymer mixture film on said substrate side so as to face said counter resin film by photo-curing said photosensitive prepolymer remaining in said liquid crystal-prepolymer mixture film with irradiation of light from a rear side of said substrate, and by extracting dissociated liquid crystal and dichroic dye between said counter resin film and said substrate-side resin film.

209. A method for fabricating a liquid crystal display device comprising:
a substrate-side resin film made from a photosensitive prepolymer which has been photo-cured, said substrate-side resin film being formed onto a surface of a light-transmitting substrate having a pixel electrode and a switching element connected with the pixel electrode formed thereon;
a counter resin film made from said photosensitive prepolymer which has been photo-cured, said counter resin film being arranged to face said substrate-side resin film; and
a liquid crystal layer sandwiched between said substrate-side resin film and said counter resin film, said liquid crystal layer containing a dichroic dye,
said substrate-side resin film, said counter resin film and said liquid crystal layer being formed integrally,
said method comprising the steps of:
forming the pixel electrode and the switching element connected with the pixel electrode onto said light-transmitting substrate;
forming a liquid crystal-prepolymer mixture film consisting of said photosensitive prepolymer, said dichroic dye and liquid crystal onto a surface of said substrate;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer existing in and around the surface of said liquid crystal-prepolymer mixture film selectively, and by extracting said dichroic dye and said liquid crystal existing in and around the surface of said liquid crystal-prepolymer mixture film to said substrate side;
forming the substrate-side resin film onto a substrate-side surface of said liquid crystal-prepolymer mixture film by selectively photo-curing said photosensitive prepolymer existing in and around the substrate-side surface of said liquid crystal-prepolymer mixture film by irradiating said liquid crystal-prepolymer mixture film with light having a third wavelength from a rear side of said substrate, and by extracting said dichroic dye and said liquid crystal existing in and around the substrate-side surface of said liquid crystal-prepolymer mixture film to said protection resin film side; and
forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength from said protection resin film side, and by forming dissociated dichroic dye and liquid crystal between the first resin film and the substrate-side resin film.

210. A method for fabricating a liquid crystal display device comprising:
a substrate-side resin film made from a photosensitive prepolymer which has been photo-cured, said substrate-side resin film being formed onto a surface of a light-transmitting substrate having a pixel electrode and a switching element connected with the pixel electrode formed thereon;
a counter resin film made from said photosensitive prepolymer which has been photo-cured, said counter resin film being arranged to face said substrate-side resin film; and
a liquid crystal layer sandwiched between said substrate-side resin film and said counter resin film, said liquid crystal layer containing a dichroic dye,
said substrate-side resin film, said counter resin film and said liquid crystal layer being formed integrally,
said method comprising the steps of:
forming the pixel electrode and the switching element connected with the pixel electrode onto said light-transmitting substrate;
forming a liquid crystal-prepolymer mixture film consisting of said photosensitive prepolymer, said dichroic dye and liquid crystal onto a surface of said substrate;
forming a protection resin film onto a surface of said liquid crystal-prepolymer mixture film by irradiating the surface of said liquid crystal-prepolymer mixture film with light having a first wavelength not passing through said liquid crystal-prepolymer mixture film substantially to photo-cure said photosensitive prepolymer in and around the surface of said liquid crystal-prepolymer mixture film selectively, and by extracting said dichroic dye and said liquid crystal existing in and around the surface of said liquid crystal-prepolymer mixture film to said substrate side;
forming a supporting member made from said photosensitive prepolymer photo-cured in a desired form by putting a mask in a desired pattern onto said protection resin film and by forming said liquid crystal-prepolymer mixture film with light having a second wavelength through said mask;
forming the substrate-side resin film onto a substrate-side surface of said liquid crystal-prepolymer mixture film by selectively photo-curing said photosensitive prepolymer existing in and around the substrate-side surface of said liquid crystal prepolymer mixture film by irradiating said liquid crystal-prepolymer mixture film with light having a third wavelength from a rear side of said substrate through a polarizer, and by extracting said dichroic dye and said liquid crystal existing in and around the substrate-side surface of said liquid crystal-prepolymer mixture film to said protection resin film side; and
forming the first resin film inside said protection resin film to be integrated therewith by photo-curing said photosensitive prepolymer remaining in said liquid crystal-prepolymer mixture film by irradiating said liquid crystal-prepolymer mixture film with said light having the third wavelength from said protection resin film side through a polarizer laid on said protection resin film, further forming said counter resin film from said protection resin film and the first resin film by extracting dissociated dichroic dye and liquid crystal between the first resin film and the substrate-side resin film.

211. The method for fabricating a liquid crystal display device of 209, wherein
the first wavelength is within an absorption band region in absorption curves of said photosensitive prepolymer; and
said light having the third wavelength has smaller absorbance of said photosensitive prepolymer than said light having the first wavelength.

212. The method for fabricating a liquid crystal display device of 211, wherein said irradiation of said light having the first wavelength and said light having the third wavelength is performed in a reciprocity law failure condition.

213. The method for fabricating a liquid crystal display device of 212, wherein
said photosensitive prepolymer contains a polyester acrylate system compound; and
said light having the first wavelength is far-ultraviolet light, the first wavelength being 254 nm.

214. The method for fabricating a liquid crystal display device of 210, wherein
the first wavelength is within an absorption band region in absorption curves of said photosensitive prepolymer;
said light having the second wavelength has smaller absorbance of said photosensitive prepolymer than said light having the first wavelength; and
said light having the third wavelength has smaller absorbance of said photosensitive prepolymer than said light having the first wavelength and larger absorbance than said light having the second wavelength.

215. The method for fabricating a liquid crystal display device of 214, wherein
said liquid crystal-prepolymer mixture film further contains one of a polymerization initiator and a sensitizer;
in said protection resin film formation step, the first wavelength is within an absorption band region in absorption curves of said photosensitive prepolymer, and said irradiation of said liquid crystal-prepolymer mixture film with said light having the first wavelength is performed in a reciprocity law failure condition;
the second wavelength is longer than an absorption band peak wavelength in absorption curves of one of said polymerization initiator and said sensitizer, and said irradiation of said liquid crystal-prepolymer mixture film with said light having the second wavelength is performed in a reciprocity law condition; and
in said first resin film formation step and said second resin film formation step, the third wavelength is between a longest wavelength in the absorption band region in absorption curves of said photosensitive prepolymer and the absorption band peak wavelength in the absorption curves of one of said polymerization initiator and said sensitizer, and said irradiation of said liquid crystal-prepolymer mixture film with said light having the third wavelength is performed in the reciprocity law failure condition.

216. The method for fabricating a liquid crystal display device of 209, wherein said liquid crystal layer containing said dichroic dye contains nematic liquid crystal.

217. The method for fabricating a liquid crystal display device of 216, wherein said nematic liquid crystal is tolane system nematic liquid crystal.

218. The method for fabricating a liquid crystal display device of 215, wherein one of said polymerization initiator and said sensitizer is a benzoyl system compound.

219. The method for fabricating a liquid crystal display device of 218, wherein said benzoyl system compound is 2,2-dimethoxy-1,2-diphenylethane-1-one.

220. The method for fabricating a liquid crystal display device of 215, wherein
said photosensitive prepolymer contains a polyester acrylate system material;
said liquid crystal layer containing said dichroic dye contains tolane system nematic liquid crystal and one of an azo system dye, a perylene system dye and an anthraquinone system dye;
said liquid crystal-prepolymer mixture film further contains 2,2-dimethoxy- 1,2-diphenylethane- 1-one;
said light having the first wavelength is far-ultraviolet light, the first wavelength being 254 nm;
said light having the second wavelength is ultraviolet light, the second wavelength being 365 nm; and
said light having the third wavelength is ultraviolet light, the third wavelength being 313 nm.

221. The method for fabricating a liquid crystal display device of 208 further comprising the step of forming a counter electrode onto a side of said counter resin film that is opposite said liquid crystal layer.

222. The method for fabricating a liquid crystal display device of 221, wherein in said counter electrode formation step, said counter electrode is provided by forming a transparent conductive film onto the side of said counter resin film that is opposite said liquid crystal layer containing said dichroic dye.

223. The method for fabricating a liquid crystal display device of 221, wherein in said counter electrode formation step, said counter electrode is provided by forming a light-reflecting film onto the side of said counter resin film that is opposite said liquid crystal layer.

224. A liquid crystal display device comprising:
a substrate-side resin film made from a photosensitive prepolymer which has been photo-cured, said substrate-side resin film being formed on a surface of a substrate having one of a pixel signal electrode and a scan electrode thereon;
a counter resin film made from said photosensitive prepolymer which has been photo-cured, said counter resin film having an other one of the pixel signal electrode and the scan electrode thereon and being formed to face said substrate-side resin film; and
a liquid crystal layer sandwiched between said substrate-side resin film and said counter resin film, said liquid crystal layer containing a dichroic dye,
said substrate-side resin film, said counter resin film and said liquid crystal layer being formed integrally.
